# EUROPEAN PATENT APPLICATION

(11) **EP 3 200 145 A1**
(43) Date of publication of application: **02.08.2017**
(21) Application number: 15844278.0
(22) Date of filing: 23.09.2015
(51) Int. Cl.: G06Q 50/10

(54) **ELECTRONIC DEVICE AND INFORMATION PROCESSING METHOD OF ELECTRONIC DEVICE**

(30) Priority: 23.09.2014 CN 201410490778; 12.06.2015 CN 201510323119
(71) Applicant: Samsung Electronics Co., Ltd., Gyeonggi-do 16677 (KR)
(72) Inventor: LIU, Yang, Beijing 100000 (CN); LIU, Xianghua, Beijing 100000 (CN); WANG, Zongxue, Beijing 100000 (CN); TIAN, Junhu, Beijing 100000 (CN); TAO, Binjun, Beijing 100000 (CN)
(74) Representative: Gulde & Partner
(86) International application number: PCT/KR2015/010018
(87) International publication number: WO 2016/048034

(57) **Abstract**

Provided is an electronic device, and a displaying method and a displaying system that are applicable to the electronic device. According to an embodiment, the displaying method includes obtaining a display resource, and associating the display resource with a first application. The embodiment enriches a display effect of the electronic device and improves a user's experience.

## Description

### TECHNICAL FIELD

The present disclosure relates to electronic device technology, specifically to a displaying method performed by an electronic device, and more particularly, to a method of displaying an application, the method being performed by the electronic device.

### BACKGROUND ART

In an application being executed in an intelligent electronic device, a background view of the application is usually displayed as a static picture or is transparent. The background view does not support the displaying of complicated dynamic media information. A layout related to controlling the application, a display position of the layout, and content included therein are generally fixed. These are displayed in a fixed manner without being dynamically displayed, hidden, updated or changed with respect to their coordinates. In general, a user is able to configure a static picture as the background view of the application, or configure the background of the application to be transparent to display a dynamic view of the application at a lower layer. In addition, the layout of the controls and position coordinates of the application are generally static. It is impossible to interact with the user flexibly to implement a dynamic display, hiding of the content, or a coordinate change. In addition, view content and a control effect presented by the application of the electronic device are the same for all objects (targets) without any differentiation. For example, for a same scenario and a time, and with respect to all objects, the user sees a same effect. For example, on Mother's Day, regardless of the identity of a sender who sends a short message to the user, the electronic device displays a wallpaper related to Mother's Day on a background view of a short message application.

### DETAILED DESCRIPTION OF THE INVENTION

### TECHNICAL PROBLEM

Regarding the aforementioned example, it is more meaningful for the user to show the Mother's Day wallpaper on the background view of the short message application, only when the user sends a short message to his or her mother or to an older woman.

In addition, in a daily life, a user may desire to use a dynamic image or animation as a background view of an application, or may desire to interact with application-specific controls so as to flexibly update and replace a layout, to manage displaying and hiding of elements or to change a coordinates position of the control. When a target object of the application is different, the user may desire different content to be presented so as to satisfy a practical scenario requirement of the user.

### TECHNICAL SOLUTION

In order to realize one or more of the above objectives, embodiments of the present disclosure provide a displaying method and system applicable to an electronic device.

According to an aspect of an embodiment, a method, performed by an electronic device, of processing information, may include determining a target object of an application; determining service content, based on the target object and a user's current schedule; and controlling an operation of the application with respect to the target object, according to the service content.

The determining of the service content based on the target object and the user's current schedule may include selecting, based on a time of the electronic device, user's at least one current schedule from among user's one or more schedules stored in the electronic device; determining the user's at least one current schedule related to the target object from among the user's one or more schedules, according to information regarding relationships between the user's one or more schedules and the target object; and determining content to be the service content, the content being related to the user's at least one current schedule related to the target object.

The determining of the service content based on the target object and the user's current schedule may include selecting the user's current schedule related to the target object according to information regarding a relationship between the target object and the user of the electronic device, the user's current schedule being from among the user's schedules determined based on a plurality of items of interactive content between the user of the electronic device and a communication peer side user of the electronic device; and determining content to be the service content, the content being related to the at least one user's current schedule related to the target object.

The service content may be determined to be two or more different items of content with respect to a target object having different attributes, or may be determined to be two or more different items of content with respect to different user's schedules.

When a plurality of user's schedules are present with respect to the target object, at least one service content may be determined for each of the user's schedules, and the controlling of the operation of the application with respect to the target object, according to the service content, may include determining a user's-schedule context, based on a plurality of items of interactive content between a user of the electronic device and a communication peer side user of the electronic device; and controlling the operation of the application with respect to the target object, based on service content of a user's current schedule from among the user's schedules, the user's current schedule corresponding to the user's-schedule context.

When a plurality of applications operates with respect to the target object, operations of the plurality of applications may be controlled based on the service content.

The controlling of the operation of the application with respect to the target object, according to the service content, may include displaying service content associated with a first application, the service content being determined according to the user's current schedule and a target object of the first application; and when data regarding a second application is received, displaying a notification of the second application, and the displaying of the notification of the second application may include displaying service content determined according to the user's current schedule and a target object of the second application.

The target object may be a receiver of content generated by the application or may be an object of another application to which the content generated by the application is to be applied.

The controlling of the operation of the application may include detecting, by the electronic device, an event related to the target object according to the user's current schedule; determining whether or not an operation of the application with respect to the event has been performed; and when the operation of the application with respect to the event has not been performed, displaying information regarding existence of the event.

According to an aspect of another embodiment, a method, performed by an electronic device, of processing information, may include receiving a plurality of pieces of information from one or more applications; displaying the plurality of pieces of received information; selecting, based on a user input, at least two pieces of information from among the plurality of pieces of displayed information; and performing information processing on the two pieces of selected information by using at least one application corresponding to the two pieces of selected information, according to a single input by a user indicating the information processing with respect to the two pieces of selected information.

The performing of the information processing on the two pieces of selected information may include obtaining a plurality of pieces of sender information corresponding to the two pieces of selected information, respectively; generating response content by using a response interface; and transmitting the response content, based on the plurality of pieces of sender information, wherein the response interface includes a template button corresponding to preset content, and wherein template content corresponding to the template button is included in the response content, according to a user selection input with respect to the template button.

The template content may be arranged in the response content, based on position information, and may be generated based on the two pieces of selected information.

According to an aspect of another embodiment, an electronic device may include a memory configured to store data of applications; and a processor configured to determine a target object of an application, to determine service content, based on the target object and a user's current schedule, and to control an operation of the application with respect to the target object, according to the service content.

According to an aspect of another embodiment, an electronic device may include a memory configured to store data of applications; and a processor configured to receive a plurality of pieces of information from one or more applications, to display the plurality of pieces of received information according to at least one classification from among the applications, senders of the plurality of pieces of information, and performance statuses of the plurality of pieces of information, to select, based on a user input, at least one piece of information from among the plurality of pieces of displayed information, and to perform information processing on the at least one piece of information by using an application corresponding to the at least one piece of information, according to a single input by a user which indicates the information processing with respect to the at least one piece of information.

According to an aspect of another embodiment, a recording medium may have recorded thereon a computer-readable program for executing the method of processing information.

According to another aspect of the present disclosure, a method of processing information, the method being performed by an electronic device, includes obtaining content; and providing the content associated with an object of an application, based on association information. The association information may indicate an association between the content and the object of the application.

The association may be determined based on at least one of a time of the electronic device, a spot where the electronic device is located, a machine status of the electronic device, user data stored in the electronic device, a message received by the electronic device, a user input that is input to the electronic device, and an operation status of another application.

When the association is determined based on the time of the electronic device, the association is determined based on at least one of season determined based on the time of the electronic device, a festival, and a user-defined anniversary, when the association is determined based on the machine status of the electronic device, the association is determined based on at least one of a charging status of the electronic device and a connection state of the electronic device with respect to an external device, when the association is determined based on the user data stored in the electronic device, the association is determined based on at least one of attribute data and motion data of a user, and when the association is determined based on the user input that is input to the electronic device, the association is determined based on at least one of a user sliding gesture, a long-pressing operation, and user-motion data obtained by a sensor of the electronic device.

The content may be at least one of a message received from an external device and a control object of another application, the application may be at least one of a lock screen application, a background view application, and an unlock control application, and the providing of the content associated with the object of the application may include displaying, by the electronic device, the content together with the object provided by the application.

The application may be the lock screen application, the object may be an unlock control of the lock screen application, and the providing of the content associated with the object of the application may include displaying the content in the vicinity of the object when a user input with respect to the object is present.

The method may further include determining a target object of an application; determining a current festival related to the target object; and performing a service of the application, based on the target object and the current festival.

The target object may be a receiver of content generated by the application or may be an object of another application to which the content generated by the application is to be applied.

The current festival may include at least one of a current festival being related to the target object from among one or more festivals determined based on the time of the electronic device, wherein the current festival related to the target object is determined according to information regarding a relationship between the target object and the user of the electronic device, and a current festival being related to the target object from among one or more festivals determined based on interactive content between the user and a communication peer side user, wherein the current festival related to the target object is determined according to information regarding a relationship between the target object and the user of the electronic device.

The application may provide, to the target object, content determined based on an attribute of the target object and the current festival, and two or more different items of content may be provided to a target object having different attributes.

The application may provide, to the target object, content determined based on the current festival, and two or more different items of content may be provided to different festivals.

When a plurality of festivals are present with respect to the target object, a plurality of items of content respectively corresponding to the plurality of festivals may be provided for the target object.

The performing of the service of the application may include detecting, by the electronic device, an event related to the target object according to the current festival; and outputting information regarding existence of the event.

The outputting of the information regarding existence of the event may include determining whether or not a service of the application with respect to the event has been performed; and when the service of the application with respect to the event has not been performed, outputting the information regarding existence of the event.

According to another aspect of the present disclosure, an electronic device includes a memory configured to store content; and a processor configured to provide the content associated with an object of an application. The association information may indicate an association between the content and the object of the application.

According to another aspect of the present disclosure, an electronic device includes a memory configured to store data of an application; and a processor configured to determine a current festival related to the target object and to perform a service of the application, based on the target object and the current festival.

According to another aspect of the present disclosure, there is provided a recording medium having recorded thereon a computer-readable program for executing the method.

According to another aspect of the present disclosure, there is provided a displaying method applicable to an electronic device. The displaying method includes obtaining a display resource; and associating the display resource with a first application.

In an embodiment, the associating includes managing existence of an element of the first application, based on the display resource according to a pre-configured association manner.

In an embodiment, the association manner includes at least one of an association with a time of the electronic device; an association with a spot where the electronic device is located; an association with a status of the electronic device; an association with user data of the electronic device; an association with a message received by the electronic device; an association with a user operation behavior of the electronic device; and an association with a target object of an application of the electronic device.

In an embodiment, the time of the electronic device includes season, a public festival or a user-defined festival; the status of the electronic device includes a charging status, a connection status with an external device or an on/off status of pre-configured hardware; the user data of the electronic device includes attribute data and/or behavior data of the user; the user operation behavior of the electronic device includes a user sliding gesture, a long-pressing operation, or another user operation combined with a sensor of the electronic device; and the target object of the application includes at least one of a social relationship among people, a scenario, an attribute of people, and content of the application.

In an embodiment, the managing of the existence of the element of the first application based on the display resource according to the association manner with the target object of the application includes detecting a target object of a current application; determining a current festival related to an object; and managing the existence of the element of the first application according to the display resource associated with the object and the current festival, wherein the first application includes the current application.

In an embodiment, the detecting of the target object of the current application includes at least one of recognizing a social relationship between a target person of a module or interface of the current application and a user of the electronic device; recognizing a scenario of the module or interface of the current application; recognizing an attribute of the target person of the module or interface of the current application; and recognizing interactive content between the communication peer side user via the current application.

In an embodiment, the social relationship includes at least one of a relationship between a father and his son, a relationship between a mother and her son, a marriage relationship, a relationship between brothers and sisters, a friend relationship, a colleague relationship, a classmate relationship, and a teacher-student relationship.

In an embodiment, the attribute of people includes at least one of a gender, an age, a country, a nation, a job and a habit.

In an embodiment, the recognizing of the social relationship between the target person of the module or interface of the current application and the user of the electronic device includes at least one of recognizing the social relationship according to association information pre-configured by the user; and recognizing the social relationship according to a record of an application with a data recording function in the electronic device.

In an embodiment, the application with the data recording function includes at least one of a phonebook application, a memo application, a calendar application, a social application and a war game application.

In an embodiment, the determining of the current festival related to the object includes at least one of obtaining current festival information according to the time of the electronic device, and determining the current festival related to the person according to the social relationship between the recognized person and the user and a target person of the current festival; obtaining current festival information from interactive content between the communication peer side user, and determining the current festival related to an object according to the social relationship between the recognized person and the user and/or security authentication information; and determining the current festival related to the person according to a pre-configured policy, wherein the pre-configured policy includes any one of a system default festival displaying priority, a user-defined festival displaying priority, displaying in different time periods, displaying in different applications, displaying based on text content recognition, nested displaying, and displaying according to a user selection when being triggered.

In an embodiment, the managing of the existence of the element of the first application according to the display resource associated with the object and the current festival includes displaying festival reminding information in the first application according to interactive content and/or interactive time between the user and the communication peer side via the first application.

In an embodiment, the festival reminding information includes festival blessing text information, greeting card information and festival action reminding information related to the current festival obtained according to the attribute of the communication object.

In an embodiment, the first application includes at least one of a lock screen application, a main screen application, a notification bar application, a phonebook application, a music player application, an album application, a calendar application, a calling application, a short message application, an e-mail application and a social application.

In an embodiment, the associating includes associating the display resource with one or more elements of one or more first applications.

In an embodiment, the managing of the existence of the element of the first application includes managing at least one of a display manner and display content of the element of the first application.

In an embodiment, the managing of the existence of the element of the first application includes managing at least one of a static view and a dynamic view of the element of the first application.

In an embodiment, the element of the first application includes at least one of a layer of the application and a control of the application.

In an embodiment, the first application is a system appearance application, the element of the first application includes at least one of a background view, an animation effect, a control view, a control style and layout, a control animation and control content.

In an embodiment, the system appearance application includes a lock screen application, a subject application, a wallpaper application, a main screen application or a notification bar application, the element of the lock screen application includes at least one of a background view of a lock screen, an unlocking control, an unlocking animation, a charging control, a charging animation, a blessing wall control and an application-associated control, the element of the subject application includes at least one of a background view, a window style and a screen saver animation, the element of the wallpaper application includes at least one of a wallpaper and a quick panel of the wallpaper, the element of the main screen application includes at least one of a style and a content view of a widget in a main screen, and the element of the notification bar application includes at least one of a background view, a quick panel and an animation associated with a pre-configured position.

In an embodiment, the widget in the main screen includes at least one of a calendar widget, a greeting card sending widget, a history information aggregator, a festival encyclopedia widget, a scenario shortcut widget and an information sharing widget. In an embodiment, the first application is a text communication application, and the element of the first application includes at least one of a background view, an animation effect associated with text content, a font, a text effect, a candidate input text and an emotion.

In an embodiment, the text communication application includes an instant messaging application, an e-mail application or a social networking application.

In an embodiment, the first application is an external device application, and the element of the first application includes an event triggered by an operation of the external device.

In an embodiment, the external device application is an S-pen application.

In an embodiment, the display resource includes at least one of data from a second application of the electronic device, a download image resource and a configuration file associated with the image resource. In an embodiment, the configuration file is generated using an extensible markup language with pre-configured labels.

In an embodiment, the associating of the display resource with the first application includes establishing a single-level or multi-level association between the first application and one or more second applications, wherein the single-level association refers to establish an association with a single module or interface of the second application, and the multi-level association refers to establish an association with a plurality of modules or interfaces of the second application.

In an embodiment, the method further includes receiving information via one or more applications; and performing a centralized display on information received during a festival period of the electronic device on the system interface from among the information.

In an embodiment, the performing of the centralized display on the information received during the festival period of the electronic device on the system interface includes determining an application of which the information is to be collected, and collecting information from the determined application; and displaying the collected information on the system interface.

In an embodiment, the displaying of the collected information on the system interface includes displaying a statistical result of the collected information on the system interface; and in response to a quick browsing instruction by the user, displaying details of the collected information on the system interface, wherein the statistical result includes at least one of a plurality of pieces of the information, an information type, sender information of the information, and information of the application receiving the information.

In an embodiment, the method further includes, in response to a quick operation instruction by the user, performing at least one operation on the collected information, wherein the at least one operation includes any one of a response, transmission, deletion, collection, copying to a clipboard, and forwarding to a social application.

In an embodiment, the system interface includes any one of a lock screen interface, a main screen interface and a notification bar interface.

Optionally, the method further includes removing the association between the display resource and one or more elements of the one or more first applications.

According to another aspect of the present disclosure, there is provided an information processing method applicable to an electronic device. The information processing method includes receiving a plurality of pieces of information via one or more applications; and performing a centralized display on information related to a pre-configured subject on a system interface, the information being from among the plurality of pieces of information.

In an embodiment, the performing of the centralized display on the information related to the pre-configured subject on the system interface includes determining an application of which information is to be collected; collecting information from the determined application; and displaying the collected information on the system interface.

In an embodiment, the application of which the information is to be collected is determined via any one of a usage frequency that a user uses the application; an application selected by the user; a system default application; and all applications capable of receiving information.

In an embodiment, the collecting information from the determined application includes collecting all of the information or information of a designated information type, wherein the information type is determined according to at least one of content of the information, wherein the content includes at least one of festival blessing, a festival event, a festival bonus, a greeting card and a red envelope; a processing status of the information, wherein the processing status includes at least one of unread, read, replied, forwarded, and collected; a social relationship between two parties of the information, wherein the social relationship includes any one of family, a friend, and a colleague; and a collecting priority of the information.

In an embodiment, the displaying of the collected information on the system interface includes displaying a statistical result of the collected information on the system interface, wherein the statistical result includes at least one of a plurality of pieces of the information, an information type, sender information of the information, information of an application receiving the information, and in response to a quick browsing instruction by the user, displaying details of the collected information on the system interface.

In an embodiment, the method further includes, in response to a quick browsing end instruction by the user, hiding the collected information on the system interface.

In an embodiment, the quick browsing instruction and the quick browsing end instruction are respectively triggered to be generated via at least one of a voice, a button, a user's gesture, an enhanced reality man-machine interaction interface and an external controller.

In an embodiment, the displaying of the details of the collected information on the system interface includes displaying the details of the collected information on the system interface according to a pre-configured order, wherein the pre-configured order includes an order based on information receiving time, and an order based on a category of the information, wherein the category of the information is determined according to at least one of an application receiving the information, the sender of the information and the information type.

In an embodiment, the method further includes, in response to a quick operation instruction by the user, performing at least one operation on the collected information, wherein the operation includes any one of a response, transmission, deletion, collection, copying to a clipboard, and forwarding to a social application.

In an embodiment, the performing of the at least one operation on the collected information includes any one of performing the operation on an application corresponding to the information; and performing the operation on an operating interface provided by the system interface.

In an embodiment, the method further includes, in response to completion of the at least one operation with respect to the collected information, returning to and updating the system interface.

In an embodiment, the system interface includes any one of a lock screen interface, a main screen interface, and a notification bar interface.

In an embodiment, the pre-configured subject includes any one or any combination of a pre-configured festival, a pre-configured topic, a pre-configured purpose, and an unrestricted subject.

According to another aspect of the present disclosure, there is provided a displaying system applicable to an electronic device. The displaying system includes an apparatus capable of executing the method as described in the first or second aspect of the present disclosure.

According to another aspect of the present disclosure, there is provided a displaying system applicable to an electronic device. The displaying system includes a frame layer manager configured to manage an association between a display resource and an application; and a frame layer display configured to display the display resource in the associated application by the control of the frame layer manager.

In an embodiment, the displaying system further includes a resource package manager configured to manage the display resource in the form of a resource package; a data storage configured to record the resource package of the current application and inform the frame layer manager; and an analyzer configured to perform parsing on the resource package of the current application by the control of the frame layer manager.

In an embodiment, the frame layer manager include a configuring module configured to configure the display resource and the application to be associated with, and to trigger a display manner; a control managing module configured to monitor a trigger displaying event corresponding to a control of the application according to a configuration in the configuring module; and a view managing module configured to monitor a trigger displaying event corresponding to a view of the application according to the configuration in the configuring module, and the frame layer display includes a control display module configured to display a corresponding control if the control managing module detects the trigger displaying event; and a view displaying module configured to display corresponding view content if the view managing module detects the trigger displaying event.

According to another aspect of the present disclosure, there is provided an electronic device. The electronic device includes a screen and a displaying system as described in the previous embodiments of the present disclosure, wherein the screen displays by the control of the displaying system.

In the displaying method and displaying system applicable to the electronic device provided by the present disclosure, display resources are associated with the application which provides a brand new application visual experience to users. In some embodiments, the view and control of the application are associated with various factors such as a time, a spot, an event, and a message of the application, thereby presenting a dynamic effect for users and improving users' experience. The user may download the resource package so as to flexibly replace the view and the control layout of the application.

### ADVANTAGEOUS EFFECTS

Provided is an electronic device that controls, based on content, an operation of an application with respect to a target object.

### DESCRIPTION OF THE DRAWINGS

The features, objective and merits of the present disclosure will be apparent by referring to the description to the unrestrictive embodiments shown by the following drawings.
FIG. 1A is a flowchart illustrating a displaying method according to embodiments.
FIG. 1B is a conceptual diagram illustrating an example in which elements of an application are expressed on a display unit of an electronic device, and an association between the elements of the application and a display resource.
FIG. 1C is a conceptual diagram illustrating an association between a first application and a second application.
FIG. 1D is a conceptual diagram illustrating an association between a display resource according to association information and an application.
FIG. 1E is a conceptual diagram illustrating association information.
FIG. 1F is a conceptual diagram illustrating association information related to a time of an electronic device.
FIG. 2 illustrates an example of an animation associated with a predetermined position.
FIGS. 3A and 3B illustrate an example of the association with the time of the electronic device.
FIG. 4 illustrates an embodiment of an association based on a state of the electronic device.
FIG. 5 illustrates an association between a display resource and a lock screen application, according to an embodiment.
FIG. 6 illustrates the association between the display resource and the lock screen application, according to another embodiment.
FIGS. 7A through 7C illustrate a multi-level association, according to an embodiment.
FIGS. 8A and 8B illustrate the multi-level association, according to another embodiment.
FIG. 9 is a flowchart illustrating a method of managing the presence of elements of the first application, based on the display resource utilizing the association manner based on a target object of the application, according to an embodiment.
FIG. 10 illustrates different view contents displayed according to a social relationship between people, according to an embodiment.
FIG. 11 illustrates different view contents displayed according to a social relationship between people, according to another embodiment.
FIGS. 12A through 12D illustrate management of a festival effect resource, according to an embodiment.
FIG. 13 illustrates different view contents displayed according to different scenarios, according to an embodiment.
FIG. 14 illustrates different view contents displayed according to different scenarios, according to another embodiment.
FIGS. 15A and 15B illustrate different view contents displayed according to attributes of people, according to an embodiment.
FIGS. 16A and 16B illustrate different view contents displayed according to attributes of people, according to an embodiment.
FIG. 17 illustrates a series of changes in view content of an application triggered according to recognition with respect to people and content, according to an embodiment.
FIG. 18 illustrates text reminding and/or action reminding related to content triggered according to recognition with respect to the content, according to an embodiment.
FIG. 19 illustrates different festival effects displayed in different applications, according to an embodiment.
FIG. 20 illustrates different festival effects displayed in different temporal periods, according to an embodiment.
FIG. 21A illustrates a flowchart of a method of processing information, the method being applied to an electronic device, according to an embodiment.
FIG. 21B illustrates a type value allocated to each information according to types of information, according to an embodiment.
FIGS. 22A through 22C are schematic diagrams each showing a system interface of collected information, according to an embodiment.
FIGS. 23A through 23D each shows information that is collected after being classified in three manners, according to an embodiment.
FIGS. 24A and 24B are schematic diagrams showing system interfaces that each displays information, according to an embodiment.
FIGS. 25A through 25D are schematic diagrams each showing a quick operation with respect to collected information.
FIG. 26 shows a system structure for setting an association between a display resource and an application, according to an embodiment.
FIG. 27 is a schematic diagram illustrating management with respect to an association between a display resource and an application, according an embodiment.
FIG. 28 is a schematic diagram illustrating a structure of a display system, according to an embodiment.
FIG. 29 is a schematic diagram illustrating an electronic device that implements the embodiments, according to an embodiment.
FIG. 30 illustrates a configuration of the electronic device illustrated in FIG. 29, according to an embodiment.
FIG. 31 is a block diagram of an electronic device, according to an embodiment.
FIG. 32 is a detailed block diagram of an electronic device, according to an embodiment.

### BEST MODE

According to an aspect of an embodiment, a method, performed by an electronic device, of processing information, may include determining a target object of an application; determining service content, based on the target object and a user's current schedule; and controlling an operation of the application with respect to the target object, according to the service content.

The determining of the service content based on the target object and the user's current schedule may include selecting, based on a time of the electronic device, user's at least one current schedule from among user's one or more schedules stored in the electronic device; determining the user's at least one current schedule related to the target object from among the user's one or more schedules, according to information regarding relationships between the user's one or more schedules and the target object; and determining content to be the service content, the content being related to the user's at least one current schedule related to the target object.

### MODE OF THE INVENTION

Hereinafter, the present disclosure will be described in detail with reference to accompanying drawings and embodiments. It should be noted that the embodiments are merely used for explaining the present disclosure and are not used for limiting the present disclosure. In addition, for ease of description, the drawings merely illustrate the parts related to the present disclosure.

It should be noted that embodiments and features in the embodiments may be combined if they do not conflict. Hereinafter, the present disclosure will now be described in detail with reference to accompanying drawings and embodiments.

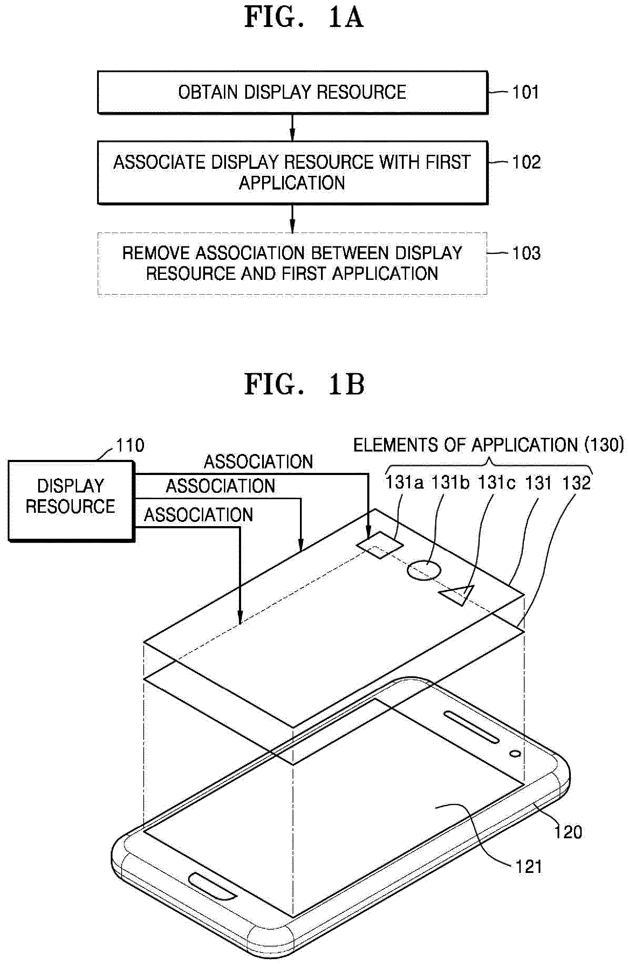

FIG. 1A illustrates a flowchart 100 of a displaying method performed by an electronic device, according to an embodiment. In the present embodiment, for facilitating the understanding, it is assumed that the electronic device has a screen or a display screen. It will be understood by one of ordinary skill in the art that the electronic device may include, but is not limited to, a smart phone, an intelligent television, a tablet computer, a personal digital assistant, a mobile terminal device such as an electronic reader, etc. The electronic device may support an audio or tactile output. Operations performed by the electronic device that provides contents such as a display resource, an audio resource, and tactile resources will be described with reference to the display resource. Hereinafter, descriptions regarding the display resource may be applied to contents.

As illustrated in FIG. 1A, the display resource is obtained at block 101.

In the present embodiment, the display resource may include various resources to be displayed by an application, including but is not limited to a static view, a dynamic view, a contents view, a style and layout, etc. The display resource may be various multimedia resources such as an animation, a video, etc. The display resource corresponds to a type of contents.

The display resource may be provided in various manners. In an embodiment, the display resource may be data of the application of the electronic device, e.g., the data received by various applications of the electronic device, such as a short message application, a WeChat application, a social networking application, an e-mail application, etc. The data may include various kinds of text information, animation information and multimedia information. In some embodiments, the data may be various interface information of the application, e.g., moments interface information, shopping interface information, game interface information, my collection interface information of the WeChat application, etc. In another embodiment, the display resource may be obtained from a network by the application through a network interface, e.g., may be obtained by various client applications in the electronic device by directly visiting a corresponding server. The clients may include a shopping website client, a restaurant client, a game client, etc. In another embodiment, the display resource may be provided in the form of a resource package and may be downloaded from the network.

The resource package may be an application installation package and may be developed by a user by using a corresponding resource package developing tool. The developed resource package may be distributed to various application stores to be downloaded and used by other users. In general, besides a code file, the resource package further includes an image resource and a configuration file associated with the image resource. The resource package will be described below with further detail.

At block 102, the display resource is associated with a first application of the electronic device.

FIG. 1B is a conceptual diagram illustrating an example in which elements 130 of an application are expressed on a display unit 121 of an electronic device 120, and an association between the elements 130 of the application and a display resource 110. As in FIG. 1B, layers 131 and 132 may be stackably expressed in the display unit 121 of the electronic device 120. A portion of a top layer 131 may be transparent so that a background layer 132 located at a bottom surface of the top layer 131 may be expressed through the top layer 131.

Each layer may include a control. For example, the top layer 131 may include three controls 131 a, 131 b, and 131 c. Each layer and controls may each be associated with the display resource 110.

An association between a display resource and elements of an application may be managed with association information. Each element refers to an object of the application. In some embodiments, the association may include managing showing and/or hiding elements of a first application based on the obtained display resource according to a pre-configured association manner. In another embodiment, the managing may include managing at least one of a display manner and display content of the first application, according to a different classification manner. The display manner may be an appearance of the elements (such as a view, a control, etc.) of the application, e.g., a layout of the control, an appearance of the control, etc. The display content may be implemented content related to the elements (such as the view, the control, etc) of the application, e.g., visible content displayed due to the control. In other embodiments, the managing may include managing at least one of a static view and a dynamic view of the elements of the first application. As names imply, the static view refers to a view that is not changed according to time. The dynamic view refers to a view that is changed according to time.

The application generally includes a layer (or referred to as a view) and a control which form a window view. Therefore, the elements of the application may include at least one of the layer/view and the control of the application.

For example, the layer may include the background layer 132 or a rear layer 132. The background layer is at the bottom in a layer set of the application and is used in decorating and displaying additional information regarding the application. According to the pre-configured association manner, the background layer may be flexibly associated with various types of display resources, e.g., animation resources of different styles, thereby being dynamically displayed and/or hidden and providing better interaction with the user. The layer may also include the top layer 131. The top layer 131 is at the top of the layer set of the application. Similarly, according to the pre-configured association manner, the top layer may also be associated with various types of display resources, e.g., an animation view played only once, thereby improving user experience.

The control 131 a, 131b, or 131c is an object on a screen of a graphical user interface (GUI). The user may operate the object to execute an operation. That is, the control is an object with which the user can interact so as to input or operate data. The application may include various types of the control. Some simple controls may include a check box, a combo box, an editing box, a list box, an option button, a general button, a scrollbar control and a static control. Some complicated controls may include a user interactive game, a news window, a message aggregator, a multimedia player, an application quick start, etc. The display manner with respect to the controls and the content view may be associated with different display resources according to the embodiments.

Different applications may have different controls. For example, a lock screen application may have an unlocking control and a charging control, wherein the unlocking control is used in receiving an unlocking operation by a user, and the charging control is used in displaying a charging progress to the user. Optionally, the lock screen application may further include some self-defined controls such as a blessing wall control used in displaying, on a lock screen, some predefined information, e.g., messages related to festivals such as various public festivals or user-defined festivals (such as various special dates, a user's birthday, various anniversaries) received by the electronic device. When the lock screen application is associated with information from various second applications, the lock screen application may further include one or more second application associated controls or may be referred to as application-associated controls.

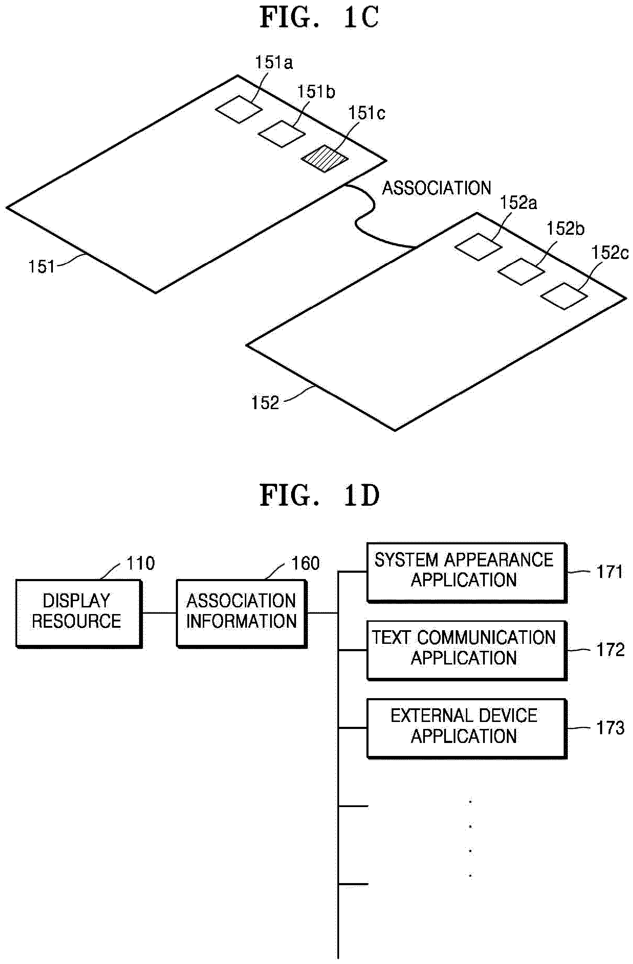

Further description will now be provided with reference to FIG. 1C. FIG. 1C illustrates an association between a first application and a second application. A layer 151 of the first application includes a first control 151 a, a second control 151b, and a third control 151c of the first application. A layer 152 of the second application includes a first control 152a, a second control 152b, and a third control 152c of the second application.

The third control 151c may be associated with the second application. For example, the third control 151 c may be a control to control execution of the second application. For example, one of the first control 152a, the second control 152b, and the third control 152c of the second application which are included in the layer 152 of the second application may be included as the third control 151c of the first application. For example, when the lock screen application is associated with a WeChat application, a news application, and a video application, it may include a WeChat-associated control, a news-associated control, a video-associated control, etc.

In some embodiments, the association may include associating the display resource with one or more elements of one or more first applications. For example, a display resource related to a particular festival may be associated with at least one of the lock screen application, a main screen application and a notification bar application. Further, for each associated application, the display resource may be associated with one or more elements of the application. For example, for the lock screen application, the display resource may be associated with at least one of a background view, an unlocking animation, an unlocking control, a charging control and a charging animation. The user may select objects to be associated when establishing the association.

Further description will now be provided with reference to FIG. 1D. The display resource 110 may be associated with at least one application 171, 172 or 173 according to association information 160. In some embodiments, the first application associated with the display resource 110 may be a system appearance application 171. Elements of this type of application may include at least one of a background view, an animation effect, a control view, a control style and layout, a control animation and control content.

In some embodiments, the system appearance application 171 may include, but is not limited to, the lock screen application, a subject application, a wallpaper application, a main screen application or a notification bar application.

In particular, the elements of the lock screen application may include a background view when the screen is locked, an unlocking control, an unlocking animation, a charging control, a charging animation and a blessing wall control.

Elements of the subject application may include a background view, a window style and a screen saver animation.

Elements of the wallpaper application may include a wallpaper and a quick panel of the wallpaper.

Elements of the main screen may include a style and a content view of a widget of the main screen. The widget of the main screen may include at least one of a calendar widget, a greeting card sending widget, a history information aggregator, a festival encyclopedia widget, a scenario shortcut widget and an information sharing widget. The history information aggregator may provide information of today in history. The scenario shortcut widget may include a quick entrance related to various scenarios, e.g., a restaurant entrance, a theater entrance, a shopping mall entrance, a travel entrance, etc. The information sharing widget may collect data of some applications of the electronic device, e.g., information received by the WeChat application, messages of the short message application, and so on.

Elements of the notification bar application may include a background view, a shortcut panel and an animation associated with a predetermined position.

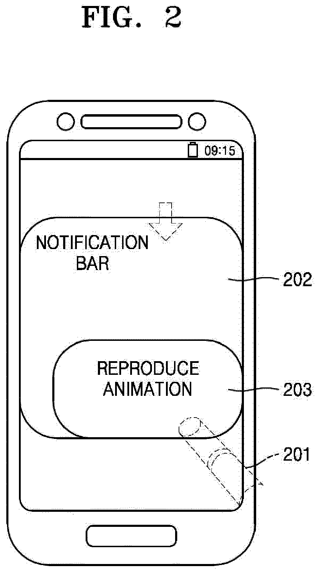

FIG. 2 illustrates an example of an animation associated with a predetermined position. It is determined whether displaying and hiding of the animation view is triggered according to an up-down sliding action by the user regarding the application and a slide distance. As illustrated in FIG. 2, when a finger 201 of a user moves a notification bar 202 so as to move the notification bar 202 down to a designated position, a background view of the notification bar displays an animation 203. When the user moves the notification bar upwards from the bottom of a screen, the background view of the notification bar hides the animation 203.

In another embodiment, the first application associated with the display resource may be a text communication application 172. Elements of such application may include at least one of a background view, an animation effect associated with text content, a font, a text effect, a candidate text input and an emotion.

In some embodiments, the text communication application includes, but is not limited to, various instant messaging applications, e-mail applications or social networking applications.

In another embodiment, the first application associated with the display resource may be an external device application 173. An element of such application may include an event triggered by an operation of an external device.

In some embodiments, the external device application includes, but is not limited, to an S-pen application. Elements of the S-pen application include events triggered by various operations of an S-pen. The operations of the S-pen may include, but are not limited to, pressing a button on the S-pen, clicking the screen for a while, drawing a particular graphic on the screen, etc. These operations may trigger different events associated with elements of various applications, thereby associating the display resource with the elements of the applications. For example, when the user inputs different characters in a short message application by using the S-pen, an association is established between a display resource related to the character content and the short message application. For example, when the user inputs Happy New Year as greetings for the New Year by using the S-pen, a prompt may be displayed adjacent to a text and the user is asked whether a happy New Year animation is to be bound and transmitted to the peer side. If yes, when the peer side receives the short message and clicks a view, the peer side watches the New Year animation as well as the bound text.

The association information 160 will now be described in detail. As mentioned above, the association may include managing the appearance of the elements of the first application, based on the obtained display resource according to the pre-configured association manner. Therefore, the association manner may also be referred to as trigger display manner.

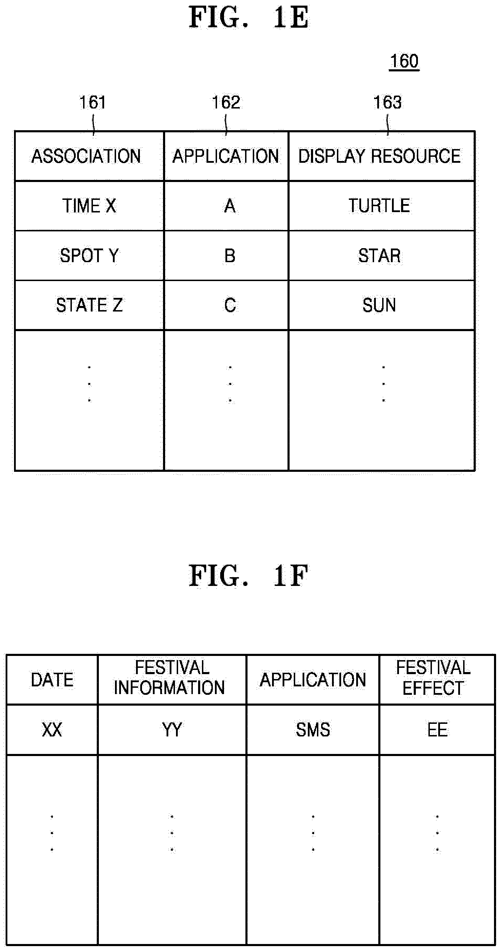

Further description will now be provided with reference to FIG. 1E. The association information 160 may be managed with a table indicating the association manner. The association information includes information regarding an association 161 indicating a condition to trigger the association, information regarding an application 162 to which a display resource according to the association is to be provided, and information regarding a display resource 163 to be provided to an application.

Referring to FIG. 1E, a display resource R1 (turtle) may be provided to an application A according to an association manner of time X, a display resource R2 (star) may be provided to an application B according to an association manner of spot Y, and a display resource R3 (sun) may be provided to an application C according to an association manner of time X.

The association manner may have different types. In some embodiments, the association manner includes at least one of an association with a time of the electronic device, an association with a spot of the electronic device, an association with a state of the electronic device, an association with user data of the electronic device, an association with a message received by the electronic device, an association with user's manipulation with respect to the electronic device, and an association with a target object of the application of the electronic device. It should be noted that the association manners may be randomly combined. One application or elements of one application may use various association manners.

An association manner according to an embodiment may include an association with a time of the electronic device. For example, the association manner may be associated with schedules of the user through the association with the time of the electronic device. The schedules of the user may include a public festival and a user-defined festival.

Hereinafter, further description will now be provided based on a festival that is an example of the user-defined festival.

The user-defined festival may be various special dates such as a user's birthday and various anniversaries. The user may define a special festival and may designate an application in which the special festival is to be displayed. For example, the user may add a wedding anniversary or a birthday to a festival database, and may select a favorite animation effect to be displayed in an application frequently used by the user. For example, association information associated with the time of the electronic device may be configured as illustrated in FIG. 1F. When a date of the electronic device is XX, the electronic device may determine, in consideration of FIG .1F, that a current festival corresponds to YY and thus it is necessary to provide an EE festival effect to an SMS application.

It is also possible to configure the number of times and time period that an animation is displayed on a day of a festival. When the time of the self-defined festival conflicts with a default festival in the database, the self-defined festival may be preferably displayed or the user may be prompted to configure priorities for the festivals. Through the association manner based on a time, the appearance of the elements of the application may be flexibly changed to realize interaction with the user. For example, when a relevant day (such as a public festival, the user's birthday, the wedding anniversary, etc.) arrives, a display resource associated with the date may be associated with the application of the electronic device. As such, it is possible to remind the user that the relevant day arrives and to realize interaction with the user by providing a display resource related to the date, e.g., sending a festival greeting card, browsing a recommended restaurant, a gift, etc. It should be noted that, time (e.g., a festival date) associated with each application may be different, and a display effect (e.g., an animation effect) may also vary.

In an embodiment, the association manner based on time associates a display resource with the element of the main screen application. In the embodiment, the time may be a special festival, an anniversary, etc. The element of the main screen application may include a background view of a main screen, a widget of the main screen including a style and a content view of the widget. As mentioned above, the widget of the main screen may include at least one of a calendar widget, a greeting card sending widget, a history information aggregator, a festival encyclopedia widget, a scenario shortcut widget and an information sharing widget. In response to different festivals, different elements of the main screen application may be updated. For example, when the user clicks the greeting card sending widget, a greeting card selection list for a current festival may be open and the user may perform an operation of editing and sending a greeting card by using it. As another example, when clicking the scenario shortcut widget such as a restaurant, a shopping, or a movie, recommendation information related to the current festival may be displayed for the browsing and selection by the user.

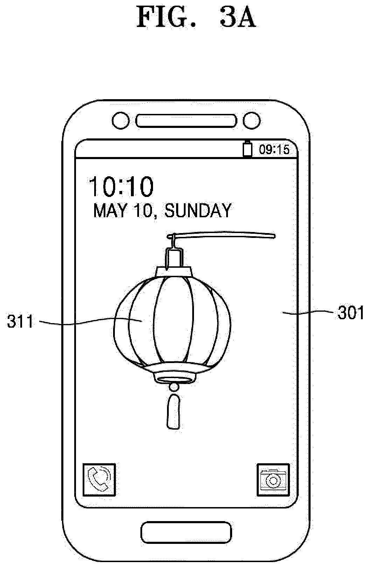

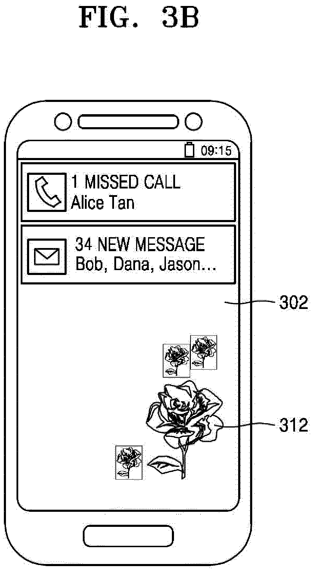

FIGS. 3A and 3B illustrate an example of the association with the time of the electronic device. In the present embodiment, an associated application in FIG. 3A is the lock screen application. The associated application in FIG. 3B is the notification bar application. As illustrated in FIG. 3A, based on the pre-configured association manner based on a time, when a predefined condition is satisfied, e.g., when today is the Lantern Festival, a background view of the lock screen application displays a view related to the Lantern Festival. As illustrated in FIG. 3A, a background layer 301 of the lock screen application displays an animation view 311 of the Lantern Festival. As illustrated in FIG. 3B, based on the pre-configured association manner based on a time, when the predefined condition is satisfied, e.g., when today is also the Valentine's Day, a background view of the notification bar application displays a view related to the Valentine's Day. A background view 302 of the notification bar application in FIG. 3B displays an animation view 312 of the Valentine's Day.

Another association manner according to an embodiment may include an association with a spot where the electronic device is located. The spot where the electronic device is located may have different scales. According to spots of the different scales, the association may be established with respect to different display resources. Different regions have different festivals and customs. For example, when the user of the electronic device travels to another country, the background view of the lock screen application may be replaced with a view related to the country. The display style and/or content view of the widget on the main screen application may also be replaced with content related to the country. The widget may include a restaurant, shopping spots, etc. The spot of the electronic device may be determined by the electronic device by itself. For example, a position of the electronic device may be determined by using a positioning apparatus of the electronic device. Alternatively, a current position of the electronic device may be determined by photographing or scanning an external system, e.g., a landmark object (such as a landmark building, a two-dimensional code of a particular location, etc.), or may be determined through a mobile network, etc. A method of determining the position of the electronic device is not limited to those described in the specification.

Another association manner according to an embodiment is an association with a state of the electronic device. The state of the electronic device may represent various attributes of the electronic device. In an embodiment, the state of the electronic device may include a charging state. Optionally or additionally, in another embodiment, the state of the electronic device may include a connection state with an external device, e.g., connected or not connected. The external device may be an external input device such as a stylus pen, an S-pen, etc. Optionally or additionally, in another embodiment, the state of the electronic device may include an on/off state of particular hardware. For example, the particular hardware may be an internal special data communication chip supported by the electronic device. When the electronic device is close to an external trigger source of the chip, the communication chip is triggered and started. Therefore, the display resource may be associated with the first application, based on the on/off state of the communication chip.

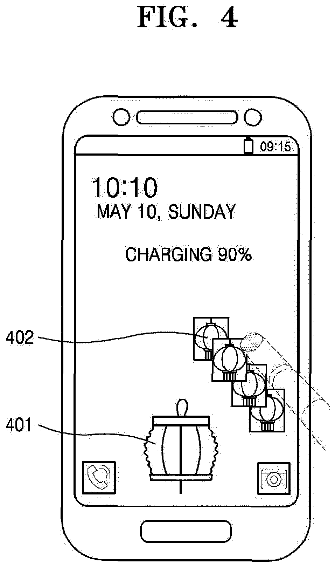

FIG. 4 illustrates an embodiment of the association based on the state of the electronic device. In the embodiment, an associated application is the lock screen application. The state of the electronic device includes the charging state. In the present embodiment, it should be noted that the lock screen application is associated with not only the state of the electronic device but also is associated with the time of the electronic device. As illustrated in FIG. 4, when today is the Lantern Festival, a background view of the lock screen application is replaced with a view related to the Lantern Festival based on the pre-configured association manner. A background layer of the lock screen application in FIG. 4 displays an animation view related to the Lantern Festival. In addition, a display style and relevant unlocking animation of an unlocking control 402 of the lock screen application are also adjusted according to the current festival, e.g., the unlocking animation may be an animation view related to the Lantern Festival. Further, when a charging event is detected, i.e., when the electronic device is in the charging state, the lock screen application displays a charging control 401 and a display style of the charging control 401 is a lantern instead of a normal horizontal progress bar. As illustrated in FIG. 4, a color of each grid of the lantern denoting the charging control 401 changes according to the charging progress.

Another association manner may include an association with the user data of the electronic device. The user data of the electronic device may include attribute data of the user and/or behavior data of the user. The attribute data of the user may include, but is not limited to, an age, a gender, a job, and a usage habit of the user. The behavior data of the user may include, but is not limited to, a current usage behavior of the user. The user data may be locally stored in the electronic device or in a remote storage such as a cloud data server.

In an embodiment, the association manner based on the user data includes associating the display resource with the widget in the main screen application. For example, scenario shortcut widgets such as a restaurant, a shopping, a movie or the like in the main screen may display and recommend different browsing contents based on different user attributes, e.g., an age, a behavior, a job, etc. For example, the shopping spot and clothing recommendation for men are different from those for women. Recommendation contents about a movie, a travel and a restaurant for young people are also different from those for older people.

Another association manner according to an embodiment may include an association with a message received by the electronic device. In this association manner, based on the message received by the electronic device, the message with different meanings may trigger an association of the application with different display resources. Alternatively, in response to the receiving event related to the message, the association between the application and the different display resources is triggered.

The short message application is described as an example. In an embodiment, in a short message chatting interface, a text input by the user or a text sent by the peer side is analyzed. If the text includes a predefined meaning, e.g., if the text includes information regarding a festival wish, a short message background view displays an animation view related to the festival wish. For example, when the user inputs Happy New Year as greetings for the New Year, the short message background view may display an animation of swinging firecrackers. In another embodiment, an animation such as fireworks which is reproduced once may be displayed at a top layer of a chatting interface of the short message application.

Another association manner according to an embodiment may include an association with an operation action by the user of the electronic device. The operation action by the user of the electronic device refers to various actions that the user operates the electronic device, including but are not limited to a user's sliding gesture, a long-pressing action with respect to the screen or other user operations combined with a sensor of the electronic device.

The sliding gesture is a sliding path of the user's finger on the screen. Different sliding paths may associate different display resources with the first application. For example, when the lock screen application is associated with a plurality of second applications, a control associated with the plurality of second applications may be displayed on the lock screen view of the lock screen application. In this regard, the user may trigger a display of different associated second application controls. For example, a "V" shape gesture corresponds to a control with respect to the WeChat application, an "S" shape gesture corresponds to a control with respect to a today's headlines application, and an "L" shape gesture corresponds to a control with respect to a LeTV application control.

A user operation associated with the sensor of the electronic device refers to an operation action by the user to the electronic device, the user operation being detected by using the sensor (e.g., a gyroscope) and including a shaking operation by the user to the electronic device. Thus, the association between the display resource and the first application may be rapidly triggered by using a characteristic of the sensor. For example, in the example that the lock screen application is associated with the plurality of second applications, under the state that the screen is locked, the user may shake the electronic device so as to trigger a display of an associated music player application control. Such association manner allows the user to easily and rapidly use a function when the user desires to listen to music.

Another association manner according to an embodiment may include an association with a target object of the application of the electronic device. In the aforementioned association manners, the view content and the effect of the control presented by the application of the mobile terminal device according to the association condition are the same for all objects without differentiation. With respect to all objects in the same scenario and a time, the user sees the same effect. Therefore, the present disclosure provides an association manner based on the target object of the application of the electronic device.

In this manner, the mobile terminal device intelligently associates and triggers corresponding view content according to the target object of the current application. A target object of an application may include any one of a social relationship of people, an attribute of people, scenario and content, etc.

This type of application includes at least one of an application that does not differentiate between objects, the application including a screen application, a main screen application, a notification bar application, a music player application, a browser application, etc., and an application that differentiates between objects, the application including a phonebook application, an album application, a calendar application, a calling application, a short message application, an e-mail application and other social applications which are in the mobile terminal device and interact with the user. A change in application view content may include a change in a background view and/or a control view of each sub-interface of the application.

In some embodiments, an association manner based on the target object of the application may be combined with the aforementioned association manner based on time (such as a festival) of the electronic device, thereby intelligently triggering the display resource related to the festival and being referred to as a festival effect resource package. The festival effect resource package may include a series of animations or static wallpapers related to the festival. In some embodiments, on a day of the festival, the designated application may replace an original background view with the festival animation or the static wallpaper. After the day of the festival, the application restores the original view interface.

In the embodiment of the association based on the target object of the electronic device, the application may load different festival effect resource packages with respect to different objects, thereby presenting corresponding content views. In this regard, the different objects may refer to attributes of people, the attributes including a gender, a country, an age, a habit, a job, a nation, a culture degree, etc., or may refer to a social relationship including a relationship between a father and his son, a relationship between a mother and her son, a marriage relationship, a friend relationship, a colleague relationship, a classmate relationship, a subordinate relationship, a teacher-student relationship and a family relationship, etc.

The target object of the application is an object included in the application currently triggered by the user. For example, the target object may be a receiver of content generated by a current application or may be an object of an application to which the content generated by the current application is to be applied. Alternatively, the target object of the application may include at least one of a social relationship between people, an attribute of people, a scenario, content, etc. Examples of the target object are not limited thereto.

For example, an example in which the target object of the application is determined according to the social relationship between people will now be described. When the current festival is a wedding anniversary, the target object is determined to be a spouse of the user. In the example, when the application currently triggered by the user is the short message application, and a receiver of the short message is the spouse of the user which matches with the target object of the wedding anniversary, a festival effect of the wedding anniversary may be presented in the short message interface for sending a short message to the spouse, e.g., the short message background may be set to be a background picture of the wedding anniversary. Another example in which the receiver of content generated by the current application is determined to be the target object will now be described. When the application currently triggered by the user is a communication application, the communication peer side is regarded as the target object of the currently triggered application. The communication application includes text communication (such as a short message, WeChat, an e-mail, etc.) and the calling application (such as a voice call, a video call, etc.). The communication peer side may be a text receiver or a called party, or a text sender or a caller.

When the target object of the current festival includes at least one target object of the application, the target object of the application is related to the festival. In some embodiments, the target object of the current festival may be determined via any one of the following methods including determining the target object of the festival effect configured by the user with respect to the current festival to be the target object of the current festival or determining the target object of the current festival according to information such as name and relationship remarks of each contact in the phonebook.

When configuring the festival effect, the user may select an object corresponding to the festival effect. For example, after the user selects the festival effect to be displayed on the wedding anniversary, the phonebook may be provided to the user, and the user may select the target object of the festival effect of the wedding anniversary from the phonebook. Alternatively, the target object of the current festival may be automatically determined according to the names of the contacts. For example, when the current festival is Mother's Day, contacts of which stored names are a mom, a mother, and a mother-in-law in the contacts may be determined to be the target object of Mother's Day. Hereinafter, an association manner based on the target object of the application of the electronic device will now be described in detail with reference to accompanying drawings.

The association manners may be randomly combined. The same application or elements of the application may have different association manners.

As described above, the display resource may come from various sources. In some embodiments, the display resource may be from data of an application of the electronic device. The data may include various information received by the application, e.g., various types of text information, animation information and multimedia information. The data may also be various interface information of the application, e.g., moments interface information of the WeChat application, shopping interface information, game interface information, my collection interface information, etc. In following examples, when implementation of an association between a display resource and a first application is described, it is assumed that the display resource includes data of a second application and the first application is the lock screen application. The second application may include, but is not limited to, the WeChat application, a QQ application, a video application, a news application, the music player application, etc.

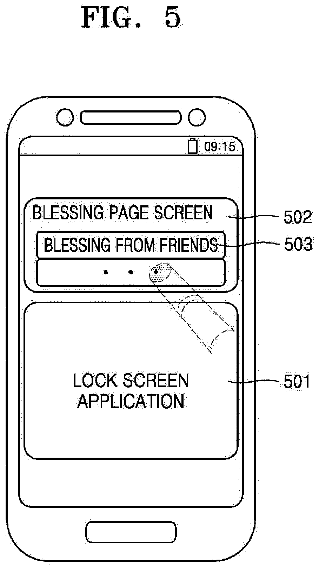

FIG. 5 illustrates the association between the display resource and the lock screen application, according to an embodiment. In the present embodiment, the display resource may be various messages received by the electronic device. The received messages may be from various applications including, but is not limited to, the short message application, the WeChat application, the e-mail application, etc. The display resource is associated with a blessing wall control 502 in a lock screen application 501. Multiple association manners may be simultaneously applied to an association with the time of the electronic device and an association with a message received by the electronic device. For example, when a system time of the electronic device indicates that a birthday of the user arrives, the lock screen application 501 automatically loads the blessing wall control 502. In response to messages received by various applications, information such as blessing information 503 received by these applications is displayed on the blessing wall.

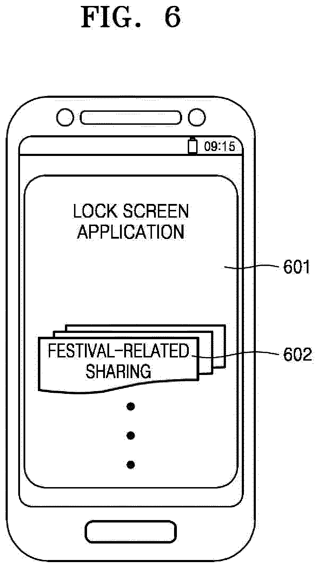

FIG. 6 illustrates the association between the display resource and the lock screen application, according to another embodiment. In the present embodiment, the display resource is still various messages received by the electronic device. Herein, the received messages may be from various applications including, but are not limited to, the short message application, the WeChat application, the e-mail application, etc. The display resource is associated with a background view of a lock screen application 601. Multiple association manners may be simultaneously applied to an association with a time of the electronic device and an association with the messages received by the electronic device. For example, when a system time of the electronic device is the date of a predefined festival, the background view of the lock screen application 601 automatically loads application data, i.e., festival-related sharing in the moments of the WeChat, and displays the sharing on the background view of the lock screen application in the form of a small window control 602 in a designated layout.

In some embodiments, when the display resource is data from the second application, a single-level association or even a multi-level association may be established between the first application and one or more second applications. The single-layer association refers to an association established between the first application and a single module or interface of the second application. The multi-level association refers to an association established between the first application and a plurality of modules or interfaces of the second application.

Through the multi-level association of the application, not only a simple association may be established between a background view and control of the first application and the second application, a single or combined association may be established between the first application and a certain interface of the second application. Hereinafter, the association between the lock screen application and one or more second applications will now be described as an example for describing various embodiments.

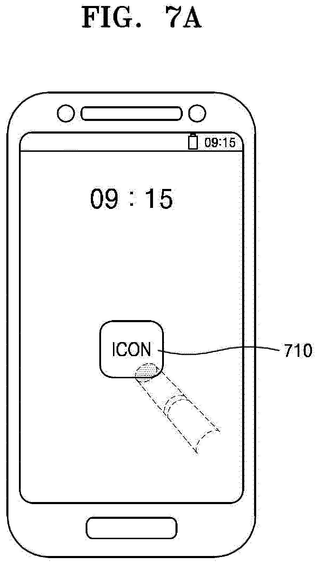

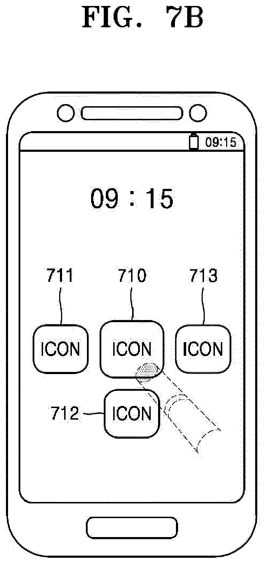

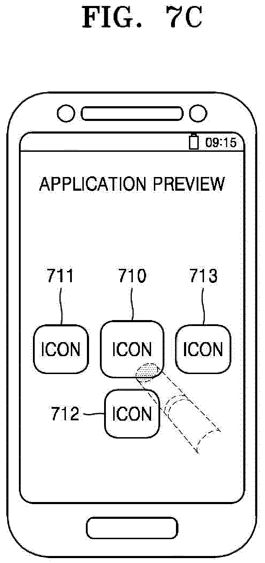

FIGS. 7A through 7C illustrate an example of the multi-level association. In the present embodiment, a user establishes the multi-level association between background views when a screen is locked of the lock screen application (i.e., the first application) and the WeChat application (i.e. the second application). FIG. 7A is a schematic diagram showing the screen when the screen is locked, wherein a WeChat-associated control 710 is displayed. FIG. 7B is a schematic diagram showing a screen when a user's finger hovers over the WeChat-associated control 710 or touches the WeChat-associated control 710, wherein three small windows 711 through 713 are popped out around the control 710, and each of the windows 711 through 713 is associated with an independent interface of WeChat. For example, the small window 711 is associated with the game interface of WeChat, the small window 712 is associated with the shopping interface of WeChat, and the small window 713 is associated with the moments interface of WeChat. When the user clicks one of the small windows, a background view of the screen may display an interface associated with the small window. FIG. 7C is a schematic diagram showing a screen which displays a background view of the electronic device when the user clicks the small window 713. The background view displays the associated moments interface of WeChat.

In some embodiments, when a sub-interface of the associated application has a new message, a corresponding small window may automatically pop out on the WeChat-associated control 710 so as to allow the user to check the message rapidly. That is, in the embodiments, the small window in the WeChat-associated control 710 is displayed based on an association with an event of receiving a message by a corresponding interface.

The user may configure an attribute of the associated second application displayed on a background or rear view of the first application, according to a usage habit of the user. The attribute may include the trigger display manner (i.e., the aforementioned association manner) such as when a control is displayed, which associated second application control is displayed at a particular time, and a position of the displayed control in the first application, etc.

As described above, the trigger display manner or the association manner may include an association with a time of the electronic device, an association with a spot where the electronic device is located, an association with a state of the electronic device, an association with user data of the electronic device, an association with a message received by the electronic device, an association with user operation behavior of the electronic device, and an association with a target object of the application. The above association manners may be randomly combined.

In an embodiment, with respect to the association with the time of the electronic device, the lock screen application may trigger an addition and a display of different applications according to a current time of the electronic device. For example, during work time (e.g., from 9:00 a.m. to 6:00 p.m.), controls of the news application and an education application may be automatically added to the locked interface. During rest time (e.g., from 6:00 p.m. to 10:00 p.m.), controls of the WeChat application and the game application may be automatically added to the locked interface.

In an embodiment, with respect to the association with the spot where the electronic device is located, the lock screen application may trigger an addition and a display of different application controls according to a current geographical location of the user. For example, when the user is at home, a control of an online movie application may be automatically added to the locked interface. When the user is in the outside, a control of the WeChat application may be automatically added to the locked interface.

In an embodiment, with respect to the association with the state of the electronic device, the state of the electronic device may include an on/off state of particular hardware or may be referred to as a hardware detection event. For example, the particular hardware may be an internal data communication chip supported by the electronic device. When it is detected that the electronic device is close to an external trigger source of the chip, the communication chip is triggered and started. Therefore, in the embodiment of the association between the lock screen application and the second application, the second application may be associated with the lock screen application based on a starting state of the communication chip, i.e., in response to the hardware detection event. For example, when a near field communication (NFC) payment application is associated with the lock screen application, a control corresponding to the payment application may be displayed on the locked view of the lock screen application. In the present example, when the electronic device detects that the NFC communication chip starts, i.e., when the electronic device detects being close to an external trigger source of the NFC chip, a control window corresponding to the payment program may be automatically displayed on the locked view of the electronic device so as to promote the user to perform a payment operation.

In an embodiment, with respect to the association with the message received by the electronic device, a start and a display of the second application-associated control on the first application may be triggered by a message of the second application which is associated with the first application, i.e., may be referred to as a message event trigger. In the embodiment of the association between the lock screen application and the second application, the lock screen application is associated with the WeChat application. When the WeChat application has a new message, the WeChat associated control may be automatically triggered to be started and added to the locked interface.

In an embodiment, with respect to the association with the user operation behavior of the electronic device, there may be various implementations with respect to different user operation behaviors. The user operation behavior of the electronic device may include a sliding gesture of the user, a long-pressing operation to the screen, or a user operation related to the sensor of the electronic device.

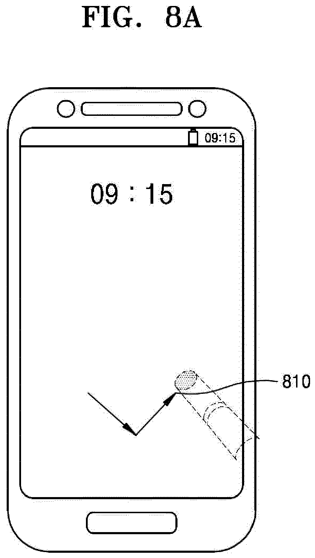

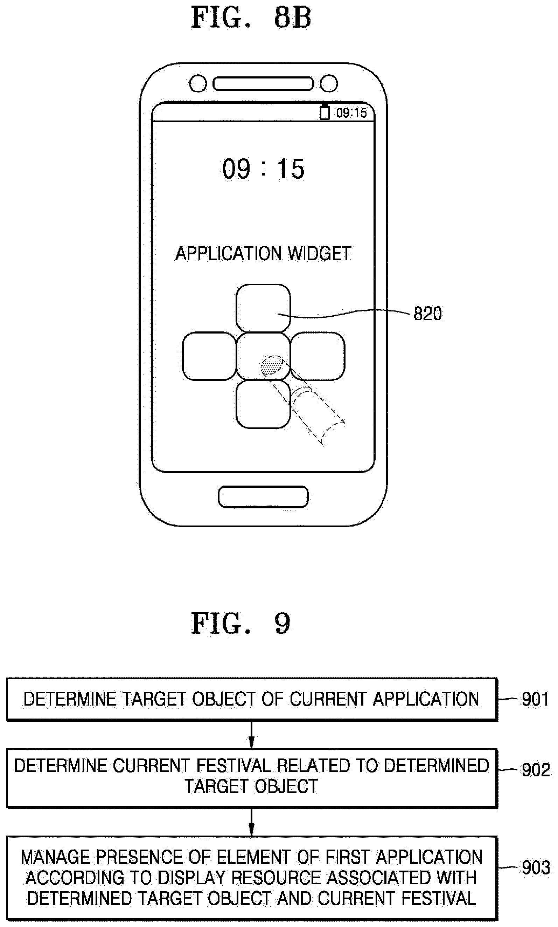

FIGS. 8A through 8B illustrate an example of the multi-level association. In the present embodiment, an association is based on the user operation behavior. In the present embodiment, it is assumed that the lock screen application is the first application, and a Tencent QQ application is the second application. The lock screen application and four sub-interfaces are selected, wherein the four sub-interfaces respectively are Tencent friend dynamics, Tencent microblog, Tencent friend message, and Tencent e-mail of the Tencent QQ application. The association is established between the lock screen application and the four sub-interfaces of the QQ application. As illustrated in FIG. 8A, when a user desires to trigger a display of a second application-associated control (i.e., a QQ-associated control), in one implementation, the user may draw a gesture on the screen, e.g., a "V" shape gesture 810, so as to trigger the display of the QQ-associated control. For example, in another embodiment, the display of the second application-associated control may be triggered by using a sensor, e.g., by shaking the electronic device. Optionally or additionally, when the associated second application has a new message, the second application-associated control may be automatically displayed on the lock screen, i.e., the association is based on the message received by the electronic device as described above. FIG. 8B illustrates a second application-associated control 820 displayed on a lock screen. In some embodiments, when a user's finger hovers over the second application-associated control, four small windows pop out around the control, the four small windows being respectively associated with the corresponding selected sub-interfaces of the QQ application. In another embodiment, in response to the display of the control, the four small windows around the control may be displayed from the beginning to the end. For example, when the associated second application has a new message, the second application-associated control and the small window around it may be automatically displayed on the lock screen, and the new message is indicated in the corresponding small window. For example, in the Tencent friend message rectangle small window, if there are 2 messages from different friends, the rectangle may alternatively display avatars of the friends in a scrolling manner. In some embodiments, when the user's finger hovers over the small window, content of the sub-interface associated with the small window may be highlighted. For example, if the user is interested in the friend dynamics, the user may move his/her finger to the friend dynamics rectangle. An area of the rectangle may be extended in a certain proportion to display more contents of the sub-interface. When the user clicks the small window, complete content of the sub-interface is displayed on the background view of the lock screen.

With respect to an association with the slide gesture by the user, different slide paths may associate different display resources with the first application. For example, in the aforementioned example, the "V" shape gesture corresponds to the WeChat application control, the "S" shape gesture corresponds to the today's headlines application control, and the "L" shape gesture corresponds to the LeTV application control.

In some embodiments, the trigger display manner or the association manner may have no trigger and may be always displayed.

Optionally or additionally, the position that the second application control is displayed in the associated first application may be dynamically adjusted according to a user's habit or a user's gesture. For example, a quick start control or an icon of an application associated with the lock screen application is generally placed in a fixed position on the lock screen, e.g., at the bottom of the interface. In some embodiments, when the user's finger slides on the screen of the electronic device so as to trigger a start and a display of the associated application control, it is possible to determine a position range for displaying the application control according to a range of a slide trajectory of the user's finger. It should be noted that, the dynamic adjustment with respect to the position according to the gesture also includes determination according to coordinates corresponding to long-pressing by the user on the screen.

FIG. 9 is a flowchart illustrating a method of managing the presence of elements of the first application, based on the display resource utilizing the association manner based on the target object of the application, according to some embodiments.

In the embodiments, a mobile terminal device intelligently associates and triggers a corresponding content view according to a target object of a current application, so as to provide more user-friendly experience to the user. The target object may be a receiver of content generated by the current application or may be an object of an application to which the content generated by the current application is to be applied. Alternatively, the target object of the application may include, but is not limited to, at least one of a social relationship among people, an attribute of people, a scenario, content, etc.

The application may be classified to an application that does not differentiate between objects or an application that differentiates between objects. For example, the application that does not differentiate between objects may include at least one of the lock screen application, the main screen application, the notification bar application, the music player application, a browser application, etc. The application that differentiates between objects may include at least one a contents application, the album application, the calendar application, a phone application, the short message application, the e-mail application and other application interacting with the user in the mobile terminal device. A change in the content view of the application includes a change in a background view and/or a control view of each sub-interface of the application.

In the embodiments, the display resource mainly refers to a festival effect resource package. In a user's schedule, a display resource regarding a festival may be the festival effect resource package. That is, a usage of the festival effect resource package is triggered according to the target object of the application.

Hereinafter, descriptions are provided based on a festival that is an example of the user's schedule. The festival mentioned in the embodiments may include public festivals and user-defined festivals. The public festivals include, but are not limited to, the spring festival, New Year's Day, Mother's Day, the Lantern festival, etc. The user-defined festivals include, but are not limited to, a wedding anniversary, a birthday, a 100th day anniversary, a foundation day, and other user-desired dates.

The intelligent association and triggering of the view content corresponded by the mobile terminal device according to the target object of the current application may be enabled by default due to the system or may be configured in an initial configuration by the user. When the festival effect function is enabled but an association of the application view content based on an object is disabled, all festivals are displayed the same for different applications in the mobile terminal device and different objects, without differentiation. When the festival effect function is enabled and the association of the application view content based on the object is also enabled, the mobile terminal device reads current festival time information, recognizes the target object of the current application, and changes a presence effect of the application according to a corresponding festival effect if a target object of the current festival is consistent with the target object of the current application. As such, for the self-defined festivals and public festivals towards particular objects, such as Mother's Day and the wedding anniversary which aim at merely particular objects (a mother, a spouse), the user may select to enable the festival effect function based on object recognition, thereby obtaining a more humanized user experience. When the function is enabled, the user may also download more effect resource packages to enrich the humanized effect display.

A festival effect of the public festivals is mainly displayed on the applications that do not differentiate between objects. Such applications may include the lock screen application, the main screen application, the notification bar application, etc. The self-defined festivals and the public festivals which differentiate between objects are mainly displayed on the applications that differentiate between objects. Such applications may include the short message application, the e-mail application, the phone application, a social application, etc. The user may maintain a system default configuration or may personally configure association information, which will be described in detail below with reference to accompanying drawings.

After being triggered in the application, the festival effect may be displayed in various manners. In some embodiments, the festival effect may be displayed only on a triggered application. After the user ends the application, other applications do not display the festival effect. In some embodiments, the festival effect is displayed not only on the application but is also displayed on other applications. These are described in detail below with reference to the accompanying drawings.

As illustrated in FIG. 9, at block 901, a target object of the current application is detected.

As mentioned above, the target object of the application may include at least one of the social relationship among people, the attribute of people, the scenario and the content of the application. In this regard, the determining of the target object of the current application may include at least one of: recognizing a social relationship between a target person of a module or interface of the current application and the user of the electronic device; recognizing a scenario of the module or interface of the current application; recognizing an attribute of the target person of the module or interface of the current application; and recognizing interactive content between the user and the communication peer side via the current application.

The social relationship between the person and the user may include, but is not limited to, a relationship between father and his son, a relationship between a mother and her son, a marriage relationship, a relationship between brothers and sisters, a friend relationship, a colleague relationship, a classmate relationship, a teacher-student relationship and a family relationship. The attribute may include, but is not limited to, a gender, an age, a country, a nation, a workplace and a habit.

The social relationship between the target person of the module or interface of the current application and the user of the electronic device may be recognized in various manners. In some embodiments, the social relationship may be recognized according to association information pre-configured by the user. In this regard, the association information refers to an associated person indicated by the user when configuring the association between the display resource and the application. In another embodiment, the social relationship may be recognized according to a record in an application having a data recording function in the electronic device. For example, the recognition may be performed based on a name, a nickname, a telephone number, a device name, a relationship, and/or remark information of a contact in the phonebook of the user. It may be understood that, the application having the data recording function is not limited to the phonebook. The social relationship may be reconginized according to a record in a calendar, a memo, various social applications, etc.

At block 902, a current festival related to the detected target object is determined.

In an embodiment, when the detected target object is a target person of the module or interface of the current application, the determining of the current festival related to the detected object may include obtaining current festival information according to the time of the electronic device, and determining the current festival related to the person according to the recognized social relationship between the recognized person and the user and the target person of the current festival.

In another embodiment, when the festival information is not stored in the electronic device, the current festival information may be obtained from interactive content between the user and the communication peer side. Then, the current festival related to the object may be determined according to the social relationship between the recognized person and the user and/or security authentication information.

In another embodiment, when there are a plurality of festivals, and the festivals are with respect to a same object, current festivals related to the recognized person may be determined according to a predefined policy. The predefined policy may include any one of
a system default festival display priority,
a user-defined festival display priority,
displaying in different time periods,
displaying in different applications,
displaying based on text content recognizing,
nested displaying and
user selected displaying when being triggered.

The above embodiments will now be described below with reference to some embodiments.

A service of an application may be performed based on the target object and the current festival. At block 903, the presence of the element of the first application is managed according to the display resource associated with the detected object and the current festival.

As described above, the managing of the presence of the element of the application may include managing at least one of a display manner and display content which are of element. Alternatively, the managing of the presence of the element of the application may include managing at least one of a static view and a dynamic view which are of the element.

In some embodiments, the managing of the presence of the element of the application may include displaying festival reminding information in the first application according to interactive content and/or interactive time between the user and the communication peer side via the first application. In some embodiments, the festival reminding information may include festival blessing text information related to the current festival obtained according to an attribute of the communication peer side, greeting card information, and festival operation reminding information.

Hereinafter, some embodiments are provided to describe an intelligent association and triggering of corresponding content view, based on an object of an application. In the embodiments, a festival effect resource package is still referred to as the display resource.

### Embodiment 1: To display contents having different view according to social relationships of people

The user of the mobile terminal device may have different social relationships with different people. With respect to the view content and control of the application of the mobile terminal device, the user may have different requirements with respect to the different social relationships with the different people.

In a daily life scenario, when the user has a different social relationship with a person corresponding to the application, a change in the content presented to the user may satisfy the requirement by the user in different scenarios.

The social relationship may include, but is not limited to, at least one of the relationship between father and his son, the relationship between a mother and her son, the marriage relationship, the friend relationship, the colleague relationship, the classmate relationship, the subordinate relationship, the teacher-student relationship and the family relationship, etc. Hereinafter, a method of recognizing the social relationship between people, a condition of displaying a set effect, and how the effect is present will now be described.

### 1. Recognizing social relationship between people

The mobile terminal device may recognize the social relationship between people via at least one of the following manners.

According to a first manner, the mobile terminal device recognizes the social relationship according to a name, a nickname, a telephone number, a device name and/or remark information of a person in the application when the user communicates or interacts with the object that is the person via the application. For example, the application may be capable of identifying people and may include a phonebook, a memo, a calendar, a social application and/or war game programs. The performing of the communication may include, but is not limited to, establishing a data communication connection via a communication operator network, WiFi and/or Bluetooth. The interaction may include, but is not limited to, making a call, sending a short message, instant messaging and/or online game, etc. The recognizing operation may be automatically performed by the system by default or may be automatically performed after the user enables a recognition function.

According to a second manner, the social relationship may be recognized according to association information configured in advance in the configuration of the mobile terminal device. The association information may be person + date + application information + replacing effect resource package. The person may be the user himself or another person. The application may be any application appropriate for presenting the effect. The replacing effect resource package may be, but is not limited to, a festival effect resource package. The configuration may include at least one of a person, a date, a time period, an application, an address, an effect resource package and a frequency. For example, the user may pre-configure the following, I + birthday + lock screen + birthday animation resource package; or, a mother (from phonebook) + Mother's Day + short message + resource package of Mother's Day.

### 2. Condition of displaying effect

The mobile terminal device determines a person corresponding to the current application. For example, when the user opens the short message application and selects a mother as a receiver, the person corresponding to the short message application is determined to be the mom. Then, the mobile terminal device loads current festival information according to a date that is currently recognized by the mobile terminal device. When the person corresponding to the current festival and the person corresponding to the currently running application are matched, the effect presented by the application may be changed accordingly. When a current day is neither a festival day nor the person corresponding to the current festival is not the same as the person who corresponds to the currently running application, the effect presented by the application by default remains unchanged. The recognition of the date may include, but is not limited to, obtaining time from a system time, a calendar application and/or a network.

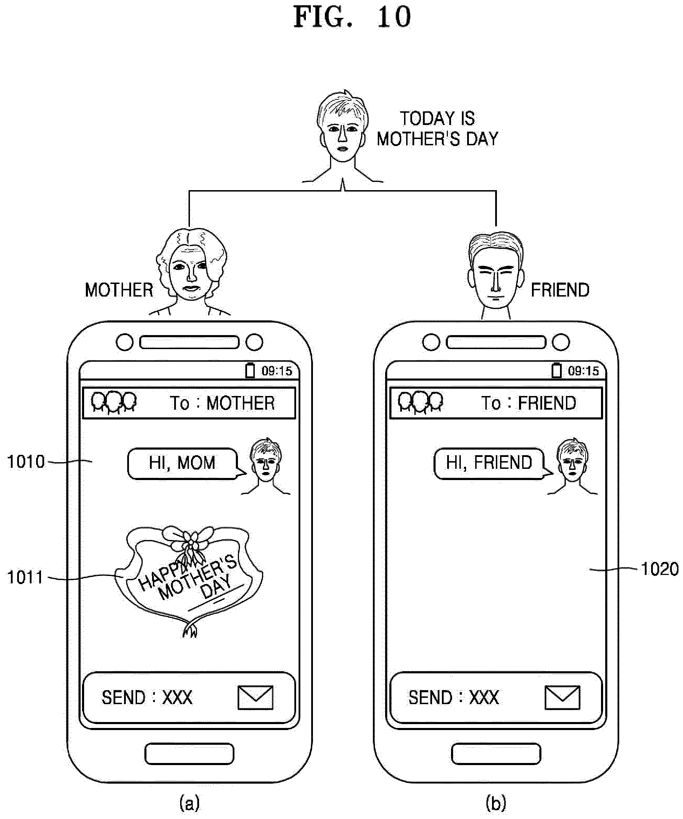

FIG. 10 illustrates an example for displaying view contents according to the social relationship between people, according to an embodiment. In the embodiment, the current festival is Mother's Day. The festival effect function in the menu is configured to be enabled by the mobile terminal device. The target object of Mother's Day is an older woman including a mother, a mother-in-law, and/or an aunt. Therefore, as illustrated in FIG. 10, when it is detected that today is Mother's Day and a receiver of a current short message is one of the aforementioned older women (a), a background view 1010 of the short message may be automatically changed to a mother's day effect picture 1011. On the other hand, when the short message application is opened, if a receiver selected from the phonebook is a friend of the user and does not belong to the target object of Mother's Day (b), a background 1020 of the short message remains unchanged and the festival effect is not displayed.

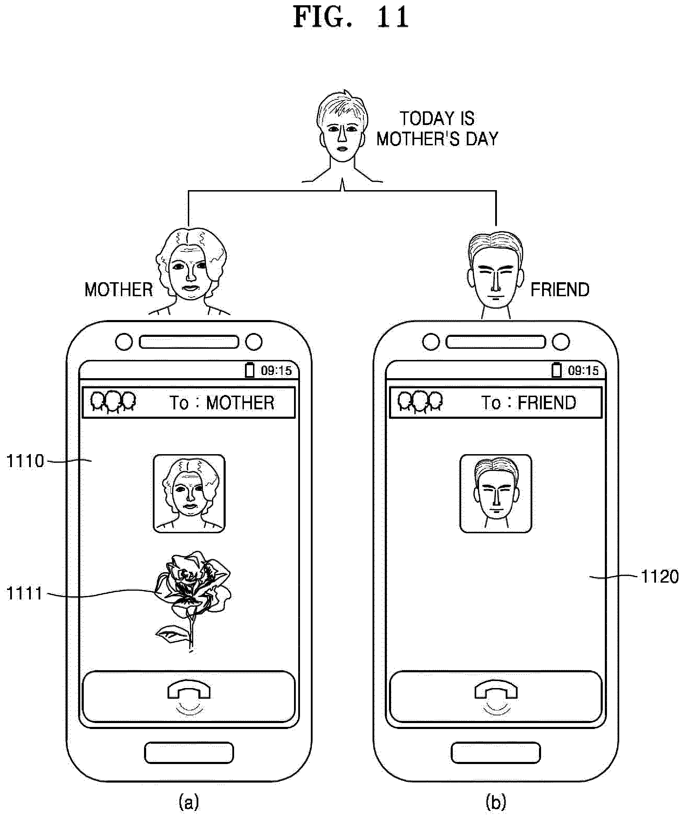

FIG. 11 illustrates an example for displaying view contents according to the social relationship between people, according to another embodiment. In the embodiment, the current festival is Mother's Day and the festival effect function in the menu is configured to be enabled by the mobile terminal device. As illustrated in FIG. 11, when it is detected that today is Mother's Day, if the phone application is run and a mother is selected via the phonebook (a), a calling background 1110 may be replaced with a festival effect 1111 of Mother's Day. On the other hand, if the phone application is opened and a contact selected from the phonebook is a friend of the user and does not belong to the target object of Mother's Day (b), a calling background 1120 remains unchanged and the festival effect is not displayed.

### 3. Presence manner of the effect

The effect presented by the application may include any one or any combination of a static picture, a dynamic picture, background music, audio, video, and shaking of the mobile terminal device. The dynamic picture may be an animation played once and/or an animation played circularly. The animation played once is previously referred to as an animation that is reproduced only once when the animation is triggered. For example, with reference to FIG. 2, when the user drops down the notification bar, the notification bar application triggers the animation to be reproduced. After being reproduced once, the animation disappears. When the notification bar is dropped down again, the animation is reproduced again.

The effect presented by the application may be managed, without limitation, in the form of the effect resource package. The managing manner includes, but is not limited to, at least one of downloading, deleting, applying, and modifying. Different resource packages provide different effects. A configuration menu provided by the mobile terminal device may include an option of receiving, from the user, an input of selecting an application in which the effect is to be presented. The user may set, by using the configuration menu, whether the festival effect is applied to all applications or only some applications. For example, the user may select the effect to be displayed only in a triggered application or may select the festival effect to be displayed not only in the application but also displayed in other applications. If a downloaded festival effect resource package does not support an application selected by user, a message may be displayed for the user, wherein the message is to promote the user to download, from the network, a corresponding application resource package that supports the user-selected application.

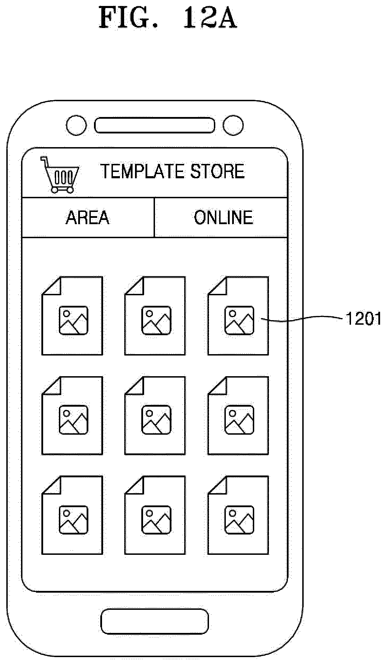

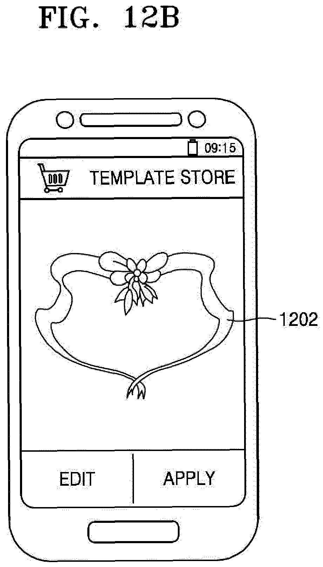

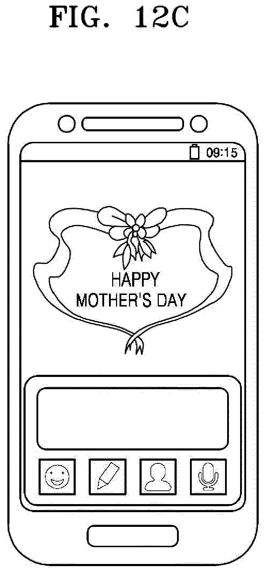

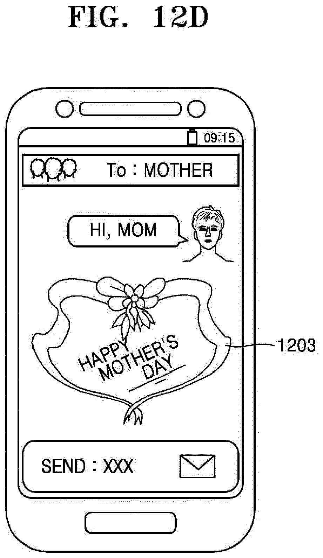

FIGS. 12A through 12D illustrate management of the festival effect resource, according to an embodiment. FIG. 12A shows downloaded background view templates 1201 in a resource center. FIG. 12B shows an original background view template 1202. FIG. 12C shows the editing of a background view template, the editing performed by the user. FIG. 12D shows an edited background view 1203 automatically displayed on an application interface when the user sends a short message to his/her mother on the day of the festival (Mother's Day).

As shown in FIGS. 12A through 12D, the user downloads a festival effect template from a festival effect resource center, e.g., a background view and/or greeting card, and edits the festival effect template, e.g., configuring a picture color, background music and/or an animation, etc., and then selects an application-target application. It is assumed that the festival effect function in the configuration menu of the mobile terminal device is configured to be enabled. The system detects festival information of today. When a current application conforms to the user's configuration, and a person corresponding to the current festival is matched with a person that corresponds to a currently running application, the effect presented by the application is automatically changed to the user-defined festival effect.

### Embodiment 2: To display different view contents according to different scenarios

In one application, there may be at least one object and multiple festivals may correspond to the object. For example, in the phone application, when the user has a call with an object, the user may receive a call from another object. The two objects may both have associated festival effects. In the case where the outbound call scenario and the incoming call scenario simultaneously exist, different view contents need to be displayed according to various scenarios.

In the present embodiment, the mobile terminal device associates and triggers corresponding view content by detecting an object of an application so as to present an effect. The detailed view content is applied by to the object in each scenario and a festival of the object.

### 1. Initial configuration

The mobile terminal device determines an application associated with the festival according to a system default configuration or a user's initial configuration. For a user-defined festival and public festivals which differentiates between objects, the association may be configured for all applications capable of presenting a festival effect, or for applications which differentiates between objects, e.g., the short message application, the e-mail application and/or the calling application, etc.

After the application is triggered, the festival effect may be displayed in various manners. For example, in a first manner, the festival effect is simply displayed when the application is triggered. After the user exits from the application, other applications do not display the corresponding festival effect. Alternatively, in a second manner, the festival effect is displayed not only in the triggered application but also is displayed in other associated applications. Those with ordinary skill may design other manners which are not described herein.

In the same application, a display manner with respect to festival effects corresponding to different objects is recognized based on an application module. In the same application, a plurality of different sub-modules may be present. For example, a sub-module of the calling application includes at least one of an incoming call interface and a calling interface. A sub-module of the short message application includes at least one of a short message background view and a message text item view. Different modules may display different contents with respect to different objects.

### 2. Detailed procedure for displaying effect

The mobile terminal device reads current first festival time information, and recognizes a first target object of a current first application. When a target object of the first festival and a target object of the first application match with each other, an effect presented by the first application is changed to a first festival effect. After a second application is executed, the mobile terminal device reads current second festival time information, and recognizes a second target object of the second application. When a target object of the second festival and the target object of the second application match with each other, an effect presented by the second application is changed to the second festival effect. The number of the festivals, objects and/or applications is not limited to two. They may be three or more.

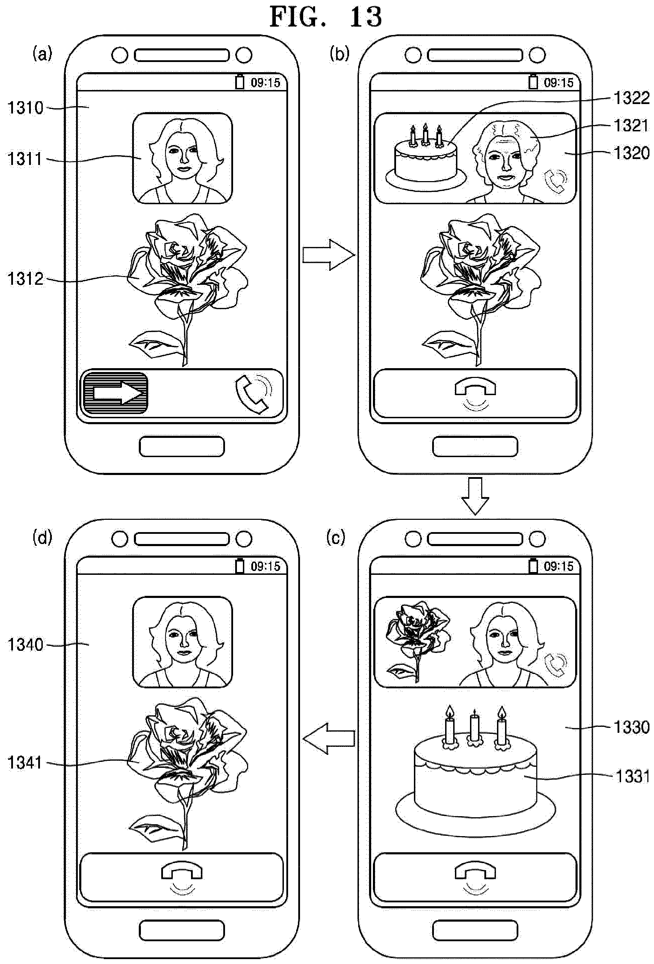

FIG. 13 illustrates an example of displaying different view contents according to different scenarios, according to an embodiment. In the example, it is assumed that a current day corresponds to both the wedding anniversary and the birthday of mom. As illustrated in FIG. 13, the mobile terminal device detects that an incoming call 1311 from wife is received, and a user of the mobile terminal device answers the call. The mobile terminal device detects that today is the wedding anniversary and displays an effect 1312 of the wedding anniversary on a calling background 1310 (a). Then, during the call, the mobile terminal device detects an incoming call 1321 from a mother of the user. The mobile terminal device also detects that today is the birthday of mom. Therefore, the mobile terminal device displays both incoming call message information 1320 prompting an incoming call from a mother and a mother's birthday effect 1322 (b). The user hangs up the call from his wife and answers the call from his mom. In this regard, a mother's birthday effect 1331 is displayed on a calling background 1330 (c). When the user hangs up the call from a mother, and answers the call from the wife, a wedding anniversary effect 1341 is displayed again on a calling background 1340 (d).

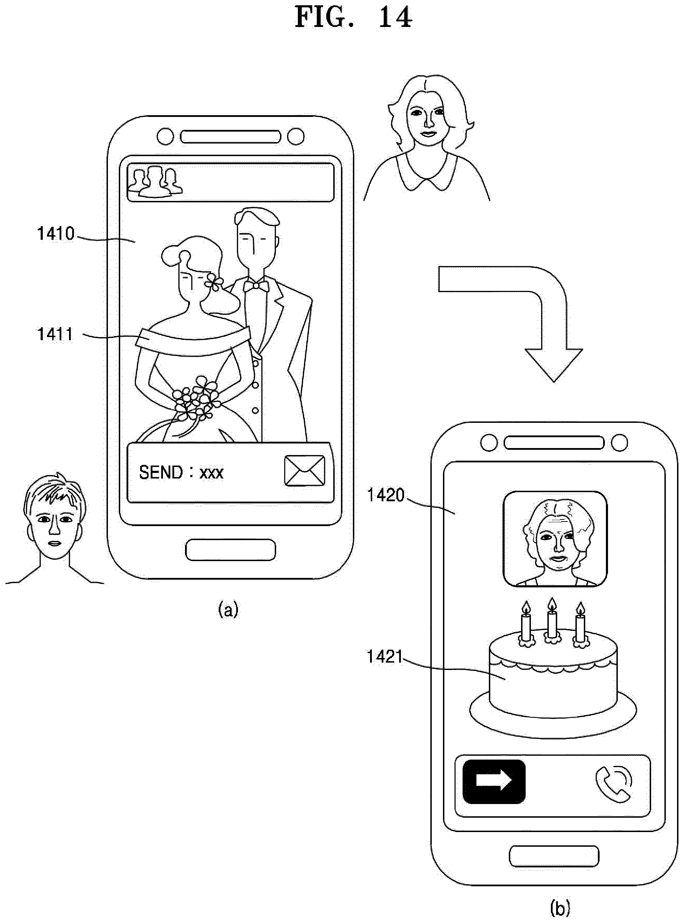

FIG. 14 illustrates another example of displaying different view contents according to different scenarios, according to an embodiment. In the example, it is assumed that a current day is both the wedding anniversary and the mother's birthday. As illustrated in FIG. 14, the mobile terminal device detects that the user sends a message to his wife. A short message background 1410 displays a wedding anniversary effect 1411 (a). At this time, there is an incoming call from mom. The user answers the call and a calling background 1420 displays a birthday effect 1421 (b). After the call is disconnected, the user resumes sending the message to his wife, and the short message background displays the wedding anniversary effect.

The embodiments respectively describe scenarios in which an incoming call is received during a call and an incoming call is received when sending a short message. The present disclosure is not limited to the aforementioned scenarios and may include a scenario in which switching is performed among a plurality of applications or among different modules of the same application, or may include a scenario in which interconnected devices switch device. The interconnected devices refer to multiple mobile terminal devices that establish data communication connection through a communication operator network, WiFi and/or Bluetooth.

The festival mentioned in the above embodiments is not limited to a wedding anniversary and a birthday. It may be other public festivals and/or self-defined festivals.

The change in the festival effect mentioned in the above embodiments is not limited to replacement. The festival effect may also be displayed in a nested manner. The mobile terminal device reads first festival time information, and recognizes a first target object of the first application. When a target object of the first festival matches with the first target object of the first application, an effect presented by the application is changed to a first festival effect. After the second application is triggered, the mobile terminal device reads second festival time information, and recognizes a second target object of the second application. When the second target object of the second festival matches with the second target object of the second application, an effect presented by the second application is a corresponding second festival effect, and the effect presented by the first application is still the first festival effect. For example, in the above embodiment, as illustrated in FIG. 13, the phone calling background displays the festival effect of the wedding anniversary when the user of the mobile terminal device answers the call from his wife. At this time, when an incoming call from a mother is received, the incoming message information 1320 shows an avatar of a mother and her contact name, and the festival effect of mother's birthday, the remaining part of the phone calling background displays the effect of wedding anniversary.

### Embodiment 3: To display different view contents according to attributes of people

Different people may have different attributes. The different attributes may be reflected on view content and a control of an application of the mobile terminal device. In a daily life scenario, if a person corresponding to the application has a difference attribute, content displayed for the user is changed in another scenario so as to satisfy requirements of the user.

In the embodiment, the attributes of the people may include at least one of a gender, an age, a country, a nation, a work, a habit, etc. The application may include, but is not limited to, an application such as the calling application, the short message application, the e-mail application and/or a social application which differentiates between object attributes.

### 1. To recognize attributes of people

The mobile terminal device may recognize an attribute of a person in various manners.

In an embodiment, the mobile terminal device recognizes the attribute according to relevant item and remark information of a contact in the phonebook of the user. When communicating or interacting with an object, i.e., a person through an application, the mobile terminal device may recognize an attribute according to a name, a nickname, a telephone number, a device name and/or remark information of the person. The application may be an application such as a phonebook, a memo, an instant messaging application and/or a war game application capable of identifying an attribute of people. The communication may include, but is not limited to, establishing data communication connection via a communication operator network, WiFi and/or Bluetooth. The interaction may include, but is not limited to, making a call, sending a short message, instant messaging and/or an online game, etc. The recognizing operation may be automatically performed by default by the system or may be automatically performed after the user enables a recognition function.

In another embodiment, the recognizing may be performed through user-related data. The user-related data may include, but is not limited to, a usage habit of the user, and a location of the user detected by the electronic device or the mobile terminal device. The usage habit may be detected according to usage by the user with respect to a browser application and various game applications. The location of the user may be detected according to usage with respect to a navigator, a map, and a location determining application.

In another embodiment, the recognizing may be implemented according to association information pre-configured by the user. The association information refers to a configuration to be performed when a display resource is associated with an application. For example, the association information may include a relevant person, a relevant date (such as a festival, etc.), a relevant application and a relevant display resource package (such as a festival effect resource package, etc.). The association information may be denoted by person + date + application + resource package. For example, the user may configure as follows: I + birthday + lock screen + camera resource package; or, a mother (from a phonebook) + Mother's Day + short message + teacher resource package.

### 2. Condition of showing effect

The mobile terminal device determines an attribute of a person which corresponds to a current application, and obtains current festival information by reading a current date. When the person corresponding to the current festival matches with a person corresponding to the currently open application, and there is a festival effect display resource matching the attribute of the person, an effect shown by the application may have a corresponding change. If the current date is not the date of festival, or the person corresponding to the current festival does not match with the person corresponding to the currently open application, the effect shown by the application remains unchanged. If the person corresponding to the current festival matches with the person corresponding to the currently open application, but there is no festival effect display resource matching the attribute of the person corresponding to the application, the effect shown by the application may remain unchanged or a festival effect that does not differentiate between attributes of people may be shown. The date may be read from, without limitation, a system time, a calendar application and/or a network time.

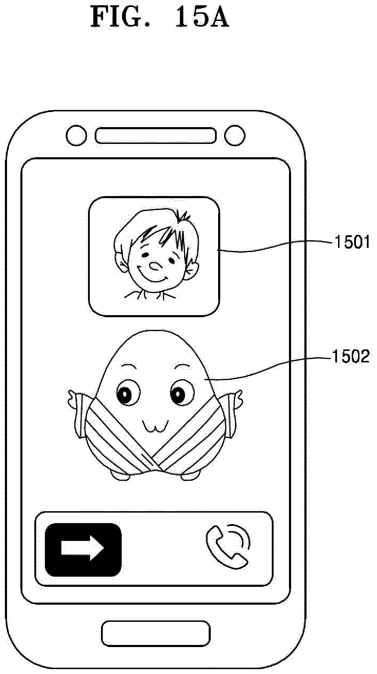

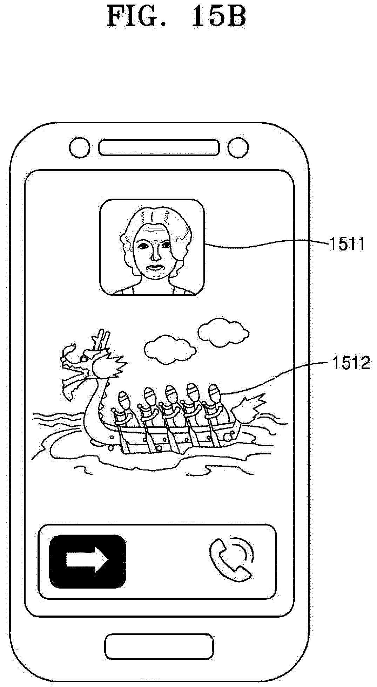

FIGS. 15A and 15B show a display of different view contents according to attributes of people, according to an embodiment. In the present embodiment, when it is assumed that a festival effect function is enabled after an initial configuration, the electronic device detects festival date information and triggers showing of a festival effect.

As shown in FIG. 15A, when it is detected that a current festival is the dragon boat festival, an incoming call 1501 from a grandson is displayed in an incoming call interface of the mobile terminal device of a grandmother. An attribute (such as an age) of a person (i.e. the grandson) corresponding to the incoming call interface is recognized so that a cartoon-style animation 1502 corresponding to an age of the grandson is displayed. As shown in FIG. 15B, when it is detected that the current festival is the dragon boat festival, an incoming call 1511 from a grandmother is displayed in the incoming call interface of the mobile terminal device of the grandson. The attribute (such as an age) of the person (i.e., the grandmother) corresponding to the incoming call interface is recognized so that a traditional-style animation 1512 corresponding to an age of the grandmother is displayed.

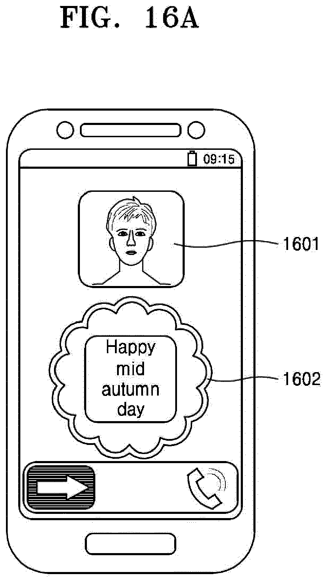

FIG. 16A shows a display of different view contents according to attributes of a person, according to another embodiment.

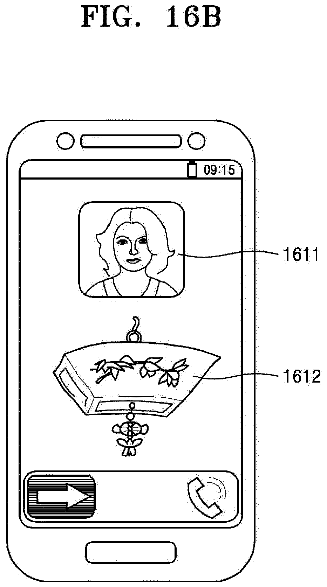

As shown in FIG. 16A, when it is detected that a current festival is the mid-autumn festival, an incoming call 1601 from Mr. Chen is displayed in an incoming call interface of a mobile terminal device of Ms. Kim. An attribute (such as a country) of a person (i.e. Mr. Chen) corresponding to the incoming call interface is recognized so that a Chinese-style animation 1602 corresponding to the country of Mr. Chen is displayed. As shown in FIG. 16B, when it is detected that a current festival is the mid-autumn festival, an incoming call 1611 from Ms. Kim is displayed in the incoming call interface of a mobile terminal device of Mr. Chen. The attribute (such as a country) of the person (i.e. Ms. Kim) corresponding to the incoming call interface is recognized so that a Korean-style animation 1612 corresponding to the country of Ms. Kim is displayed.

### 3. Presence manner of effect

The presence manner is similar to that described in the embodiment 1 and is not repeated herein.

When configuring a display resource, the user may also select a resource package complete set in a particular field. After the resource package complete set is applied, view contents of multiple applications may be replaced with view contents in a field of a festival day. For example, the user may download a complete set of a resource package which includes resources of 9 traditional festivals. For example, subjects of the resources may be famous cars of the world. Different applications have matching resources to implement the replacement. For example, the matching resources may be a keyboard background of the input method application, a background animation of the lock screen application, or a background animation of the notification bar application. A display manner and a style of view contents of different applications may be different. For example, the background view of the lock screen application shows an animation that is circularly reproduced. An animation in the background view of the notification bar application is reproduced in response to a gesture by the user. When the user drops down the notification bar (a display line), the animation is reproduced only once. The animation disappears after being reproduced. Only when the user drops down the notification bar again, the animation is reproduced again. The gesture operation may include at least one of long pressing, a slide along a particular trajectory, S-pen hovering (indication), operations combined with sensors, etc.

### Embodiment 4: Triggering a change in view contents of a series of applications according to recognition with respect to people and content

In the present embodiment, view contents and controls of a plurality of applications may be simultaneously changed according to recognition with respect to people and content corresponding to a current application.

### 1. Recognition with respect to people

In the present embodiment, the recognition with respect to people refers to recognition with respect to a social relationship between a communication peer side and the user. The recognition may be implemented in various manners described above with reference to the embodiment 1.

Optionally or additionally, the recognition with respect to the social relationship is also a type of security authentication. Through the security authentication, only remote object that passed the security authentication by a local user may trigger a change in local view content. In this manner, the triggering by the remote object with respect to the local view content is protected. Not all remote objects can trigger the change in the local view content. For example, the local user and the remote object have a marriage relationship, and contact characteristic relationship information of a spouse of the local user is stored in the phonebook. Optionally or additionally, the local user may select to enable a contact remote automatic trigger function to improve a security level.

### 2. Recognition with respect to content

The current application may be any application that includes, but is not limited to, the short message application, the e-mail application, the various social applications, etc., and is capable of receiving information transmitted from a communication peer side.

A text recognizing operation may be performed on content of information so as to determine whether a particular characteristic content exists. The characteristic content may be pre-stored in a database. The characteristic content may be various kinds of festival-related information, e.g., festival blessings, a festival reminder, etc. Thus, the characteristic content in the information may be captured through text matching.

### 3. Condition of showing effect

Based on interactive content between users, a user-schedule context in the content may be determined. For example, the electronic device may determine, based on interactive content, a festival context that corresponds to the interactive content and is from among a plurality of current festivals. The user-schedule context refers to a user's schedule determined to correspond to content according to analysis of the particular content.

After the relationship between the local user and the remote object passes the security authentication, text recognition may be performed on the content (including but is not limited to a short message, an e-mail, a multimedia greeting card, etc.) sent by the remote object so as to capture relevant characteristic content (such as festival-related information, etc.), so as to trigger a change in the view content of the corresponding application. For example, when the short message sent by the remote object contains information related to "wedding anniversary", the mobile terminal device reads the short message by using the current application (the short message application in the embodiment) in response to the detected social relationship between the remote object and the local user and the security authentication information, and determines a current context. The mobile terminal device may automatically change view content of the application which is triggered to change the view content or may allow a notification to be first popped out to ask the user whether to change the view content of the application according to the security level configured by the local user.

### 4. Determination of application to be triggered

The application that is triggered to change the view content may be various applications the current application which interact with the user. In particular, the application may include, but is not limited to, the calling application, the phonebook application, the lock screen application, the short message application, the notification bar application, the main screen application, the music player application, the album application, the calendar application, the social application, the input method application and the e-mail application, etc.

The application that is triggered to change the view content may be determined in various manners. In an embodiment, the application that is triggered to change the view content may be determined according to a usage frequency of the application. For example, N applications that are most frequently used by the user are triggered. In another embodiment, the application that is triggered to change the view content may be determined according to selection by the user. For example, a list of applications may be provided to the user, and the user selects, from the list, the application to be triggered to change the view content. In another embodiment, the application that is triggered to change the view content may be determined according to a system default configuration. For example, the system default configuration includes the short message application, the WeChat application and the calling application. In another embodiment, the application that is triggered to change the view content may be all applications that interact with the user.

### 5. Showing manner of effect

An application of which view content may be changed is installed in the mobile terminal device and supports a free change in view content by downloading a resource package. Not only a background view of the application may be changed, a relevant control may also be changed. For example, when a date of the mobile terminal device corresponds to a festival day, the mobile terminal device may automatically add a festival control to the main screen. The festival control may include at least one of a quick preview information item, festival encyclopedias, festival gift recommendation, a festival card, and a shortcut (a shopping, a restaurant, packet ordering), etc. The user may quickly enter a corresponding life service page such as the shopping, the restaurant, a movie theater, an online greeting card through the festival control.

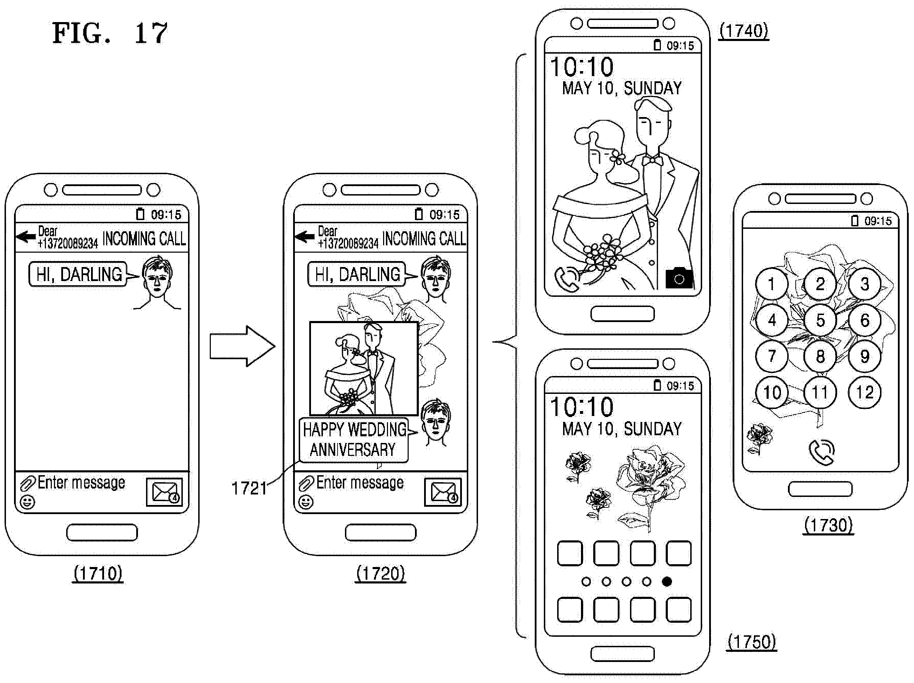

FIG. 17 shows a series of changes in view content of an application triggered according to recognition with respect to people and content, according to an embodiment. In the present embodiment, after initial configuration of the mobile terminal device, a festival effect function is enabled. A current festival is a wedding anniversary but the user does not pre-store a date of the wedding anniversary in the mobile terminal device. Therefore, a festival effect is not shown on a short message background of the mobile terminal device (1710). In an application scenario of the embodiment, a spouse of the user wants to give a surprise to the user. In this regard, a short message that is received by the mobile terminal device of the user and is sent by the spouse of the user contains information "Happy Wedding Anniversary" (1721).

The mobile terminal device obtains current festival information from the content. Accordingly, a festival context according to the current short message is determined to be the wedding anniversary. For example, the current festival is determined to be the wedding anniversary. Then, according to a social relationship between a sender and the user (marriage relationship) and the security authentication information (passed the security authentication of the local user), it is determined that a series of applications may be triggered to load and use a festival effect resource package related to the wedding anniversary. For example, in the example, as shown in FIG. 17, after the mobile terminal device executes the short message application, a short message background 1720, a dial interface 1730, a lock screen 1740, and a main screen 1750 display a corresponding festival effect.

In the aforementioned embodiment, a change in the view content of the application is triggered by sending the short message to the user. As mentioned above, the triggering manner is not limited to a short message, and may also include triggering by sending an e-mail and/or a multimedia greeting card, etc. In the aforementioned embodiment, the trigger condition includes the recognizing of the relationship, security authentication and the recognizing and determining of the detailed text content (festival keywords). The recognizing of the relationship and the security authentication has been described in the above. Optionally or additionally, after the festival effect is triggered, the mobile terminal device of the user may automatically store a festival date and festival information in applications such as a phonebook, a memo, and/or a calendar, thus, in the present embodiment, the date of the wedding anniversary may be stored.

In the above embodiment, the application that shows the festival effect includes the short message application, the dial interface application, the lock screen application and the main screen application. As aforementioned, the application that is triggered to change the view content may be other applications (e.g., an application which is selected in a configuration menu to show the festival effect) interacting with the user in the mobile terminal device. When the festival effect is triggered, the festival effect is shown in all or some applications according to configured parameters.

In the above embodiment, when the trigger condition is satisfied, it is possible to configure a relevant parameter in a configuration menu so as to determine whether the festival effect is triggered at once or after acknowledgement of the user. In the embodiment as shown in FIG. 17, an automatic trigger is adopted. In some embodiments, a parameter with a high security level may be selected from the configuration menu. After the parameter with the high security level is configured, the festival effect does not show at once after the relevant condition is satisfied. For example, a notification bar is popped up to allow the user to determine whether to apply the effect in the application.

In the above embodiment, the mobile terminal device may close the triggered festival effect according to a user operation. The user operation may include at least one of remote triggering of closing all or some applications in the festival menu, remote triggering of closing one or more festivals in the festival menu, and a gesture for closing one or more festival controls in the main screen.

### Embodiment 5: Triggering of a text reminder and an operation reminder related to content according to recognition with respect to the content

The embodiment 1 describes that the mobile terminal device may change the view content of the application according to the social relationship between the user and the person corresponding to the application. In a real life scenario, user requirement may not be satisfied by merely changing the view content of the application. Additionally, it is also desired that some effective actions (events) are performed on the person corresponding to the application on a particular date (such as a date of a festival). For example, operations (events) of sending festival blessing information, and buying a festival gift may be performed. Some users may forget to do these operations.

Therefore, in the present embodiment, festival reminding information may be displayed in the application according to interactive content and/or interactive time between the user and the communication peer side via the application.

### 1. The time for displaying festival reminding information

In general, it is required to remind the user only when the user forgets to perform the above festival-related actions, and then to close the reminder after the user performs the actions. Therefore, it is possible to determine whether to display the festival reminding information in the application according to the interactive content and/or interactive time between the user and a target object of the application.

When it is determined that the user has not yet perform the festival-related action to a corresponding object via the application according to the determination of the interactive content and/or interactive time, the festival reminding information is shown in the display interface of the application. With respect to different applications, the festival-related action may also vary. For example, the festival-related action of the calling application may be making a call, and the festival-related action of the short message application may be sending a festival blessing short message. Optionally or additionally, when the user performs a festival-related action on an object according to the reminding information, the reminding information may no longer be displayed in the application with respect to the object. The reminding information may be shown when the user opens the application. For example, if today is Mother's Day, the reminding information may be displayed when a short message is sent to a mother or when a call is made to the mother. As another example, the reminding information may be displayed in the short message interface and the calling interface of the mobile terminal device of the user when the user receives a short message or a call from a mother on Mother's Day.

If it is determined that the user has performed the festival-related action on the corresponding object via the application according to the determination of the interactive content and/or interactive time, the reminding information is not displayed in the displaying interface of the application.

For example, the festival effect function is enabled after the initial configuration of the mobile terminal device. If it is detected that the current festival is Mother's Day and the user has not sent festival blessing to a mother on that day, the blessing reminding information of Mother's Day may be displayed if the user opens the short message interface and a receiver thereof is mom. Otherwise, the reminding information is not displayed.

### 2. Content of reminding information

The festival reminding information may include text reminding information and/or action reminding information. The text reminding information may be various text reminding including, but is not limited to, "give blesses to XXX". The action reminding information may be various festival action items including, but is not limited to, various shopping items such as jewelries, flowers, a birthday cake, a performance ticket, etc., or may be action items of other types such as distributing electronic red envelopes, etc.

With respect to different associated applications and/or festivals, content and a format of the festival reminding information may be different. For example, today is Mother's Day. In the calling application, the text reminding information may include that today is Mother's Day and making a call to mom. In the short message application, the text reminding information may include that today is Mother's Day and sending a short message to mom.

The reminding information may be learnt automatically. For example, on the day of the festival, recommendation information may be obtained via network searching based on an attribute (an age, a habit, a gender, a job, etc.) of the object. For example, today is Mother's Day. The recommendation information showing blessings sent by most people and the most popular gift is obtained based on an interest and a habit of the mother of the user.

The action reminding information is not limited to the aforementioned shopping, ticket ordering, and red envelope distributing, etc. The reminding of the action may be changed according to the target object of the current application and the current festival. For example, regarding Mother's Day, gift recommendation items for a mother, a mother-in-law, and an aunt may be different. The differentiation of the objects may also be based on other attributes of the objects, such as an age, a gender, a habit, a job, etc.

### 3. Associated application and presented effect

The associated application may include, but is not limited to, at least one of the phonebook application, the short message application, the calling application, and the calendar application.

The festival reminding information may show its effect in various manners.

In some embodiments, when a plurality of objects are involved in the application, the objects may be sorted and an object that is related to the current festival is ranked in the first to remind the user. For example, in the phonebook application, when the user opens the application, the contact in the phonebook which matches with a target object of the current festival is ranked in the first in the phonebook. Optionally or additionally, a style and a format of items of the related contacts are differentiated from those of non-festival objects. An object related to the festival may be displayed adjacent to the item of the contact. For example, on Mother's Day, a carnation may be displayed adjacent to the items of all contacts related to Mother's Day. A birthday cake may be displayed adjacent to the items of all contacts of which birthday is on a current day. If some contacts have two festival attributes on the current day, e.g., today is mother's birthday and also is Mother's Day, the reminding may be mainly shown for the self-defined festival. Two symbolic objects may be simultaneously shown adjacent to the item of the contact, the carnation and the birthday cake.

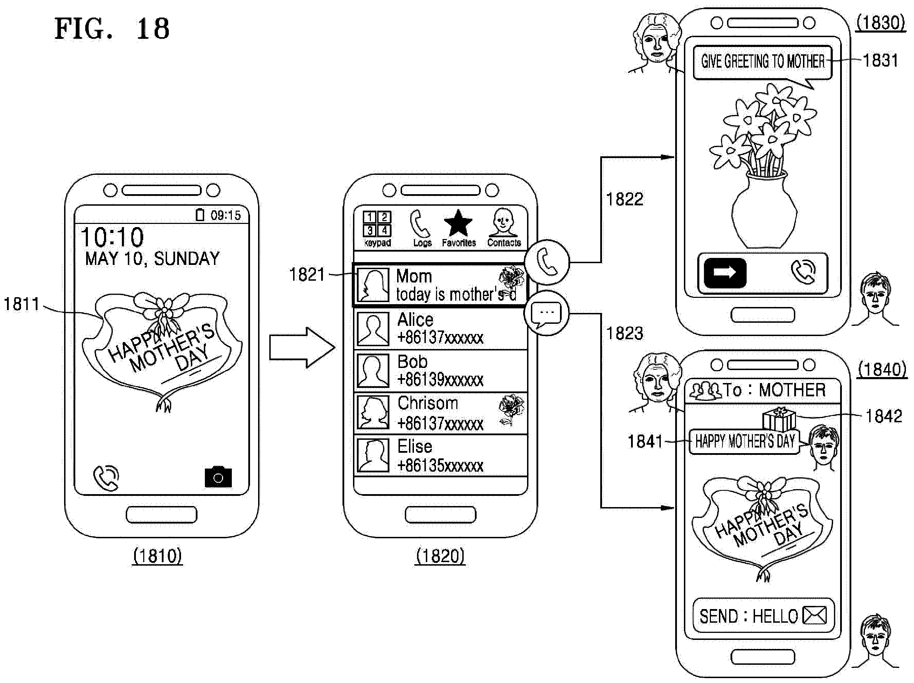

FIG. 18 illustrates an embodiment of triggering text reminding and/or action reminding related to content according to recognition with respect to the content. In the present embodiment, after the initial configuration of the mobile terminal device, the festival effect function is enabled. Today is Mother's Day. As illustrated in FIG. 18, the mobile terminal device detects that a current festival is Mother's Day and may apply a festival effect in an application (such as the lock screen application). For example, a background view 1811 of a lock screen 1810 may be changed to a picture related to Mother's Day. If the mobile terminal device further detects that the user has not yet sent festival blessings to a mother on that day, the item of a mother may be displayed in a first row 1821 when the user opens a phonebook application 1820. Thus, the user may directly make a call (1822) or may send a short message (1823). Optionally or additionally, when the user calls the mother for the first time on that day, a reminding sentence "Give greeting to your Mom" (1831) may be displayed on a calling interface 1830. If the user sends a short message including "Mother's day" and "celebrate" to the mother, the user may be reminded to buy the mother a gift, flowers, etc. through gift content 1842.

Embodiment 6: solution to content that displays conflict of application based on flexible policy

If there are a plurality of festivals at the same time and target objects of the festivals are the same object, e.g., today is Mother's day and also is the birthday of the mother, it is impossible to display a festival effect based on differentiation between objects. The embodiment 6 provides a solution to solve a conflict based on a flexible policy. That is, a festival related to the object may be determined according to a pre-configured policy.

The flexible policy or the pre-configured policy according to an embodiment may include, but is not limited to, any one of
a system default festival displaying priority,
a user-defined festival displaying priority,
to display in different time periods,
to display in different applications,
to display based on text content recognition,
nested displaying and
to display for user selection when application is triggered.

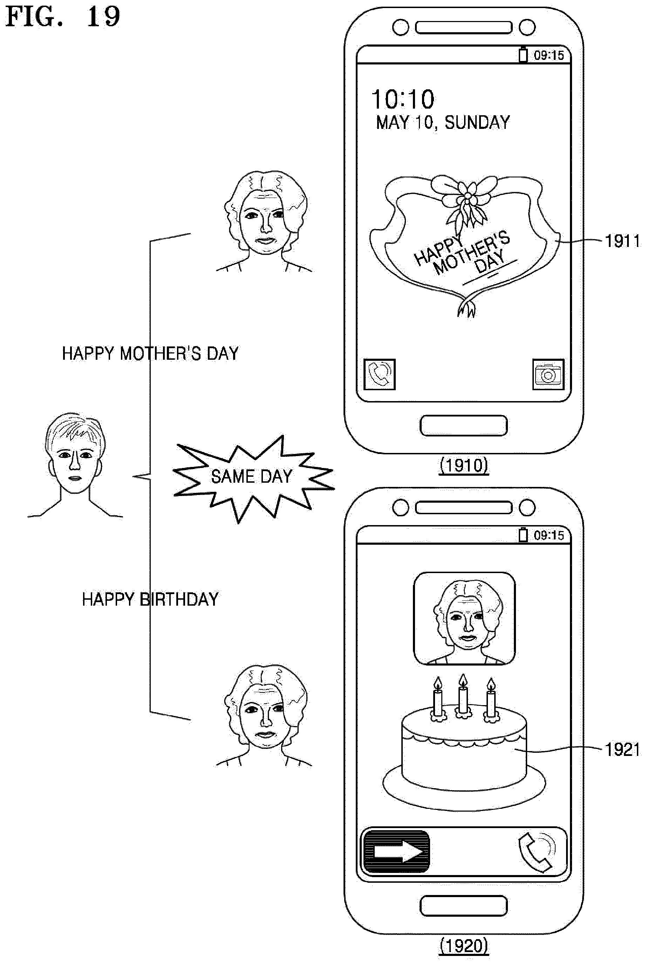

FIG. 19 illustrates an embodiment of displaying different festival effects in different applications. After the initial configuration of the mobile terminal device, the festival effect function is enabled. As illustrated in FIG. 19, the mobile terminal device detects that a current day is Mother's Day and is also the birthday of mom. The mobile terminal device displays a festival effect 1911 of Mother's Day in a lock screen application 1910, and displays a festival effect 1921 of the mother's birthday in an incoming call interface 1921 of mom.

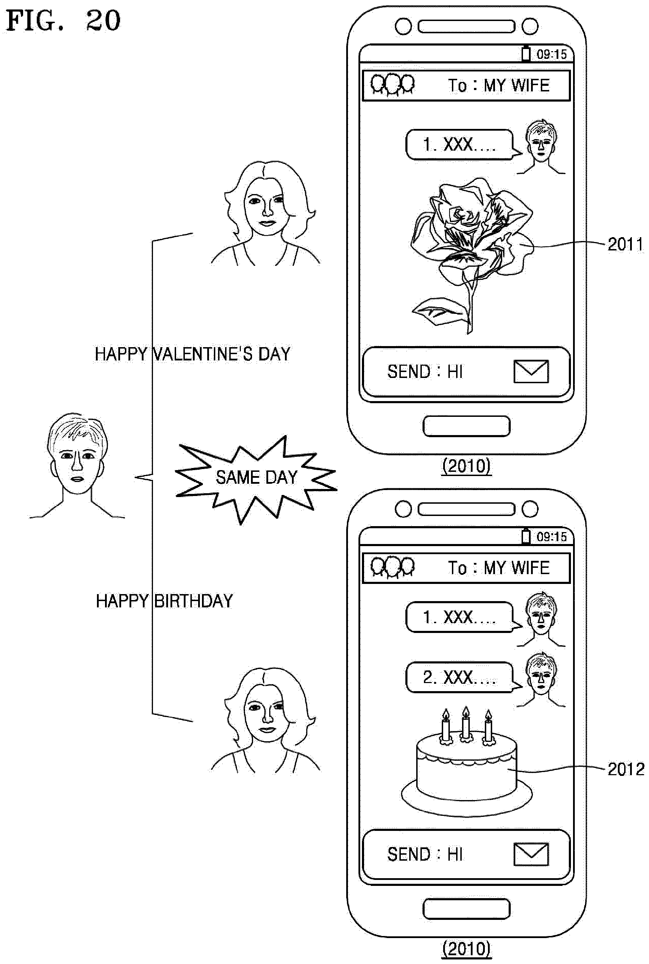

FIG. 20 illustrates an embodiment of rotationally displaying different festival effects in one application. As illustrated in FIG. 20, the mobile terminal device detects that a current festival is Valentine's Day and is also the birthday of a wife of the user. When a first short message is sent to the wife, a festival effect 2011 of Valentine's Day is displayed on a short message sending screen 2010. When a second short message is sent to the wife, a festival effect 2012 of the birthday is displayed on the short message sending screen 2010.

The flexible policy may also be the user-defined festival displaying priority. For example, today is both Mother's Day and the birthday of mom. If the self-defined festival and the public festival are on the same day, the priority of the self-defined festival is higher in default. Certainly, the user may make modification to the configuration. Thus, in the same application, the mobile terminal device shows the festival with the higher priority.

The flexible policy may include a priority order in displaying user-defined festivals. In the example in which today is both Mother's Day and the birthday of the mother, when a self-defined festival and a public festival are on the same day, a priority of the self-defined festival may be determined to be basically higher. The user may change the setting. Thus, the mobile terminal device may display an effect of a festival having a higher priority, according to the flexible policy in the same application.

The flexible policy may include displaying based on text content recognition. In the example in which today is both Mother's Day and the birthday of the mother, when a short message with content Happy Mother's Day is sent to the mother, a short message background is replaced with the festival effect of Mother's Day. When a short message with content Happy Birthday is sent to the mother, the short message background is replaced with the festival effect of birthday.

The flexible policy may include nested displaying. In the example in which today is both Mother's Day and the birthday of the mother, when a short message is sent to the mother, the festival effect of Mother's Day may be applied to the short message background, and the festival effect of happy birthday may be applied to the short message item background of short messages that are sent and received thereafter.

The flexible policy may also be selected flexibly by the user when the application is triggered. In the example in which today is both Mother's Day and the birthday of the mother, when a user sends a short message to the mother, a window may pop up to allow the user to select which one of the festival effect of Mother's Day or the festival effect of the birthday of a mother is to be applied.

In the aforementioned embodiment, the displaying policy of the short message application is to display in different time periods. The displaying policy of the application may be modified in the configuration menu. For example, the displaying policy of the application may be changed to nested displaying or displaying based on text content recognition, not displaying in different time periods.

Referring back to FIG. 1A, at block 103, the association between the display resource and the first application is removed. Block 103 is optional and thus may be skipped. In some embodiments, when the display resource is associated with multiple applications and/or multiple elements of the first application, the association between each application and/or each element and the display resource may be respectively removed. It should be understood that the process of removing the association is an inverse process of establishing the association. Therefore, the descriptions thereof are not provided.

In a daily life, the user generally receives much information related to a festival on a day of the festival, such as blessing information, festival event information or a festival greeting card. If the user wants to check the information, the user has to open a corresponding application. If the user wants to operate (such as response to) the information, the user has to respectively operate with respect to each piece of information which provides a bad festival effect experience for the user.

Therefore, another aspect of the present disclosure provides a solution for performing a quick browsing and/or quick operation to information corresponding to a pre-configured subject. The pre-configured subject may be a pre-configured festival, a pre-configured topic, a pre-configured person, or even any subject or no subject. In the following description, the quick browsing and quick operation with respect to the information are described with reference to a festival scenario as an example. That is, the pre-configured subject is festival-related information related received on the day of the festival. However, it should be noted that the present disclosure is not limited to the festival scenario. The present disclosure may be applied to a scenario in which information of various subjects needs to be collected.

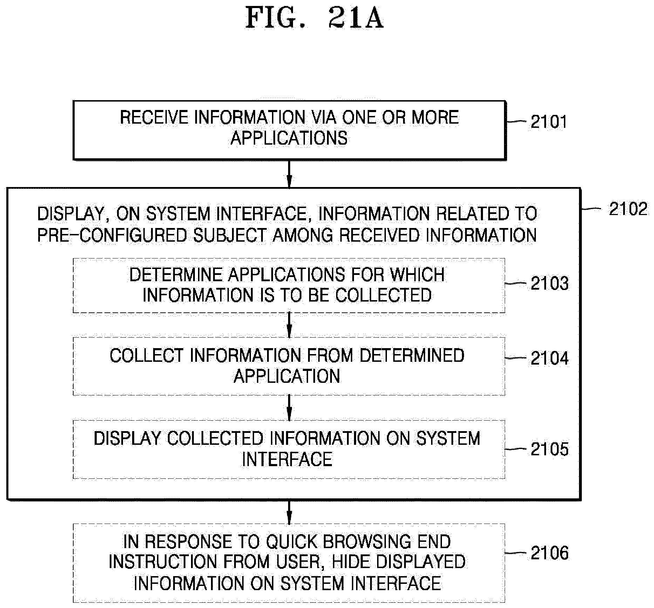

FIG. 21A illustrates a method of processing information, the method being performed by an electronic device, according to an embodiment.

As illustrated in FIG. 21A, at block 2101, the electronic device receives information via one or more applications.

Various applications that are used in interacting with external devices may be installed in the electronic device. The applications may include the short message application, the e-mail application and the various social applications. The electronic device may receive various kinds of information via these applications. On a day of a festival, the user may receive much festival-related information. The information is distributed in the corresponding applications.

At block 2102, information related to the pre-configured subject among the received information is displayed on the system interface.

In some embodiments, the pre-configured subject is the current festival. Therefore, in the embodiment, on the day of the festival, the mobile terminal device may collect the information received via various kinds of applications and may display the information on the system interface. Thus, the user can browse the received festival information quickly without opening the corresponding application, so that a user's festival effect experience is improved.

In more detail, the displaying of the information related to the pre-configured subject on the system interface may include, block 2103, determining the applications for which information is to be collected.

The mobile terminal device may determine the applications for which the information is to be collected, according to any one of a frequency that the user uses the application, an application selected by the user, a system default application, and all applications capable of receiving information.

In an embodiment, the mobile terminal device may collect all received information. In another embodiment, the mobile terminal device may collect information received by the system default application. For example, if the default application includes the short message application, the WeChat application and the QQ application, the mobile terminal device collect information received by these applications. In another embodiment, the mobile terminal device may also collect information received by an application with a relatively high usage frequency. For example, the first and two applications having a relatively high usage frequency are the short message application and the WeChat application. Thus, the mobile terminal device collects information received by these two applications. In another embodiment, the mobile terminal device may also provide a list of applications to the user, and the user selects, from the list, applications for which the information is to be collected. Thereafter, the mobile terminal device collects information according to the applications selected by the user.

At block 2104, information is collected from the determined application.

As described above, the collected information is appropriate for the pre-configured subject, such as the information related to the festival received on the day of the festival. The mobile terminal device may collect all information of this type. Optionally or additionally, type of the information may be further indicated, as such only the information of the indicated type is collected.

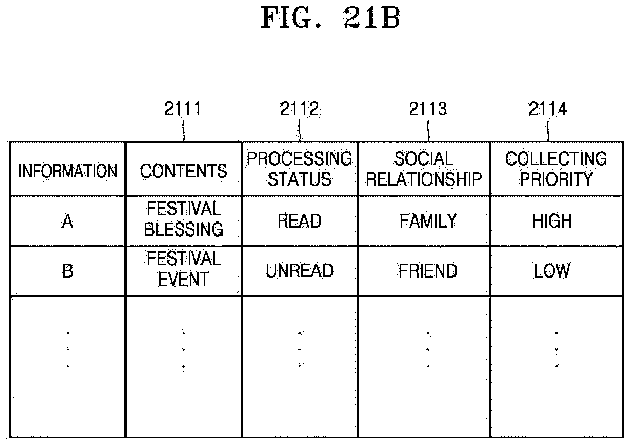

The information may be classified into different types according to various factors. Descriptions will be provided with reference to FIG. 21B.

Regarding the classification according to content 2111 of information, the information type may include at least one of festival blessing information, festival event information, festival discount information, a greeting card, and red envelope information (gift information), etc.

Regarding the classification according to a processing status 2112 or a read status of the information, the information type may include at least one of unread information, read information, information already replied to, forwarded information, and information already collected.

Regarding the classification according to a social relationship 2113 of two interacting parties with respect to the information, i.e. the classification based on the relationship between the two communication parties, the information type may include information sent by families, information sent by friends, information sent by colleagues, etc.

The classification may also be performed based on collecting priority 2114 of the information. The information type may include at least one of high priority, middle priority and low priority, etc. The priorities may be configured by the user.

In some embodiments, the mobile terminal device may collect all received information. In another embodiment, the mobile terminal device may provide the information types determined in the above different manners to the user, and the user may select a type of information to be collected. The mobile terminal device collects information according to the information type selected by the user. For example, after receiving information, the mobile terminal device determines whether a type of the information matches with the information type selected by the user. If matched, the information is collected as information to be displayed on the system interface. If not matched, the information is not collected. For example, the information type selected by the user is festival blessing information, unread information, information from families and friends, i.e., the user will collect unread festival blessing information sent by families and friends. Therefore, after receiving the information, the mobile terminal device determines whether the information is the festival blessing information according to the information content, whether the information is unread and whether the sender of the information is the family or a friend of the user. If the determination results are all yes, the information is collected and displayed on the system interface.

When the information type is determined according to the information content, a keyword may be retrieved from the information content and it is determined whether the keyword is a festival blessing keyword. If the keyword is a festival blessing keyword, it is determined that the information is festival blessing information. For example, a current festival is a spring festival. The festival blessing keyword is a happy spring festival. If the received information contains the keyword of the happy spring festival, the mobile terminal device determines whether the information is the festival blessing information.

When the information type is determined according to a relationship with respect to a communication party of the information, the determination may be performed based on the relationship configured by the user for each contact in the phonebook. For example, the user configures a relationship category such as a family, a friend, a colleague, etc., for each contact in the phonebook. When information transmitted by a contact in the category of a family is received, the mobile terminal device determines that the information is transmitted by the family.

A collecting priority of the information may be configured by the user. The information is collected according to a descending order of the priority. For example, the mobile terminal device may first collect information with the highest priority. If there is no information with the highest priority, the process proceeds to information with a next-level priority. For example, the collecting priority configured by the user is as follows: unread → not replied → read. The mobile terminal device first collects unread information. If there is no unread information at present, the mobile terminal device collects information which is not replied to. If there is no information which is not replied to, the mobile terminal device collects read information.

At block 2105, the collected information is displayed on the system interface.

In some embodiments, the system interface may include at least one of following interfaces including a lock screen interface, a main screen interface, and a notification bar interface.

If the system interface is the lock screen interface, the user may browse the received festival information without unlocking the screen, so that a festival effect experience of the user is further improved.

The collected information may be displayed on the system interface in various manners. In some embodiments, a statistical result of the collected information may be shown on the system interface. Then, in response to a quick-browsing instruction from the user, details of the collected information are displayed on the system interface.

The statistical result may include, but is not limited to, at least one of the number of pieces of the information, a type of the information, sender information (such as a name, an avatar, etc.) of the information, information (an application icon, etc.) of an application that receives the information.

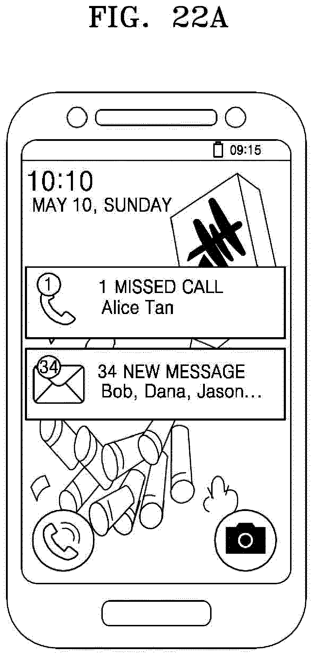

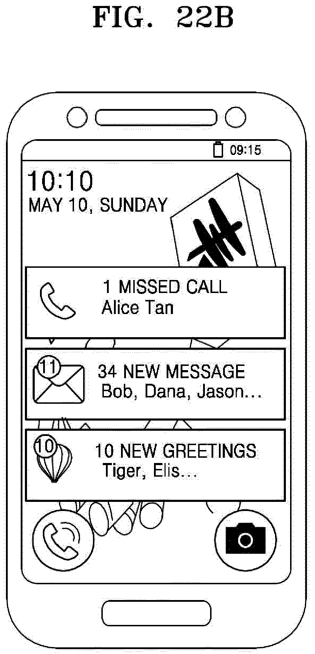

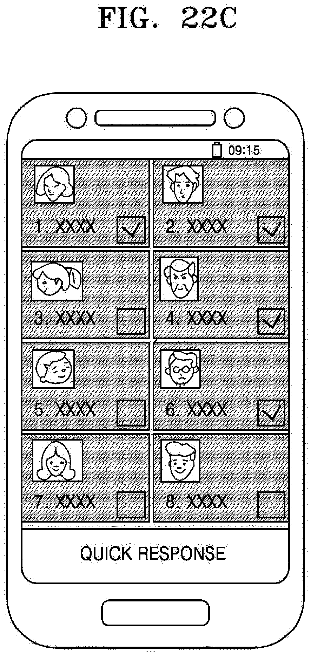

FIGS. 22A through 22C are schematic diagrams each showing a system interface of collected information, according to an embodiment. FIG. 22A shows a background of a normal lock screen. FIG. 22B shows statistical information of collected festival information on the lock screen. The statistical information includes the number of pieces (10 pieces) of information and a type of information (festival blessing information). When the user desires to watch details of the collected information, the user may trigger a quick browsing instruction with respect to the information. After receiving the quick browsing instruction with respect to the information, the mobile terminal device shows the collected information on the system interface, as shown in FIG. 22C.

The quick browsing instruction may be triggered in various manners including at least one of a voice, a button, a gesture, an augmented reality human-machine interaction interface and an external control (e.g., a device having a remote control function such as a stylus pen associated with the terminal device).

For example, in a case where the quick browsing instruction is a voice, if the user says a voice instruction "start to browse festival information", the mobile terminal device receives the voice instruction and performs voice recognition on the voice instruction so as to determine that the voice instruction is the quick browsing instruction. Therefore, the mobile terminal device shows the collected information on the system interface. The mobile terminal device may store a relationship between the voice instruction and the quick browsing instruction.

For example, following voice instructions may correspond to the quick browsing instruction in the form of a table, "start to browse festival information", "start quick browsing" and other instructions in Chinese, English or other languages. Obviously, the voice instruction is not limited to the aforementioned examples. The information may also be other information pre-configured by the user, provided that the user and the mobile terminal device know that the information is the voice instruction corresponding to the quick browsing instruction.

If the quick browsing instruction involves pressing a button, the button may be a hardware button of the mobile terminal device, such as a home button, a voice adjustment button, a power source button or a newly added button. The button may also be a virtual button on the user interface, such as a virtual button configured adjacent to the statistical information or a virtual button corresponding to a statistical information item. When the user hits the button in a pre-configured manner, the mobile terminal device determines whether the quick browsing instruction is received. The pre-configured manner may be short pressing, long pressing, short pressing for a certain time period, alternate short and long pressing, etc.

When the quick browsing instruction is a gesture, the gesture may be one performed by one hand or two hands. For example, the gesture may be a configured interface unlocking gesture. The gesture may be waving a hand, drawing a circle, drawing a rectangle, drawing a triangle, etc. The mobile terminal device may detect and recognize the gesture by using an existing gesture detecting device.

When the quick browsing instruction is from the external control, e.g., when the mobile terminal device is connected with a stylus pen and the mobile terminal device receives the quick browsing instruction transmitted by the stylus pen, the mobile terminal device displays the collected information on the system interface. The connection may be a physical connection or a wireless connection via at least one of following networks including Bluetooth, Ultra-Wideband (UWB), ZigBee, Wireless Fidelity (WiFi), a macro network, etc. The instruction may be an infrared instruction or a message transmitted by the external control.

Optionally or additionally, when the user wants to hide the collected information, a quick browsing end instruction with respect to information may be triggered. After receiving the quick browsing end instruction with respect to information, the mobile terminal device does not display the collected information on the system interface.

Returning to FIG. 21A, at block 2106, in response to the quick browsing end instruction from the user, the collected information is hidden on the system interface.

The quick browsing end instruction may be triggered in a similar manner to the quick browsing instruction, and descriptions thereof are not repeated herein.

In some embodiments, if the user triggers the quick browsing instruction by hitting the virtual button corresponding to the statistical information item, the statistical information item may be regarded as a festival information operation control that is a quick input by a festival information manager. The festival information manager may perform regular data operations such as quick display and quick response with respect to the collected festival information.

When the collected information is displayed, the mobile terminal device may only display limited information each time because a size of the screen is limited.

### Display manner

In some embodiments, the information may be displayed according to a pre-configured layout. There may be various types of layouts that may respectively correspond to different pieces of information being displayed. For example, a layout including 4 rows and 2 columns corresponds to 8 pieces of information. A layout including 9 rows and 1 column corresponds to 9 pieces of information. In some embodiments, the mobile terminal device may provide the various information layouts to the user. According to an information layout selected by the user, a display area of the system interface is divided into a plurality of areas, and each of the areas displays one or more pieces of information. For example, FIG. 22C is a schematic diagram showing a layout that is displayed when the user selects the layout including 4 rows and 2 columns.

In addition, when the collected information is displayed, if there are lots of pieces of information which cannot be completely displayed on the system interface of the mobile terminal device, the user may view the information by turning pages or sliding up and down. For example, in a case where there are 20 pieces of collected information and a user-selected information layout includes 4 rows and 2 columns, i.e., the mobile terminal device may display 8 pieces of information one time. The mobile terminal device may display the 20 pieces of collected information on 3 pages, wherein a first page displays the first 8 pieces of information, a second page displays the 9th through 16the information and the third page displays the 17the through 20th information. The mobile terminal device first displays a plurality of pieces of information of the first page. When a page down gesture by the user is detected, the mobile terminal device displays a plurality of pieces of information of the second page. When the page down gesture is detected for a second time, a plurality of pieces of information of the third page are displayed.

When the collected information is displayed, it is required for the mobile terminal device to display the information according to a pre-set order. The pre-set order may include at least one of an information-received time and an information type. For example, in FIG. 22C, the user-selected information layout includes 4 rows and 2 columns. The mobile terminal device may display information having the earliest receiving time on the first row first column, may display information having a second-earliest receiving time on the first row second column, and then may display information having a third-earliest receiving time.

The aforementioned information type may be determined according to various factors. In some embodiments, the mobile terminal device may classify the festival information into categories and then may display information of each category in turn. The mobile terminal device may classify and display the collected information, without limitation, in at least one of the following manners.

In a first manner, the mobile terminal device may classify the information according to applications that receive information. For example, the mobile terminal device classifies information received by the short message application into one category, and classifies information received by the WeChat application into another category.

When the information is displayed in each category, the mobile terminal device may display the information corresponding to each application according to the names of the applications. For example, the applications may be sorted according to a first letter of names of the applications, and the information of the applications may be displayed according to the sorting order.

The mobile terminal device may also display the information corresponding to each application in turn according to the frequency that each application is used by the user. For example, if the most-frequently used application is WeChat, the mobile terminal device displays the information received by WeChat on top.

In addition, the mobile terminal device may display the information corresponding to the applications in turn according to a displaying order of the applications pre-configured by the user. For example, the mobile terminal device pre-configures that information of the short message application is to be first displayed, and then information of the WeChat application is to be displayed. Thus, the mobile terminal device may display the information received by the short message application on top, and then may display the information received by the WeChat application.

In a second manner, the mobile terminal device may classify the information according to senders of the information. For example, information sent by a contact A may be classified into one category, and information sent by a contact B may be classified into another category.

When displaying various kinds of information, the mobile terminal device may display information sent by each contact according to names of the contacts. For example, the contacts may be sorted according to a first letter of their names, and a plurality of pieces of information of the contacts are displayed in turn according to the sorting results.

The mobile terminal device may display the information sent by each contact according to an interacting frequency between the user and the sender of the information. For example, if the interacting frequency between the user and the contact A is the highest, information sent by the contact A is displayed on top.

The mobile terminal device may also display the information sent by each contact according to a relationship between the user and the information sender, and a priority of the relationship. For example, a relationship between the user and the contact A is a family and a relationship between the user and the contact B is a friend. If it is assumed that a priority of the family is the highest, the mobile terminal device displays the information sent by the contact A on top, and then displays the information sent by the contact B in the following.

In addition, the mobile terminal device may also display information corresponding to each contact according to a displaying order of the contacts pre-configured by the user. For example, the mobile terminal device configures that the information is displayed in an order of contacts A, B, C, and D. Thus, the mobile terminal device displays the information sent by the contact A on top.

In a third manner, the mobile terminal device may classify information according to information types. The information types may be those described above with respect to the collected information. For example, in terms of information content, the information types may include festival blessing information, festival event information, festival bonus information, a greeting card, a red envelope (gift) information, etc. In terms of a processing status or read status of the information, the information types may include unread information, read information, information already replied to, forwarded information, already-collected information, etc. In terms of a relationship between two communication parties of the information, the information types may include family-sent information, friend-sent information, and colleague-sent information.

The mobile terminal device may classify the information according to at least one of the information types. The mobile terminal device may provide, to the user, the information type determined in various manners. The user selects a required information type. The mobile terminal device classifies the information according to the information type selected by the user. For example, the information type selected by the user is unread information and information already replied to. The mobile terminal device may classify the unread information into one category and may classify the information already replied to into another category. As another example, the information type selected by the user is festival blessing information and festival event information. The mobile terminal device may classify the festive blessing information into one category and may classify the festival event information into another category.

When displaying the various kinds of information, the mobile terminal device may display information of each information type according to the displaying order of each information type pre-configured by the user. For example, the mobile terminal device pre-configures that the festival blessing information and the festival event information are to be displayed in turn. The mobile terminal device displays the festival blessing information on top.

When the classified information is displayed on the system interface, each category of information may be framed to be different from the others.

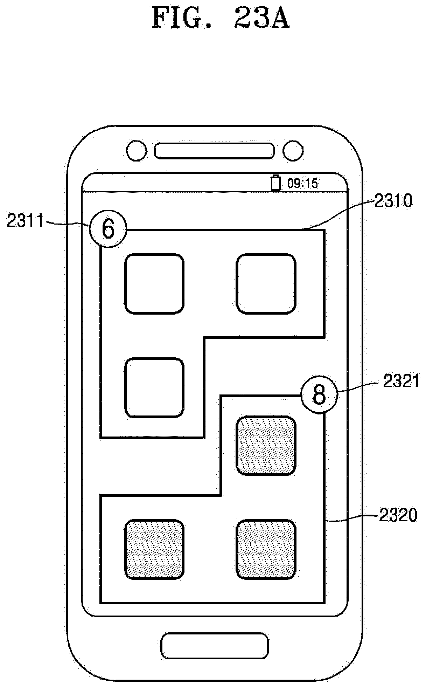

FIGS. 23A through 23C each shows information that is collected after being classified in the three manners, according to an embodiment.

FIG. 23A shows the classification and the displaying of the collected information according to the applications that receive information (the first manner). For example, the applications are the short message application and the WeChat application. Therefore, the collected information may be classified into two categories. Each category is framed to be different from the other category. In addition, the number of pieces of information in each category may be identified on a frame of the category. For example, as shown in FIG. 23A, a category 2310 of the short message application has 6 pieces of information 2311, and a category 2320 of the WeChat application has 8 pieces of information 2321.

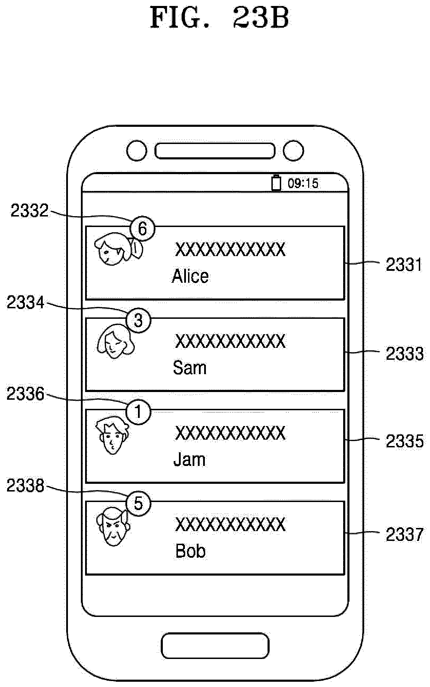

FIG. 23B shows the classification and the displaying of the collected information according to the senders of information (the second manner). For example, the senders of the information include Alice, Sam, Jam, and Bob. Therefore, the collected information may be classified into four categories. Each category may be framed to be different from another category. In addition, various identifiers of the senders of the information may be used to differentiate between the senders, the identifiers including an avatar, a nickname, a telephone number, etc. In addition, the number of pieces of information in each category may be identified on a frame of the category. For example, as shown in FIG. 23B, the number of pieces of information 2331 sent by Alice is 6 pieces 2332, the number of pieces of information 2333 sent by Sam is 3 pieces 2334, the number of pieces of information 2335 sent by Jam is 1 piece 2336, and the number of pieces of information 2337 sent by Bob is 5 pieces 2338.

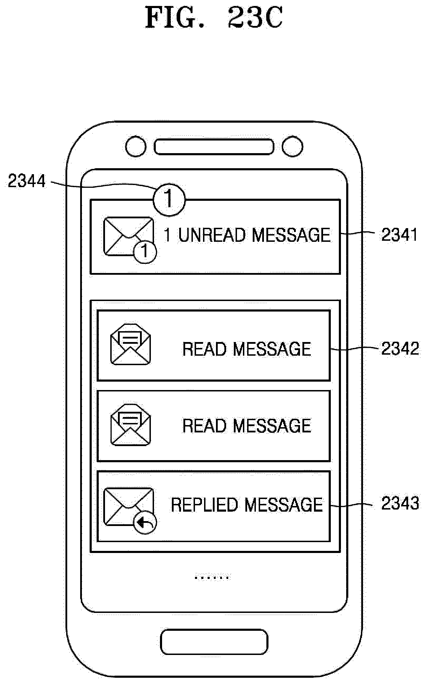

FIG. 23C shows the classification and the displaying of the collected information according to the information types of the received information (the third manner). For example, the types are determined according to the processing status or reading status of the information in the embodiment as shown in FIG. 23C, e.g., unread information, read information and information already replied to. Each category may be framed to be different from another category. In addition, various identifiers each corresponding to the information processing status may be used to differentiate from different information processing statuses, e.g., a unread information icon 2341, a read information icon 2342, and a replied information icon 2343. In addition, the number of pieces of information in each category may be identified on a frame of the category. For example, the number of pieces of unread information 2344 is 1 piece as shown in FIG. 23C.

Optionally or additionally, in some embodiments, in a case where the collected information is classified in one of the aforementioned manners, and a category includes multiple pieces of information, the mobile terminal device may further sort the information within the category. In some embodiments, the information may be sorted according to a receiving time of the information. In some embodiments, the mobile terminal device may secondly classify a plurality of pieces of information within each category in one of the manners, wherein the plurality of pieces of information were firstly classified. If a category still contains a plurality of pieces of information after the second classification, third classification and the like may be performed.

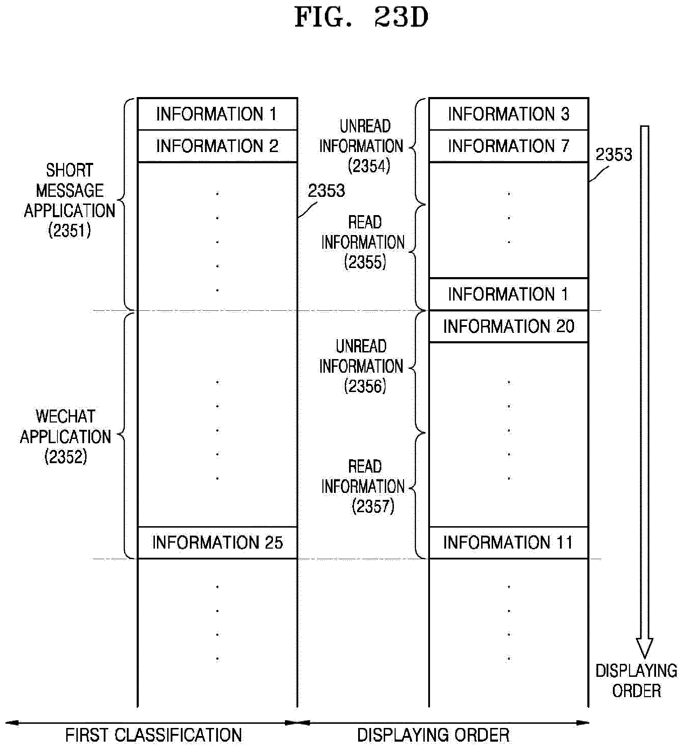

For example, referring to FIG. 23D, the mobile terminal device performs first classification on information collected according to the applications that receive the information (the first manner). The applications include the short message application and the WeChat application. Therefore, two categories are obtained after the first classification. In the example of FIG. 23D, two categories of a short message application category 2351 and a WeChat application category 2352 are generated. The number of pieces of information corresponding to the short message application is 10, and the number of pieces of information corresponding to the WeChat application is 15. With respect to the 10 pieces of information corresponding to the short message application and the 15 pieces of information corresponding to the WeChat application, second classification is performed to respectively classify the information into unread information 2354 and 2356 and read information 2355 and 2357 (the third manner). In this regard, four categories 2354, 2355, 2356, and 2357 are obtained. The number of pieces of unread information received by the short message application is 6, and the number of pieces of read information received by the short message application is 4. The number of pieces of unread information received by the WeChat application is 10, and the number of pieces of read information received by the WeChat application is 5.

When information is displayed after the classification is performed multiple times, the mobile terminal device may sort a plurality of pieces of information according to categories (also referred to as first categories) due to the first classification, and then may sort a plurality of pieces of information according to categories (referred to as second categories) due to the second classification. The plurality of pieces of sorted information may be stored in a memory 2353. With respect to the information after the classification is performed multiple times, the mobile terminal device may determine a displaying order of each category according to the sorting results of the categories of each classification. For example, the first categories according to the first classification by the mobile terminal device are the short message application category and the WeChat application category. The sorting results of the mobile terminal device are as follows: the short message application category 2351 → the WeChat application category 2352. The second categories of the second classification by the mobile terminal device include the unread information 2354 and 2356 and the read information 2355 and 2357. The sorting results of the second categories of the mobile terminal device are as follows: unread information → read information. Therefore, the mobile terminal device displays the following in turn on the system interface: the unread information 2354 received by the short message application → the read information 2355 received by the short message application → the unread information 2356 received by the WeChat application → the read information 2357 received by the WeChat application.

If a category still includes multiple pieces of information after final classification, the mobile terminal device may display information in the category according to the receiving time of the information.

### Viewing manner:

It may be understood that, content of information received by the mobile terminal device may be different. If certain information contains much content, the content cannot be completely displayed in an area allocated by the mobile terminal device. In an embodiment, the mobile terminal device may display a portion of the content in the corresponding area. The user may view the complete content of the information via a complete view instruction. In another embodiment, the mobile terminal device may adjust a font size of the information to be decreased, thereby completely displaying the information in the corresponding area. The user may zoom out the information via a zoom-out view instruction. The complete view instruction and the zoom-out view instruction may be triggered and generated by using various manners including at least one of a voice, a button, a gesture, a reality augmented man-machine interaction interface and an external controller (e.g., a device having a remote control function such as a stylus pen connected with the device). The complete view instruction and the zoom-out view instruction may be triggered in a similar manner to the quick browsing instruction, and the process thereof is not repeated herein.

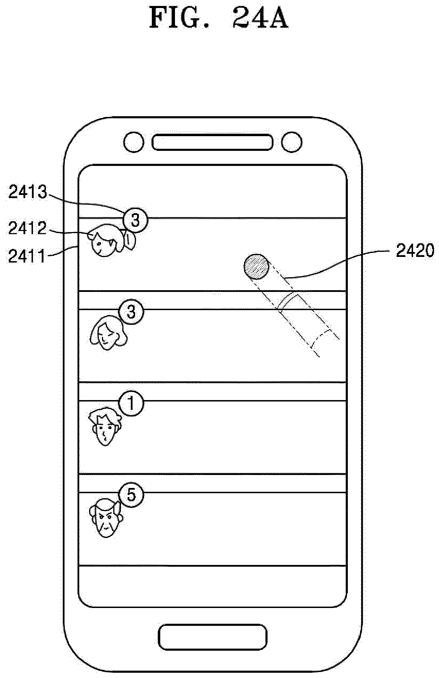

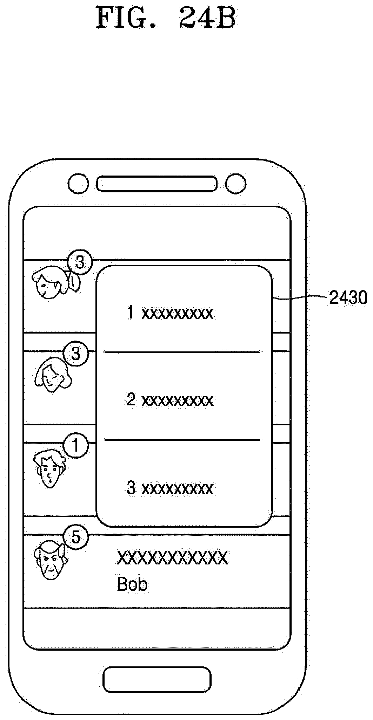

FIGS. 24A and 24B show system interfaces that each displays information, according to an embodiment of the present disclosure.

FIG. 24A shows a schematic diagram of partially displaying the information. The collected information is classified and displayed according to categories 2411 of senders 2412 of the information, wherein the senders include Alice, Sam, Jam and Bob. As shown in FIG. 24A, the number of pieces of information 2413 sent by Alice is 3. Therefore, only a portion of content may be displayed.

FIG. 24B is a schematic diagram showing the complete displaying 2430 of information when a stylus pen 2420 hovers over the information. When the stylus pen hovers over the category 2411 corresponding to the sender Alice, all of the 3 pieces of information sent by Alice may be displayed in the form of a list 2430.

In addition to browsing festival information quickly, the user may need to response to or forward multiple pieces of festival information on a festival day. Therefore, an embodiment provides a quick operation function based on the quick browsing, which enables an operation with respect to at least one piece of collected information in response to the quick operation instruction from the user. The user may select one or more pieces of information so as to perform the operation. That is, the mobile terminal device may perform a batch operation on the information, the batch operation including a batch response, a batch transmission, etc. The operation by the user with respect to the information may include at least one of responding, sending, deleting, collecting and storing, copying to a clipboard, sending to social software, etc.

In some embodiments, when the mobile terminal device displays the collected information on the system interface, the user may select the information on which the quick operation is to be performed, and may trigger the corresponding quick operation with respect to the selected information.

The information on which the quick operation is to be performed may be selected, without limitation, in at least one of the following manners.

In a first manner, the information is selected through a voice. The voice instruction said by the user includes a related parameter for selecting the information. The related parameter includes at least one of a position of the information in the system interface, an application that receives the information, an information type (types determined in different manners), information receipt, an information receiving time, etc. For example, the user says a voice instruction "response to information sent by mom". The mobile terminal device receives the voice instruction, and performs voice recognition with respect to the voice instruction, thereby determining that selected information is the information sent from a contact with a mom's name.

After the information is selected via the voice, the quick operation instruction may be triggered via at least one of the following the voice, the button, the gesture, the reality augmented man-machine interaction interface and the external controller (e.g., a device having a remote control function such as a stylus pen connected with the terminal device).

If the voice is also used in triggering the quick operation instruction, the voice instruction said by the user may include not only the related parameter of the selected information but also may include a type of the quick operation (the response, the transfer, etc.). For example, the user says a voice instruction "response to information in a second row". The mobile terminal device receives the voice instruction and performs voice recognition with respect to the voice instruction, thereby determining that the voice instruction is a quick response instruction and target information is the information in the second row. Therefore, the mobile terminal device displays a response interface of the information in the second row on the system interface.

When the quick operation instruction is triggered due to a button, the button may be a hardware button such as a home button, a voice adjustment button, a power source button or a newly added button on the mobile terminal device. The button may also be a virtual button such as a quick operation virtual button configured on the system interface. When the user presses the button in the pre-configured manner, the mobile terminal device determines that the quick operation instruction is received. The pre-configured manner may include short pressing, long pressing, short pressing for a predefined number of times, alternate short and long pressing, etc. For example, after the user selects information that requires a quick response, if the user shortly hits the quick response virtual button on the system interface, the mobile terminal device determines that the quick response instruction is received, performs the quick response on the information selected by the user, and displays a response interface on the system interface.

If the quick operation instruction is triggered due to a gesture, the gesture may be one performed by one or two hands. The gesture may be a pre-configured screen unlocking gesture. Content of the gesture may be waving a hand, drawing a circle, drawing a rectangle, drawing a triangle, etc. The mobile terminal device may detect and recognize the content of the gesture by using an existing gesture detecting device. For example, after the user selects the information that requires a quick response, if the user draws an unlocking gesture on the screen, the mobile terminal device determines that the quick response instruction is received, performs a quick response with respect to the information selected by the user, and displays the response interface on the system interface.

If the quick operation instruction is triggered due to the external controller, the external controller may be a stylus pen. For example, if the mobile terminal device is connected with a stylus pen, and the mobile terminal device receives the quick response instruction transmitted by the stylus pen, the mobile terminal device displays the response interface on the system interface. The user may execute the quick operation instruction by pressing a button of the stylus pen. Alternatively, when the stylus pen touches an area in which the selected information is located, the mobile terminal device determines that the quick operation instruction is received, or when the stylus pen hovers over the area in which the selected information is located, the mobile terminal device determines that the quick operation instruction is received.

In a second manner, the information is selected via a button. The button may be a hardware button on the mobile terminal device or a virtual button on the user interface. For example, a check box may be configured to be adjacent to each part of information on the system interface. If the user selects the check box, the mobile terminal device determines to perform the quick operation on the information. The user may select one or more pieces of information to perform a quick response via the button.

In some embodiments, in order to allow the user to quickly select a plurality of pieces of information, the mobile terminal device may classify a plurality of pieces of information displayed on the system interface. A plurality of pieces of information in each category are aggregated and displayed. For example, each category may be framed and a check box may be configured inside the frame. If the user selects the check box in the frame, the mobile terminal device determines that the user has selected a quick operation to be performed on information in this category.

After the information is selected by using the button, the quick operation instruction may be triggered due to at least one of the voice, the button, the gesture, the reality augmented man-machine interaction interface and the external controller (e.g., the device having a remote control function such as a stylus pen connected with the terminal device).

If the quick operation instruction is triggered due to the voice, the voice instruction said by the user contains a type of an operation (a response, a transfer, etc.). For example, when the user says "response" as a voice instruction, the mobile terminal device receives the voice instruction and performs voice recognition with respect to the voice instruction, thereby determining that the voice instruction is a quick response instruction. Therefore, the mobile terminal device displays, on the system interface, a response interface for the information selected by the user.

If the quick operation is triggered due to the button, the button may be a hardware button on the mobile terminal device or a virtual button such as a quick operation virtual button configured on the system interface. When the user presses the button in the pre-configured manner, the mobile terminal device determines that the quick operation instruction is received. For example, after the user selects the information that requires a quick response, if the user shortly presses the quick response virtual button on the system interface, the mobile terminal device determines that the quick response instruction is received, performs the quick response with respect to the information selected by the user, and displays a response interface on the system interface.

In addition, the user may select the information and may trigger the quick operation by performing one button pressing operation. For example, the user may give long pressing to an area corresponding to the information that requires the quick response. According to the input, the mobile terminal device determines that the user wants to perform the quick response with respect to the information. In this regard, the mobile terminal device may directly display the response interface on the system interface. Alternatively, the user clicks an area corresponding to a category of the information. The mobile terminal device determines that the user wants to perform the quick response with respect to the information in the category. In this regard, the mobile terminal device directly displays a response interface on the system interface.

If the quick operation instruction is triggered due to the gesture, the gesture may be performed by one or two hands. The gesture may be a pre-configured screen unlocking gesture. For example, after the user selects the information that requires a quick response, if the user draws an unlocking gesture on the screen, the mobile terminal device determines that the quick response instruction is received, performs the quick response with respect to the information selected by the user, and displays the response interface on the system interface.

If the quick operation instruction is triggered due to the external controller, the external controller may be a stylus pen. For example, when the mobile terminal device is connected with a stylus pen, and the mobile terminal device receives the quick response instruction transmitted by the stylus pen, the mobile terminal device displays the response interface on the system interface. The user may trigger the quick operation instruction by pressing a button of the stylus pen. Alternatively, when the stylus pen touches the area in which the selected information is located, the mobile terminal device determines that the quick operation instruction is received, or when the stylus pen hovers over the area in which the selected information is located, the mobile terminal device determines that the quick operation instruction is received.

In a third manner, the information is selected duet to a gesture. The gesture may be implemented by one or two hands. For example, if the user draws a circle, the mobile terminal device determines that the user desires to perform a quick operation on all information displayed on the system interface.

After the information is selected due to the gesture, the quick operation instruction may be triggered due to at least one of the voice, the button, the gesture, the reality augmented man-machine interaction interface and the external controller. The triggering of the quick operation instruction is similar to that described above, and descriptions thereof are not repeated herein.

In a fourth manner, the information is selected due to the external controller. The external controller may be a stylus pen. When the mobile terminal device is connected with the stylus pen, if the stylus pen touches an area of information or a category of the information, the mobile terminal device determines to perform a quick operation on a piece of the information or the category of the information. Alternatively, when the stylus pen hovers over the area and category of the information, the mobile terminal device determines to perform the quick operation on the information or the category.

After the information is selected due to the external controller, the quick operation instruction may be triggered due to at least one of the voice, the button, the gesture, the reality augmented man-machine interaction interface and the external controller. The triggering of the quick operation instruction is similar to that described above, and descriptions thereof are not repeated herein.

The user may select the information and may simultaneously trigger the quick operation through the external controller. For example, when the stylus pen touches the area or category of the information for a certain time period, the mobile terminal device may directly display a response interface on the system interface. Alternatively, when the stylus pen hovers over the area or category of the information for a certain time period, the mobile terminal device determines that the user wants perform a quick operation on the information or the category of information. In this regard, the mobile terminal device may directly display the response interface on the system interface.

In some embodiments, the operation with respect to the collected information may include any one of an operation with respect to information of an application which corresponds to the collected information, and an operation with respect to information of an operating interface provided by the system interface.

In some embodiments, after the quick operation instruction is detected, the mobile terminal device may open a corresponding application to perform an operation such as a response. For example, the mobile terminal device determines that the user desires to perform a quick response operation with respect to a short message A. Then, the mobile terminal device opens a response interface of the short message A in the short message application, i.e., the mobile terminal device opens the short message application and automatically regards a sender of the short message A as a receiver of a response message. If the user selects to perform a batch response with respect to a plurality of pieces of information, e.g., the user wants to perform a quick response operation with respect to short messages A, B and C, the mobile terminal device opens the short message application, and automatically regards senders of the short messages as receivers of a response message.

In another embodiment, the mobile terminal device may further provide a uniform operating interface on the system interface, e.g., a response interface. That is, the mobile terminal device does not need to open the application to perform the quick operation. After the user determines to response to the information, the mobile terminal device may transmit content that the user wants to response and receipt of response information to the corresponding application, and the application sends the response information.

The response interface may include at least one of information receipt, response information content and a response button.

For example, when the user selects to perform the quick response operation with respect to the short messages A, B and C, the mobile terminal device displays a uniform response interface on the system interface, and automatically configures senders of the short messages as receivers of the response information. After the user clicks the response button, the mobile terminal device transmits the response content and the receipt of the response information to the short message application. The short message application transmits the response content to the corresponding receiver.

Through the above manner, even if the information to which the user desires to perform the batch response operation includes information from different applications, the mobile terminal device may perform the quick operation through the uniform response interface.

For example, the user selects to perform the quick response operation with respect to short messages A and B and a WeChat message C, and the mobile terminal device displays the uniform response interface on the system interface and automatically regards senders of the above messages as receivers of response information. When the user clicks the response button, the mobile terminal device transmits response content and the short messages A and B to the short message application, so that the short message application transmits the replay content to the receivers. The mobile terminal device provides the response content and the sender of the WeChat message C to the WeChat application, so that the WeChat application transmits the response content to the corresponding receiver.

In some embodiments, during the quick response, the response content of the user may include at least one of a short message, a greeting card, a picture, an audio file, an e-mail, etc.

In some embodiments, the mobile terminal device may provide response content or a greeting card to a response template. For example, the mobile terminal device may add a template button on the uniform response interface. When the user clicks a button to add a template, the mobile terminal device may provide a list of various templates to the user. When the user selects a template, the mobile terminal device automatically adds content of the template to the response content on the response interface.

An information template may be a complete template that requires no addition or modification, e.g., "Happy new year! Best wishes to you and your family!".

A salutation, a main text, and a complimentary close of the information template may each be configured. In a batch response, the response content may be the same, whereas the salutation may be changed according to a receiver of the response information.

In some embodiments, the mobile terminal device may provide a virtual button for automatically adding a salutation on the response interface. When the user clicks the virtual button, the mobile terminal device automatically retrieves, as the salutation, a name of a contact acting as the receiver of the response information, and adds the salutation into a corresponding position or adds a uniform salutation to a pre-configured position. Position information indicating the pre-configured position in the response content may be used, wherein the uniform salutation is to be arranged at the pre-configured position. The mobile terminal device may place content, which corresponds to the virtual button, at the pre-configured position indicated by the position information corresponding to the virtual button. For example, when the user replies to a short message, the mobile terminal device configures a virtual button for automatically adding a salutation on the response interface. When the user clicks the button, the mobile terminal device automatically adds a contact name of the user through a corresponding operation by retrieving the contact name as the salutation. In addition, after the user clicks the response button, the mobile terminal device may allow a window to pop up to ask the user whether to automatically add the salutation. When the user clicks a confirmation button in the window, the mobile terminal device automatically adds the contact name of the user by retrieving the contact name as the salutation.

Optionally or additionally, in some embodiments, the mobile terminal device may also configure a virtual button at a position to which the salutation is to be added in the template. When the user clicks the virtual button, the mobile terminal device automatically adds the uniform salutation or a contact name of a receiver of the response information to the position.

When the user selects to perform a batch response, i.e., when the response information has a plurality of receivers, the response information may have a plurality of salutations. When the user clicks the virtual button, the mobile terminal device automatically retrieves, as the salutations, contact names of all receivers of the response information and adds them at corresponding positions.

In another embodiment, the mobile terminal device may provide a virtual button on the response interface so as to automatically add the complimentary close. When the user clicks the virtual button, the mobile terminal device automatically adds a name of the user (which may be obtained from the phonebook) on a corresponding position corresponding to the complimentary close or adds a pre-configured complimentary close on the pre-configured position. In addition, after the user clicks the response button, the mobile terminal device may allow a window to pop up to ask the user whether to automatically add the complimentary close. When the user clicks a confirmation button in the window, the mobile terminal device automatically adds the complimentary close.

In addition, the mobile terminal device may configure a virtual button at a position to which the complimentary close is required to be added in the template. When the user clicks the virtual button, the mobile terminal device automatically adds a pre-configured complimentary close or the name of the user on the position.

As described above, the response content of the user may include a greeting card. In some embodiments, a greeting card template may be provided. The greeting card template is not limited to a static text and/or a picture. The greeting card template may also include at least one of an animation, audio and video content.

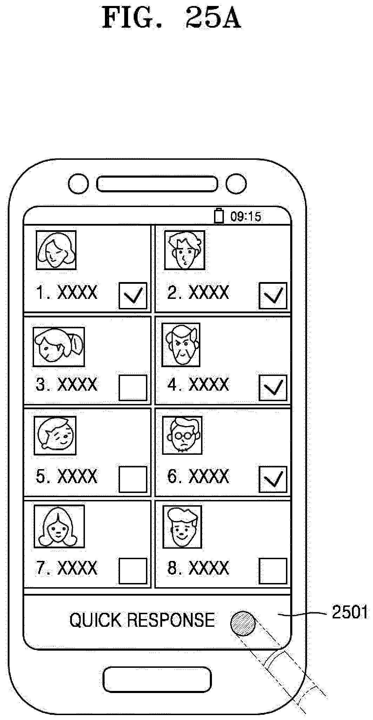

FIGS. 25A through 25D are schematic diagrams each showing the quick operation with respect to the collected information.

FIG. 25A is a schematic diagram showing a click on a quick response. For example, on the system interface showing the details of the collected information, a quick response virtual button 2501 is provided. When the user clicks the virtual button 2501, a quick response function with respect to a plurality of pieces of selected information is triggered. In the example as shown in FIG. 25A, the user selects the first, second, fourth and sixth information.

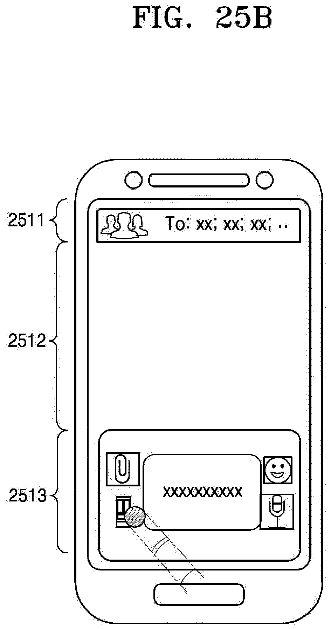

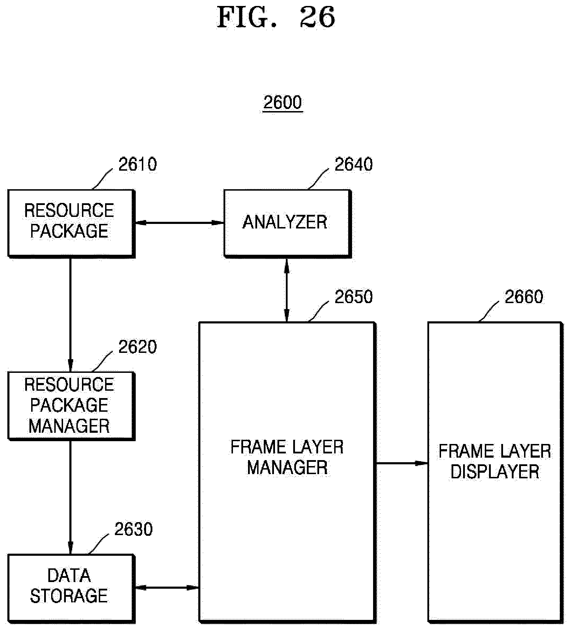

FIG. 25B is a schematic diagram showing a uniform response interface. In the example as shown in FIG. 26B, the response interface includes an information receipt area 2511, a response information content area 2512, and an input area 2513. The information receipt area is automatically configured of senders of a plurality of pieces of processed information. In the input area, virtual buttons for a file attachment, a template, a voice input and an emotion input are provided. In the present example, the user selects an input by using a template.

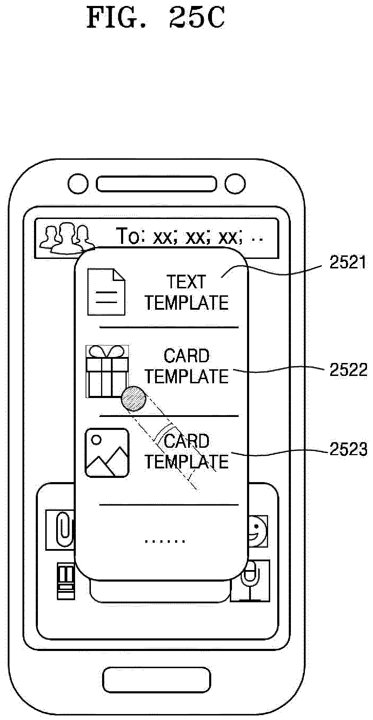

FIG. 25C is a schematic diagram showing an interface after the user selects an input by using the template. As shown in FIG. 25C, the interface displays various templates, e.g., a text template 2521, a greeting card template 2522, a picture template 2523, etc. which are to be used by the user. In the present example, the user selects the greeting card template 2522.

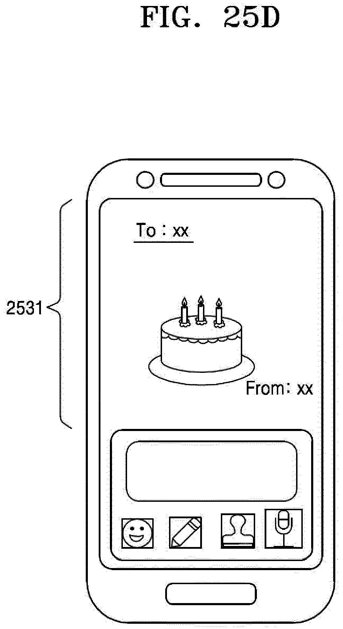

FIG. 25D is a schematic diagram showing the interface after the user selects the greeting card template 2522. As shown in FIG. 25D, the greeting card template 2522, e.g., a picture of a birthday cake, blessings of a happy birthday, or the like which are selected by the user, is loaded and displayed on a response information area. In addition, a configuration may be performed with respect to each of a salutation, a main text and a complimentary close.

After detecting that an operation by the user is finished, the mobile terminal device may return to the system interface. In some embodiments, information displayed on the system interface may have a corresponding update. For example, the response information with respect to each piece of information may also be displayed in a displaying area of the information. Alternatively, a response identifier may be configured in the displaying area of the information. After the user performs a quick response with respect to some information, if the user selects an interface so as to quickly view unread information, the information displayed on the system interface may have a corresponding change. Therefore, the mobile terminal device may collect and classify the information again, and displays the collected and classified information on the system interface.

The aforementioned descriptions describe functions of quickly watching the information and quickly performing an operation (such as a response) with respect to the information collected with reference to the festival subject. One of ordinary skill in the art would understand that the mobile terminal device may provide the above functions to the user with respect to other subjects. The descriptions thereof are not repeated herein.

It should be noted that, although the operations of the method provided by the present disclosure are described according to the particular sequence as shown in the drawings, it is not implied or required that the operations must be performed according to the sequence, or all of the operations must be executed to obtain an expected result. In fact, the operations in the drawings may be executed according to other sequences. In some embodiments, the association between the display resource and the application may be first established, and then the display resource may be obtained. For example, a data tunnel may be established between the first application and the second application. Afterward, when the pre-configured condition is satisfied, e.g., when a particular date arrives, data of the second application may be retrieved and provided to the first application that performs displaying. Additionally or alternatively, some operations may be omitted, some blocks may be combined into one block, and/or one block may be divided into a plurality of blocks.

As described above, in some embodiments, the display resource may be provided in the form of a resource package. The resource package may include an image resource and a configuration file related to the image resource. In some embodiments, the configuration file may be generated by an Extensible Markup Language (XML) with pre-configured labels. Therefore, the configuration file is also referred to as an XML file.

The extensible markup language is a markup language used in marking up an electronic file to make it in a particular structure. The extensible markup language may be used in marking up data and defining a data format, and is a source language allowing the user to define a user's markup language. The XML is designed to transmit information.

In order to transmit a dynamic view, the present disclosure provides an animation XML specification and a control XML specification, so as to provide an applying method for an animation and a control layout which may be transmitted or downloaded.

The animation applying method provides an animation attribute parameter interface to facilitate XML definition and sentence analysis (parsing) by mainly re-encapsulating an animation API of the electronic device according to the pre-configured animation XML specification. By parsing an XML file complied by using the XML analyzing module of the same specification, the parameter in each label attribute of the XML file and image resource on which the XML is relied may be converted into animation views to be added to the elements of the application.

Similarly, the control applying method is mainly to re-encapsulate the layout API interface of the electronic device according to the predefined control XML specification, so that the parameter in each label attribute of the XML file and image resource on which the XML is relied may be converted into layout views to be added to the elements of the application.

In some embodiments, the animation XML specification provides a special definition to the labels. For example, <set/> denotes a root label of the whole XML file, <view/> denotes a view layer and is a parent label, and its child label is the animation label. Hereinafter, some examples of the animation label are shown.
- <alpha />: Transparent animation
- <rotate />: Rotated animation
- <scaleX />: X axis-scaled animation
- <scaleY />: Y axis-scaled animation
- <translateX />: X axis-translated animation
- <translateY />: Y axis-translated animation
- <round />: Round moved animation
- <ellipse />: Ellipse moved animation
- <parabola />: Parabola moved animation
- <sinX />: Sin X animation
- <sinY />: Sin Y animation
- <frame />: Slide frame animation
- <ImageResource />: Frame animation

One view label may include a plurality of animation labels, and the animation labels are parallel.

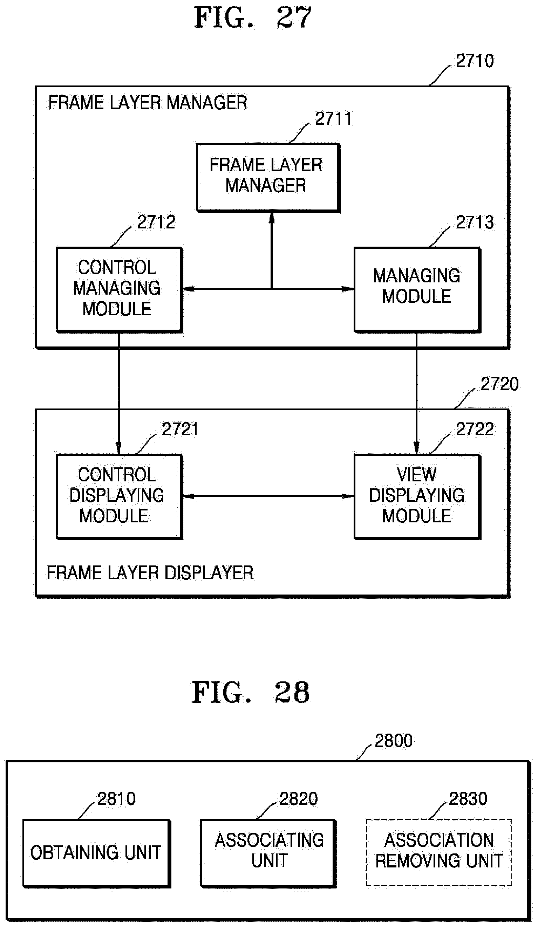

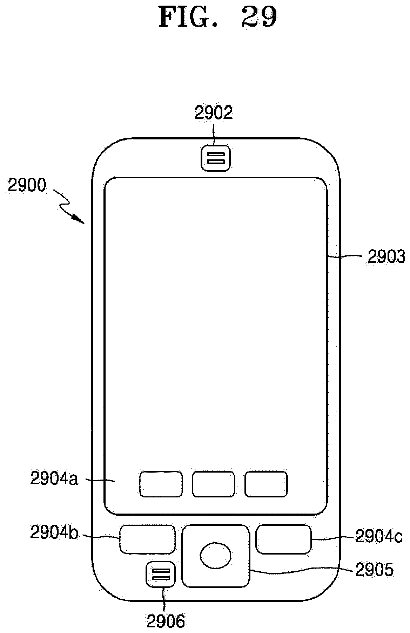

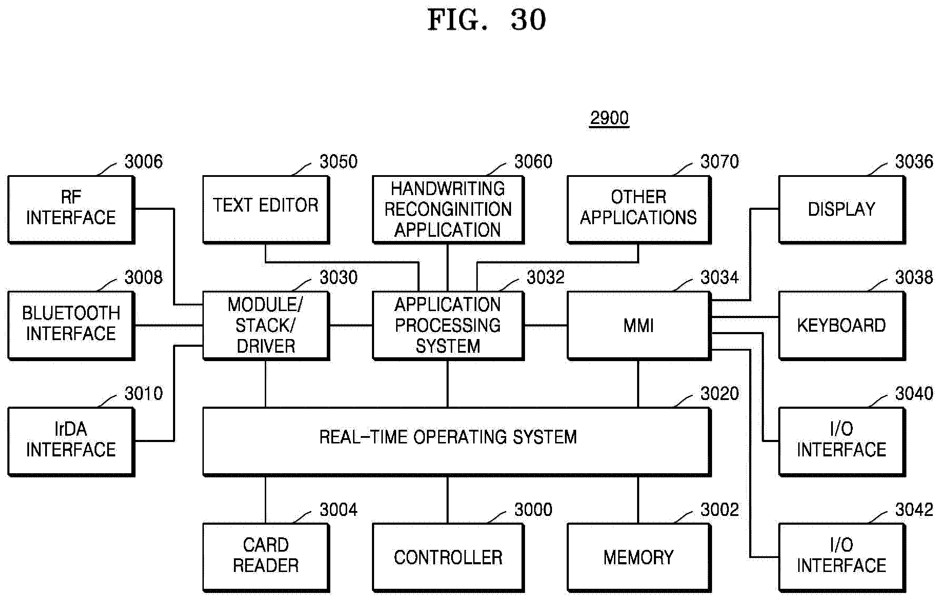

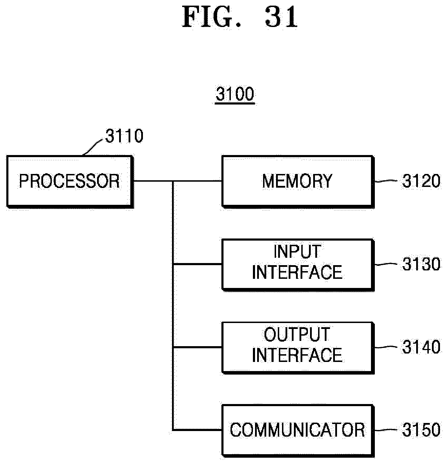

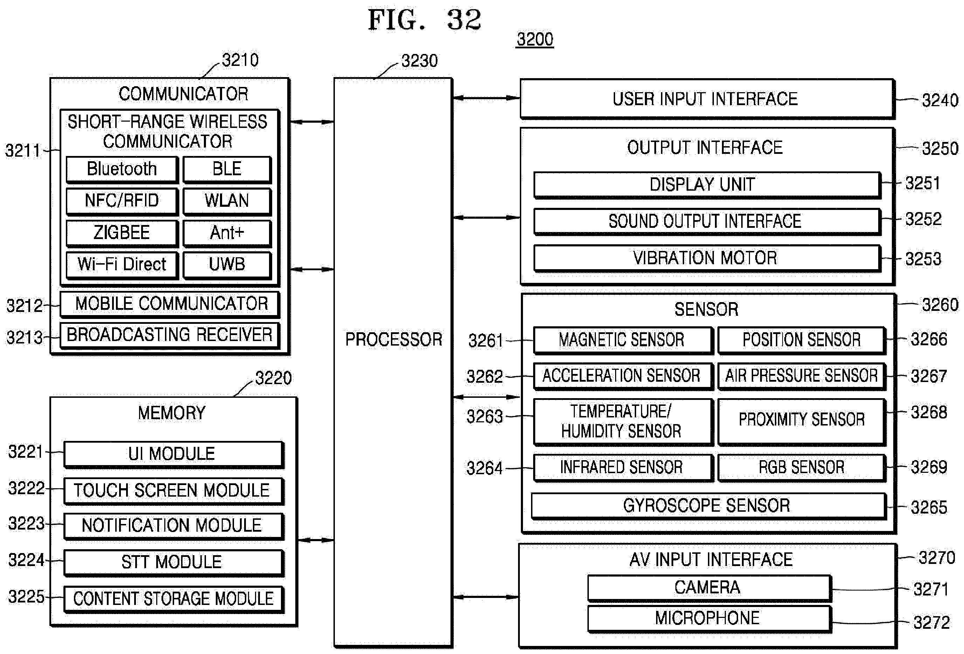

Similarly, the control XML specification provides special definitions to the labels. For example, <set/> denotes a root label of the whole XML file, <view/> denotes a view layer and is a parent label, and its child label is the style label. Hereinafter, some examples of the style label are shown.
- <grid />: Grid style
- <line />: Line style
- <frame />: Frame style
- <absolute />: Absolute style
- <relative />: Relative style
- <table />: Table style
- <list />: List style
- <single />: Single style
- <multiple />: Multiple style

The style label may contain content labels. Hereinafter, some content labels are shown.
- <animation />: Animation
- <http />: Network
- <text />: Text
- <event />: Event
- <sensor/>: Sensor
- <app />: Application
- <time />: Time
- <location />: Geographic location
- <media />: multimedia

One style label may contain a plurality of content labels and the content labels are parallel.

A third party developer may generate an XML animation configuration file and an XML control configuration file according to the predefined XML animation specification and the XML control specification, and may compile the image resource related to the configuration file to generate an APK application installation package for distribution. The user may download various animation resource packages and control resource packages for installation to the local electronic device, and may establish an association with the application of the electronic device.

FIG. 26 shows a system structure for associating a display resource with a corresponding application, according to an embodiment. In the system shown in FIG. 26, the display resource is a resource package. It is obvious to one of ordinary skill in the art that, when the display resource is from data of the application, an association between the display resource and the application may be similarly implemented.

As shown in FIG. 26, the system 2600 includes a resource package 2610 of the display resource, a resource package manager 2620, a data storage 2630, an analyzer 2640, a frame layer manager 2650, and a frame layer displayer 2660. The resource package 2610 is an application installation package, e.g., the aforementioned various animation resources and control resources acting as the display resource. The resource package may be downloaded and stored in the electronic device. The resource package manager 2620 performs uniform management on the resource packages downloaded by the user and installed in the local electronic device. The management may include viewing, deleting, downloading, analyzing, applying, etc. When the user selects to apply a different resource package, the data storage 2630 may record the resource package selected by the user, and may notify the frame layer manager 2650 to update the resource package selected by the user. The frame layer manager 2650 calls the analyzer 2640 to analyze the resource package selected by the user according to the notification. The frame layer manager 2650 transmits the data obtained by the analyzer 2640 to the frame layer displayer 2660. The frame layer displayer 2660 applies the analyzed display resource such as the animation view or the control layout, etc.

In some embodiments, the frame layer manager 2650 also manages the association between the display resource and the application, i.e., may configure a corresponding relationship between the display resource and the application, and an association manner associating them, and controls the frame layer displayer 2660 to perform a corresponding display according to the configured association manner such as a monitoring time, various events and messages.

FIG. 27 shows a system structure for managing an association between a display resource and an application, according an embodiment. In the system shown in FIG. 27, a control and view (such as a background view) of the application are managed respectively.

As shown in FIG. 27, a frame layer manager 2710 may further include a configuring module 2711, a control managing module 2712, and a view managing module 2713. A frame layer displayer 2720 may further include a control displaying module 2721 and a view displaying module 2722.

By calling the configuring module 2711 in the frame layer manager 2710, the user may associate a selected display resource (such as a resource package) with the application, and may also select an association manner, i.e., the manner in which the display resource is triggered to be displayed. Each application may provide its own resource package to be downloaded by the user. The user may allow the view and/or control of the associated application to be correctly displayed and to have interaction there between through selecting the resource package. After the configuration, the control managing module 2712 and the view managing module 2713 read the configuration data in the configuring module 2711, update the data, and then enter a monitoring state. When a configured triggering event occurs, the control managing module 2712 and the view managing module 2713 notify a corresponding displaying module. For example, after the notification, the displaying module 2721 displays a correct association application control of a main application. After the notification, the displaying module 2722 updates displayed content information by itself. When the user interacts with the control, the control obtains a new instruction through the interaction, e.g., the displaying module 2722 allows a background view to display the updated content so as to display a new message of the application associated with the control. Thus, the control transmits the new instruction to the view displaying module 2722. Afterward, the view displaying module 2722 update the content according to the instruction.

FIG. 28 shows a structure of a display system, according to an embodiment.

As shown in FIG. 28, a display system 2800 applicable to an electronic device may include an obtaining unit 2810 and an associating unit 2820. Optionally, the display system 2800 may further include an association removing unit 2830.

The obtaining unit 2810 may obtain various display resources. The obtaining unit 2810 may obtain the display resource in various manners. In an embodiment, the obtaining unit 2810 may receive data from an application via a data tunnel with an application in the electronic device. In another embodiment, the obtaining unit 2810 may obtain the display resource from a network via a network interface. In some embodiments, the display resource may be provided in the form of a resource package.

The associating unit 2820 may be used in associating the display resource with a first application of the electronic device. In addition, the associating unit 2820 may manage a display of an element of the first application, based on the display resource according to a pre-configured association manner. In some embodiments, when the display resource is in the form of a resource package, the associating unit 2820 may include an analyzer used in analyzing a resource package to be applied to a corresponding application.

In some embodiments, the associating unit 2820 may further associate the display resource with one or more elements of one or more first applications.

In some optional embodiments, the association removing unit 2830 may be used in removing the association between the display resource and the one or more elements of the one or more first applications.

It should be noted that, a unit or a module in the display system 2800 may correspond to the blocks shown in FIGS. 1A through 6. Therefore, the operations and features described above with reference to the method are also applicable to the system 2800 and the units therein, and thus are not repeatedly described herein. The display system 2800 may be pre-configured in the electronic device, or may be loaded in the electronic device via manners such as downloading. The units in the display system 2800 may cooperate with corresponding parts of the electronic device so as to obtain data of the application. The associating unit 2820 may cooperate with the screen of the electronic device so as to display the element of the application on the screen.

FIG. 29 illustrates an electronic device 2900 in which the method provided by the embodiments may be implemented.

The electronic device 2900 may include a speaker or earphone 2902, a microphone 2906, a touch screen 2903 and a set of buttons 2904 that are optional and may include a virtual button 2904a, soft keys 2904b and 2904c and a game bar 2905 or a navigator input device of other types.

FIG. 30 illustrates a configuration of the electronic device illustrated in FIG. 29.

With reference to FIG. 30, internal components, software and a protocol structure of the electronic device 2900 will now be described. The electronic device 2900 includes a controller 3000 that is responsible for general operations by the electronic device and may be implemented by using a commercially available central processing unit (CPU), a digital signal processor (DSP) or any other programmable logic device. The controller 3000 includes an association electronic memory 3002 such as a random-access memory (RAM), a read-only memory (ROM), an electrically erasable programmable read-only memory (EEPROM), a flash memory or any combination thereof. The memory 3002 is controlled by the controller 3000 for various purposes. One of them is to store program instructions and data of software in the electronic device. The software includes a driver used in a real-time operating system 3020, a Man-Machine Interface (MMI) 3034, an application processing system 3032, and various applications. The application may include a text editor 3050, a handwriting recognition (HWR) application 3060 and various other applications 3070 such as a voice calling application, a short message application, a multimedia message service or e-mail application, a web browsing application, an instant message receiving and transmitting application, a phonebook application, a calendar application, a control panel application, a camera application, one or more video game applications, a notebook application, etc. It should be noted that, two or more of the above applications may be implemented as one application.

The MMI 3034 may include one or more hardware controllers, which may further a first display 3036 or 2903, a small keyboard 3038 or 2904 and various other input/output (I/O) devices 3040 and 3042 (such as a microphone, a speaker, a vibrator, a ring generator, a light-emitting diode (LED) indicator, etc.) together with the MMI driver. It is well-known that the user may operate the electronic device via a man-machine interface formed in the above manner.

The software may further include various modules, protocol stacks, drivers, etc., which are commonly identified by 3030 and provide a communication service (such as transmission, network and connectivity) for a radio frequency (RF) interface 3006 and optionally for a Bluetooth interface 3008 and/or an Infrared Data Association (IrDA) interface 3010, thereby providing local connectivity. The RF interface 3006 includes an internal or external antenna and appropriate wireless circuits used in establishing and maintaining a wireless link with a base station. As known to one of ordinary skill in the art, the wireless circuits include a series of analog and digital electronic components which form a wireless receiver and a transmitter together. These components may include a band pass filter, an amplifier, a frequency mixer, a local oscillator, a low pass filter, an analog-to-digital (AD)/digital-to-analog (DA) convertor, etc.

The electronic device may further include a subscriber identification module (SIM) card 3004 and a relevant reader. It is known that the SIM card 3004 includes a processor and a local data memory.

FIG. 31 is a block diagram illustrating a configuration of an electronic device 3100, according to an embodiment. The electronic device 3100 includes a processor 3110 and a memory 3120 and may additionally include an input unit 3130, an output unit 3140, and a communicator 3150. The processor 3110 may include at least one of the memory 3120, the input unit 3130, the output unit 3140, and the communicator 3150, and in this case, the electronic device 3100 may consist of the processor 3110 and a housing of the processor 3110. Alternatively, as illustrated in FIG. 32, the electronic device may further include a sensing unit, an audio/video (AV) input unit, or the like.

Hereinafter, with reference to FIG. 32, the components will now be described.

A processor 3230 controls general operations of an electronic device 3200. For example, the processor 3230 may perform at least one of the displaying method, the method of managing presence of elements of an application, and the information processing method by generally controlling an output interface 3250, a user input interface 3240, a communicator 3210, a sensor 3260, and an AV input interface 3270 by executing programs stored in a memory 3220.

The processor 3230 performs calculation for the aforementioned operations by the electronic device 3200. For example, the processor 3230 may perform information processing to provide content by associating the content with an object of the application, based on association information. The processor 3230 may determine a target object of the application. The association information indicates an association between the content and the object of the application.

The processor 3230 may determine a current festival related to the target object. The processor 3230 may perform information processing to perform a service of the application, based on the target object and the current festival.

The processor 3230 may receive information via at least one application. The processor 3230 may receive information from a server or an external device by using the communicator 3210. The processor 3230 may display the received information by using the output unit 3250 according to one or more classifications including an application, a sender of information, and a performance status of the information.

The processor 3230 may select at least one piece of information from among a plurality of pieces of displayed information, based on a user input. The user input may be obtained by using the input interface 3240. The processor 3230 may perform information processing on the selected information by using an application corresponding to the selected information, according to an input by the user, the input indicating the information processing on the least one piece of information.

The communicator 3210 performs data communication with an external terminal. The communicator 3210 may receive data from the external terminal and may transmit data to the external terminal. The communicator 3210 may include a short-range wireless communicator 3211, a mobile communicator 3212, and a broadcasting receiver 3213.

The mobile communicator 3212 may include, but is not limited to, a Bluetooth communicator, a Bluetooth low energy (BLE) communicator, a near field communication (NFC) unit, a WLAN (Wi-Fi) communicator, a ZigBee communicator, an IrDA communicator, a Wi-Fi Direct (WFD) communicator, an UWB communicator, an Ant+ communicator, or the like.

The mobile communicator 3212 exchanges a wireless signal with at least one of a base station, an external terminal, and a server on a mobile communication network. In this regard, the wireless signal may include various types of data according to communication of a sound call signal, a video call signal, or a text/multimedia message.

The broadcasting receiver 3213 receives a broadcast signal and/or information related to a broadcast from the outside through a broadcast channel. The broadcast channel may include a satellite channel and a ground wave channel. In some embodiments, the electronic device 3200 may not include the broadcasting receiver 3213.

The memory 3220 may store content, application data, association information, temporary information, or the like. The association information indicates an association between the content and an object of an application. The memory 3220 may store at least one of data for the aforementioned operations of the application, data received from the external device, data for processing and controlling by the processor 3230, data used in operations of the electronic device 3200, and information referenced in the aforementioned descriptions.

For example, the memory 3220 may store programs for processing and controlling by the processor 3230, and may store a plurality of items of input or output data. For example, the memory 3220 may include an application and multimedia contents. The memory 3220 may include a storage medium of at least one type selected from a flash memory, a hard disk, a multimedia card type memory, a card type memory such as a secure digital (SD) or xD-Picture (xD) card memory, a RAM, a static random access memory (SRAM), a ROM, an EEPROM, a programmable read-only memory (PROM), a magnetic memory, a magnetic disc, and an optical disc. In addition, the electronic device 3200 may run web storage or a cloud server that performs a storage function of the memory 3220 on the Internet.

The programs stored in the memory 3220 may be classified to a plurality of modules according to functions, for example, the programs may be classified to a user interface (UI) module 3221, a touch screen module 3222, a notification module 3223, a Speak to Text (STT) module 3224, or the like.

The UI module 3221 may provide a specialized UI or graphical user interface (GUI) in connection with the electronic device 3200 for each application. The touch screen module 3222 may detect a user's touch gesture on the touch screen and transmit information related to the touch gesture to the processor 3230. The touch screen module 3222 according to an embodiment may recognize and analyze a touch code. The touch screen module 3222 may be configured as separate hardware including a controller.

Various sensors may be arranged in or near the touch screen so as to detect a touch or a proximate touch on the touch sensor. An example of the sensor to detect the touch on the touch screen may include a tactile sensor. The tactile sensor detects a contact of a specific object at least as sensitively as a person can detect. The tactile sensor may detect various types of information such as the roughness of a contact surface, the hardness of the contact object, the temperature of a contact point, or the like.

An example of the sensor to detect the touch on the touch screen may include a proximity sensor.

The proximity sensor detects the existence of an object that approaches a predetermined detection surface or that exists nearby, by using a force of an electro-magnetic field or an infrared ray, instead of a mechanical contact. Examples of the proximity sensor include a transmission-type photoelectric sensor, a direction reflection-type photoelectric sensor, a mirror reflection-type photoelectric sensor, a high frequency oscillation-type proximity sensor, a capacity-type proximity sensor, a magnetic proximity sensor, an infrared-type proximity sensor, or the like. The touch gesture of the user may include a tap gesture, a touch & hold gesture, a double tap gesture, a drag gesture, a panning gesture, a flick gesture, a drag & drop gesture, a swipe gesture, or the like.

The notification module 3223 may generate a signal for notifying an occurrence of an event in the electronic device 3200. Examples of the event that may occur in the electronic device 3200 include a call signal receiving event, a message receiving event, a key signal input, a schedule notification, or the like. The notification module 3223 may output a notification signal in the form of a video signal via a display unit 3251, a notification signal in the form of an audio signal via a sound output interface 3252, or a notification signal in the form of a vibration signal via a vibration motor 3253.

The STT module 3224 may convert a voice included in multimedia content to a text, thereby generating a transcript corresponding to the multimedia content. In this regard, the transcript may be mapped to reproduction time information of the multimedia content.

A content storage module 3225 includes at least one type of content from among various types of content. The content storage module 3225 may store multimedia content. The content storage module 3225 may store multimedia content to be reproduced in the electronic device 3200. The multimedia content may include text data, a still image and/or video data, audio data, or the like.

The user input interface 3240 may indicate a unit by which a user inputs data so as to control the electronic device 3200. For example, the user input interface 3240 may include, but is not limited to, a key pad, a dome switch, a touch pad (a touch capacitive type touch pad, a pressure resistive type touch pad, an infrared beam sensing type touch pad, a surface acoustic wave type touch pad, an integral strain gauge type touch pad, a piezo effect type touch pad, or the like), a jog wheel, a jog switch, etc.

The output interface 3250 is to output an audio signal, a video signal, or a vibration signal and may include the display unit 3251, the sound output interface 3252, the vibration motor 3253, or the like.

The display unit 3251 displays and outputs information processed in the electronic device 3200. When the display unit 3251 and a touch pad form a mutual layer structure and then are formed as a touch screen, the display unit 3251 may be used as both an output device and input device. The display unit 3251 may include at least one of liquid crystal display (LCD), a thin film transistor-liquid crystal display (TFT-LCD), an organic light-emitting diode (OLED) display, a flexible display, a three-dimensional (3D) display, and an electrophoretic display. According to a type of the electronic device 3200, the electronic device 3200 may include at least two display units 3251.

The sound output interface 3252 may output audio data that is received from the communicator 3210 or is stored in the memory 3220. The sound output interface 3252 may also output a sound signal (e.g., a call signal receiving sound, a message receiving sound, a notifying sound, or the like) related to capabilities performed by the electronic device 3200. The sound output unit 3252 may include a speaker, a buzzer, or the like.

The vibration motor 3253 may output a vibration signal. For example, the vibration motor 3253 may output the vibration signal that corresponds to an output of the audio data (e.g., the call signal receiving sound, the message receiving sound, or the like) or video data. When a touch is input to the touch screen, the vibration motor 3253 may output a vibration signal.

The sensor 3260 may sense a state of the electronic device 3200 or a status around the electronic device 3200 and may transfer sensed information to the processor 3230.

The sensor 3260 may include, but is not limited to, at least one of a magnetic sensor 3261, an acceleration sensor 3262, a temperature/humidity sensor 3263, an infrared sensor 3264, a gyroscope sensor 3265, a position sensor (e.g., a global positioning system (GPS)) 3266, an air pressure sensor 3267, a proximity sensor 3268, and an RGB sensor (i.e., a luminance sensor) 3269. Functions of the sensors may be intuitionally deduced by one of ordinary skill in the art by referring to names of the sensors, and thus, detailed descriptions thereof are omitted here.

The AV input interface 3270 may receive an input of an audio signal or a video signal and may include a camera 3271 and a microphone 3272. The camera 3271 may obtain an image frame such as a still image or a moving picture via an image sensor during a video call mode or an image-capturing mode. An image that is captured via the image sensor may be processed by the processor 3230 or a separate image processing unit (not shown).

The image frame that is processed by the camera 3271 may be stored in the memory 3220 or may be transmitted to an external device via the communicator 3210. According to a configuration of the electronic device 3200, two or more cameras 3271 may be arranged.

The microphone 3272 receives an input of an external sound signal and processes the received sound signal to electrical voice data. For example, the microphone 3272 may receive a sound signal from an external device or a speaker. In order to remove noise that occurs while the sound signal is externally input, the microphone 3272 may use various noise removing algorithms.

It should be noted that, the embodiments may be implemented as hardware, software, or combination of hardware and software. The hardware part may be implemented via specific logic. The software part may be stored in the memory and executed by an appropriate system such as a microprocessor or dedicated computer hardware. One of ordinary skill in the art may understand that the above device and method may be embodied through computer-executable instructions and/or codes, such as codes on a CD of a disk, or DVD-ROM media, a read-only memory (firmware), a programmable memory or an optical or electronic signal carrier. The device and modules provided by the present disclosure may be implemented by a semiconductor such as a hardware circuit of very large-scale integration, a gate array, a logic chip, a transistor, a field programmable gate array, a programmable logical device and other programmable devices, may be implemented by software executed by various processors, or may be implemented by combination of the hardware circuit and the software.

It should be noted that, even if the aforementioned descriptions provide several apparatuses or sub-apparatuses of the apparatuses, division is not compulsory. In fact, according to an embodiment, characteristics and functions of two or more apparatuses described above may be implemented in one apparatus. Alternatively, characteristics and functions of one apparatus may be divided into multiple apparatuses.

The descriptions are only preferred embodiments and are not used in limiting the protection scope thereof. Any changes and modifications can be made by one of ordinary skill in the art without departing from the spirit of the present disclosure and therefore should be construed as being included within the protection scope as set by the appended claims.

## Claims

1. A method, performed by an electronic device, of processing information, the method comprising:
determining a target object of an application;
determining service content, based on the target object and a user's current schedule; and
controlling an operation of the application with respect to the target object, according to the service content.

2. The method of claim 1, wherein the determining of the service content based on the target object and the user's current schedule comprises:
selecting, based on a time of the electronic device, user's at least one current schedule from among user's one or more schedules stored in the electronic device;
determining the user's at least one current schedule related to the target object from among the user's one or more schedules, according to information regarding relationships between the user's one or more schedules and the target object; and
determining content to be the service content, the content being related to the user's at least one current schedule related to the target object.

3. The method of claim 1, wherein the determining of the service content based on the target object and the user's current schedule comprises:
selecting the user's current schedule related to the target object according to information regarding a relationship between the target object and the user of the electronic device, the user's current schedule being from among the user's schedules determined based on a plurality of items of interactive content between the user of the electronic device and a communication peer side user of the electronic device; and
determining content to be the service content, the content being related to the at least one user's current schedule related to the target object.

4. The method of claim 1, wherein the service content is determined to be two or more different items of content with respect to a target object having different attributes, or is determined to be two or more different items of content with respect to different user's schedules.

5. The method of claim 1, wherein
when a plurality of user's schedules are present with respect to the target object, at least one service content is determined for each of the user's schedules, and
the controlling of the operation of the application with respect to the target object, according to the service content, comprises:
determining a user's-schedule context, based on a plurality of items of interactive content between a user of the electronic device and a communication peer side user of the electronic device; and
controlling the operation of the application with respect to the target object, based on service content of a user's current schedule from among the user's schedules, the user's current schedule corresponding to the user's-schedule context.

6. The method of claim 1, wherein, when a plurality of applications operates with respect to the target object, operations of the plurality of applications are controlled based on the service content.

7. The method of claim 1, wherein
the controlling of the operation of the application with respect to the target object, according to the service content, comprises:
displaying service content associated with a first application, the service content being determined according to the user's current schedule and a target object of the first application; and
when data regarding a second application is received, displaying a notification of the second application, and
the displaying of the notification of the second application comprises displaying service content determined according to the user's current schedule and a target object of the second application.

8. The method of claim 1, wherein the target object is a receiver of content generated by the application or is an object of another application to which the content generated by the application is to be applied.

9. The method of claim 1, wherein the controlling of the operation of the application comprises:
detecting, by the electronic device, an event related to the target object according to the user's current schedule;
determining whether or not an operation of the application with respect to the event has been performed; and
when the operation of the application with respect to the event has not been performed, displaying information regarding existence of the event.

10. A method, performed by an electronic device, of processing information, the method comprising:
receiving a plurality of pieces of information from one or more applications;
displaying the plurality of pieces of received information;
selecting, based on a user input, at least two pieces of information from among the plurality of pieces of displayed information; and
performing information processing on the two pieces of selected information by using at least one application corresponding to the two pieces of selected information, according to a single input by a user indicating the information processing with respect to the two pieces of selected information.

11. The method of claim 10, wherein the performing of the information processing on the two pieces of selected information comprises:
obtaining a plurality of pieces of sender information corresponding to the two pieces of selected information, respectively;
generating response content by using a response interface; and
transmitting the response content, based on the plurality of pieces of sender information,
wherein the response interface comprises a template button corresponding to preset content, and
wherein template content corresponding to the template button is comprised in the response content, according to a user selection input with respect to the template button.

12. The method of claim 11, wherein the template content is arranged in the response content, based on position information, and is generated based on the two pieces of selected information.

13. An electronic device comprising:
a memory configured to store data of applications; and
a processor configured to determine a target object of an application, to determine service content, based on the target object and a user's current schedule, and to control an operation of the application with respect to the target object, according to the service content.

14. An electronic device comprising:
a memory configured to store data of applications; and
a processor configured to
receive a plurality of pieces of information from one or more applications,
display the plurality of pieces of received information according to at least one classification from among the applications, senders of the plurality of pieces of information, and performance statuses of the plurality of pieces of information,
select, based on a user input, at least one piece of information from among the plurality of pieces of displayed information, and
perform information processing on the at least one piece of information by using an application corresponding to the at least one piece of information, according to a single input by a user which indicates the information processing with respect to the at least one piece of information.

15. A recording medium having recorded thereon a computer-readable program for executing the method of claim 1.
